# EUROPÄISCHE PATENTSCHRIFT

(11) **EP 1 737 292 B1**
(45) Veröffentlichungstag und Bekanntmachung des Hinweises auf die Patenterteilung: **19.11.2014**
(21) Anmeldenummer: 05728344.2
(22) Anmeldetag: 23.03.2005
(51) Int. Cl.: A01J 7/00, A01J 7/02, A01J 5/017, A01J 5/04, A01J 5/007

(54) **HALTEVORRICHTUNG FÜR MELKBECHER UND AKTUATORVORRICHTUNG ZUM ERZEUGEN EINER BEWEGUNG EINES MELKGESCHIRRS**
RETAINING DEVICE FOR TEAT CUPS AND ACTUATOR FOR INCITING A MOVEMENT OF A TEAT CUP CLUSTER
DISPOSITIF DE MAINTIEN POUR GOBELETS TRAYEURS ET DISPOSITIF ACTIONNEUR DESTINE A ENGENDRER UN MOUVEMENT D'UN APPAREIL DE TRAITE

(30) Priorität: 23.03.2004 DE 102004014210; 12.07.2004 DE 102004033637
(43) Veröffentlichungstag der Anmeldung: 03.01.2007
(73) Patentinhaber: Maier Jun, Jakob, 86842 Türkheim (DE); Hatzack, Wilfried, 86842 Türkheim (DE)
(72) Erfinder: Maier Jun, Jakob, 86842 Türkheim (DE); Hatzack, Wilfried, 86842 Türkheim (DE)
(74) Vertreter: Grünecker, Kinkeldey, Stockmair & Schwanhäusser
(86) Internationale Anmeldenummer: PCT/EP2005/003128
(87) Internationale Veröffentlichungsnummer: WO 2005/094566

(56) Entgegenhaltungen:
- EP-A- 0 774 203
- EP-A- 1 208 742
- EP-A- 1 447 002
- WO-A-02/15676
- DE-A1- 3 931 769
- DE-A1- 4 339 131
- DE-B- 1 278 166
- DE-C- 914 916
- US-A- 2 853 051
- US-A- 3 938 470
- US-A- 4 273 070
- US-B1- 6 269 766
- US-B1- 6 401 654

## Beschreibung

Die vorliegende Erfindung betrifft in einem Aspekt im Allgemeinen das automatische Melken von Nutztieren, wobei beim Melkvorgang zumindest teilweise ein manuelles Eingreifen erforderlich ist. Insbesondere betrifft die vorliegende Erfindung eine Haltevorrichtung für Melkbecher, die in Melkgeschirren und Melkständen, in denen ein manuelles Anlegen der Melkbecher an die Zitzen eines Tieres notwendig ist, anwendbar ist.

Die vorliegende Erfindung betrifft in einem weiteren Aspekt im Allgemeinen Vorrichtungen zum Durchführen einer Stimulation vor und während des Melkvorganges und zum Positionieren eines Melkgeschirrs in Melkanlagen, die ein automatisches Melken ermöglichen, wobei ein mit einer Vakuumanlage in Verbindung stehendes Melkgeschirr manuell oder automatisch an die Zitzen eines Tieres angelegt wird.

Eine Haltevorrichtung für Melkbecher gemäß dem Oberbegriff des Anspruchs 1 ist aus der US-B-6401654 bekannt. Bei der Haltung von Nutztieren für die Milchwirtschaft, beispielsweise von Kühen, ist bei der momentanen und mittelfristigen politischen und wirtschaftlichen Sachlage davon auszugehen, dass die landwirtschaftlichen Betriebe erst ab einer gewissen Mindestanzahl an Nutztieren rentabel wirtschaften können, wenn man von gewissen Nischenanwendungen in Form von Nebenerwerbslandwirten absieht. Da die Wirtschaftlichkeit eines landwirtschaftlichen Betriebes für die Milchwirtschaft nicht nur von der absoluten Anzahl der Nutztiere, sondern eben auch im besonderen Maße von den individuellen Erträgen jedes einzelnen Tieres abhängt, muss trotz der großen Anzahl der Tiere mit möglichst geringem Personaleinsatz eine hohe Milchleistung pro Tier erzielt werden. Neben einer geeigneten Haltung und Fütterung der Tiere spielt auch der Melkvorgang eine große Rolle für die erreichte Milchleistung pro Tier, wobei der Automatisierungsgrad des Melkvorganges wesentlich den Personalaufwand bestimmt. Im Sinne der Wirtschaftlichkeit ist es günstig, den Melkvorgang bei vertretbarem maschinellen Aufwand möglichst weitgehend zu automatisieren, wobei ein gefordertes hohes Maß an Hygiene eingehalten werden muss. Ein rein manueller Melkvorgang ist selbst in den meisten kleineren bis mittleren Betrieben schon nicht mehr machbar, da insbesondere eine hohe fachliche Kompetenz und ein hoher Zeitaufwand für den Melkprozess erforderlich sind. Die langjährigen Erfahrungen und Forschungen deuten darauf hin, dass eine hohe Milchleistung pro Tier im Wesentlichen dann erhalten wird, wenn der Melkvorgang dem natürlichen Saugvorgang des Kalbes möglichst naturgetreu nachgebildet wird. Dazu wurden in den letzten 80 bis 100 Jahren Vorrichtungen entwickelt, die ein mehr oder weniger automatisiertes Melken ermöglichen, wobei jedoch der Grad der "Natumähe" des Melkvorganges sehr stark von den verwendeten Materialien, den verwendeten Geräten und der Betriebsweise der Anlagen abhängt. Gegenwärtig wird eine Melkweise bevorzugt, in der vor und während des Melkens zum Teil unterschiedliche Stimulationsreize auf das Tier ausgeübt werden und wobei häufig zwei Euterviertel im Gegentakt impulsartig abwechselnd mit Vakuum und einer Massagebewegung beaufschlagt werden. Dabei wird während der Saugphase, in der das ständig unter der Zitze anstehende Vakuum mit dem in einer Milchleitung vorherrschenden Vakuum in Verbindung ist, Milch aus der Zitze gesaugt, während in der darauffolgenden Entlastungsphase, in der der Zitzengummi kollabiert und die Zitze massiert, eine Massage des Zitzengewebes stattfindet. Die Art der Stimulation, die Beschaffenheit des Zitzengummis, die Größe des Melkvakuums, die Frequenz der Saug- und der Entlastungsphase sind wichtige Punkte, die zum einen die Zeitdauer des Melkvorganges und zum anderen die Eutergesundheit des Tieres bestimmen.

Gegenwärtig sind auf dem Markt auch vollautomatisierte Melkanlagen, sogenannte Melkroboter, verfügbar, in denen der Melkvorgang vollständig automatisiert durchgeführt wird, ohne dass ein manuelles Eingreifen erforderlich ist. In diesen Anlagen können die Tiere eine entsprechende Zelle betreten, werden dort elektronisch identifiziert und werden dann nach erfolgreicher Identifizierung und bei entsprechender Berechtigung für einen Melkvorgang vorbereitet. Dabei werden Reinigungseinrichtungen über das Euter gestülpt und nachfolgend werden motorisch angetriebene Melkbecher unter der Steuerung einer zentralen Rechenanlage an den Zitzen angebracht und der Stimulations- und Melkvorgang begonnen. Diese Art der Nutztierhaltung erfordert allerdings einen extrem hohen Aufwand hinsichtlich der Anschaffungs- und Unterhaltskosten für den Melkroboter, insbesondere wenn strenge hygienische Anforderungen zu erfüllen sind, so dass diese Einrichtungen in der Praxis problematisch sein können, insbesondere da neuere Forschungen darauf hin deuten, dass selbst für landwirtschaftliche Großbetriebe eine wirtschaftlich rentablere Nutzung von Melkrobotern im Vergleich zu Großbetrieben mit Melkständen nicht gegeben ist.

Für die Mehrheit der landwirtschaftlichen Betriebe findet der Melkvorgang in einer halbautomatisierten Weise statt, wobei, je nach Größe des Betriebes, geeignet ausgestattete Melkstände vorgesehen sind, die von den Tieren aufgesucht werden, oder die Melkanlage entsprechend ausgebildet ist, um die Tiere an den entsprechenden Standplätzen zu melken.

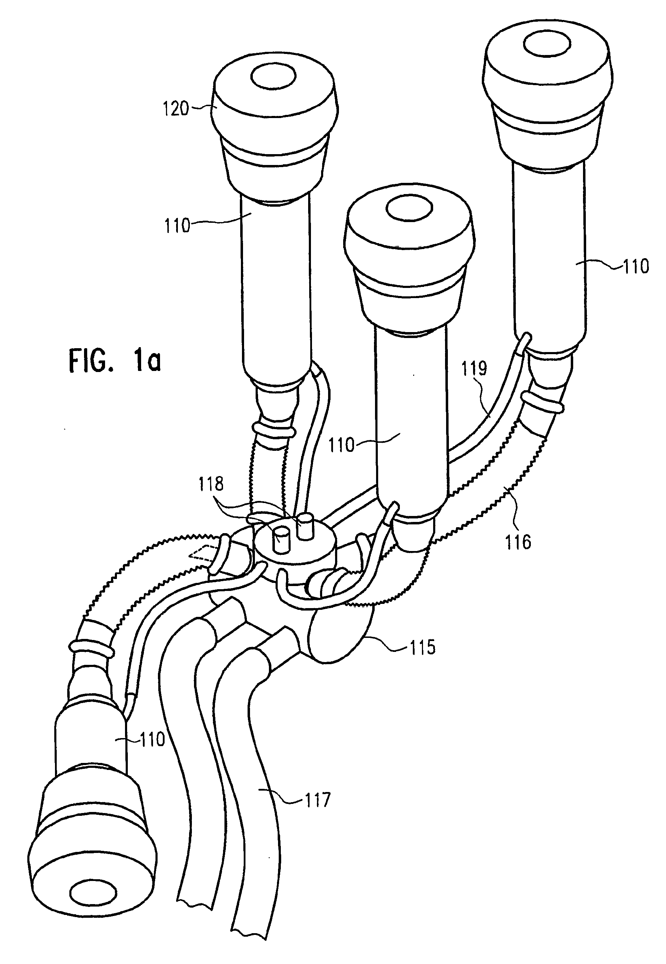

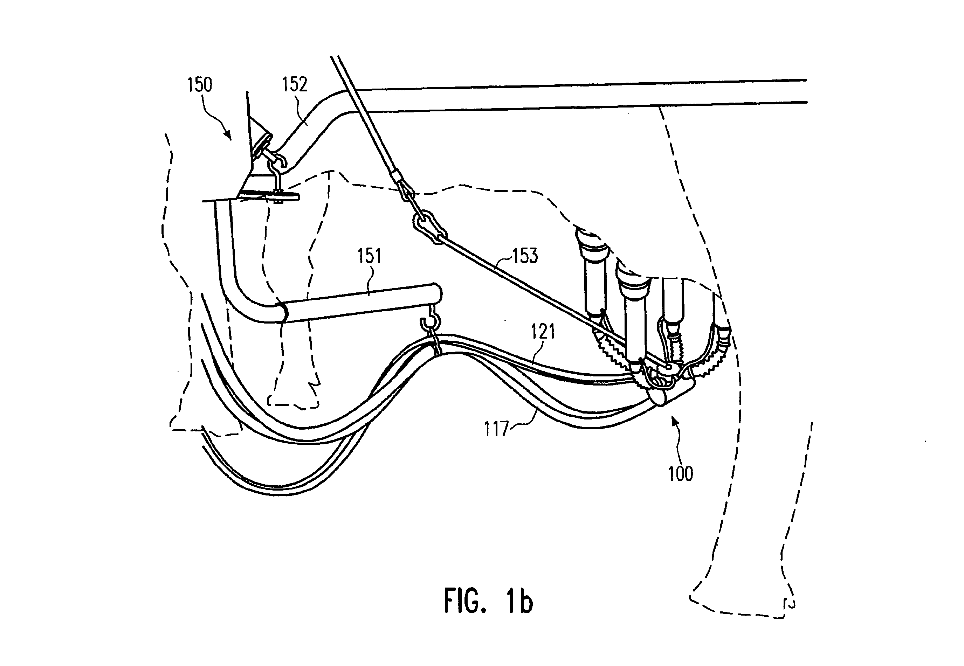

Mit Bezug zu den Fig. 1 a und 1 b wird nunmehr ein typischer Melkstand und die beim Melkprozess typischerweise auftretenden Schwierigkeiten detaillierter beschrieben.

Fig. 1 a zeigt in einer schematischen perspektivischen Ansicht ein Melkgeschirr 100, das mehrere Melkbecher 110 aufweist, die wiederum mit entsprechenden Zitzengummis 120 versehen sind. Die Melkbecher 110 sind typischerweise Metallbehälter in die die Zitzengummis 120 teilweise eingeführt sind, so dass ein Hohlraum zwischen der Außenwand des Zitzengummis 120 und der Innenwand des Melkbechers 110 entsteht. Typischerweise wird ein derartiger Aufbau als ein Zweiraumbecher bezeichnet, da der Hohlraum einen ersten Raumbereich bildet und das Innere des Zitzengummis 120 einen weiteren Raumbereich definiert. Des weiteren umfasst das Melkgeschirr 100 ein Milchsammelstück 115, das in der Regel zwei Kammern aufweist, die jeweils mit zwei Melkbechern 110 mittels entsprechender flexibler Milchschläuche 116 in Verbindung stehen. Das Milchsammelstück 115 ist typischerweise durch einen oder zwei weitere flexible Milchschläuche 117 mit einem entsprechenden Milchaufnahmebehälter verbunden. Ferner weist das Milchsammelstück 115 zwei Steueranschlüsse 118 auf, die ihrerseits wiederum mittels entsprechender Steuerschläuche 119 mit dem Hohlraum der Melkbecher 110 verbunden sind.

Fig. 1b zeigt schematisch einen Teil eines Melkstandes 150 mit einem Rahmen 152, an dem ein justierbarer Träger 151 angebracht ist. Die Milchschläuche 117 und Steuerleitungen 121, die mit den Steueranschlüssen 118 des Milchsammelstücks 115 verbunden sind, sind an dem Träger 151 so fixiert, dass ein Ableiten der ermolkenen Milch aus dem Milchsammelstück 115 sowie ein zuverlässiges Bereitstellen des Melkvakuums über die Milchleitungen 117 und eine korrekte Stellung des Milchsammelstücks 115 während des Melkvorgangs gewährleistet ist. Die Stellung des Melkgeschirrs 100, d. h. die Position der Melkbecher 110 sowie die Lage des Milchsammelstücks 115 ist im Wesentlichen durch das relativ hohe Gewicht des Melkgeschirrs 100, d. h. zirka 3 bis 5 kg, bestimmt, sofern die Schläuche 117 und 121 keine zu großen Zugkräfte auf das Melkgeschirr ausüben. Ferner ist eine Seilzugvorrichtung 153 vorgesehen, um das Melkgeschirr 100 nach dem Melkvorgang abzuziehen.

Zu Beginn eines Melkvorganges wird das Tier in den Melkstand 150 geführt oder dieses sucht den Melkstand 150 aus eigenem Antrieb auf. Sobald das Tier eine entsprechende Position eingenommen hat, kann ggf. der Träger 151 entsprechend justiert werden und das Melkgeschirr 100 ist an den Zitzen des Tieres anzubringen. Hierbei ist es allerdings erforderlich, dass das Melkgeschirr 100, das sich zunächst in einer Lage befindet, wie dies durch den Melkbecher 110a in Fig. 1 a gezeigt ist, durch den Melker unter das Euter des Tieres gehalten wird. Dabei ist eine im Wesentlichen senkrechtes Herabhängen der Melkbecher 110 wesentlich, da durch das Abknicken der Milchschläuche 116 das ständig in der Milchleitung 117 über das Sammelstück 115 anstehende Melkvakuum im Wesentlichen bewahrt bleibt, da eben der Knickbereich des Milchschlauchs 116 als eine Dichtung fungiert. D. h. also, bei Beginn des Melkvorganges muss das relativ schwere Melkgeschirr 100 von dem Melker in einer korrekten Stellung unter die Zitze geführt und dort mit einer Hand gehalten werden, bis der Reihe nach alle Melkbecher an die Zitzen angelegt sind. Dies erfordert einen relativ hohen Kraftaufwand, der insbesondere bei einem größeren Tierbestand zumindest zu einer starken körperlichen Beanspruchung und/oder auf lange Sicht zu einer gesundheitlichen Beeinträchtigung führen kann. Des weiteren besteht die Gefahr, dass die nach unten hängenden Melkbecher 110 mit den herausgeführten Kopfbereichen der Zitzengummis 120 während des Anlegens des Melkgeschirrs 100 beispielsweise den Boden des Melkstandes berühren und damit zu einer Verschmutzung der Zitzengummis 120 bereits vor dem Beginn des Melkvorgangs führen. Dadurch kann die Wirkung einer möglicherweise zuvor manuell durchgeführten Reinigung der Zitzen deutlich beeinträchtigt werden, so dass durch das Einschleppen von Schmutz und Erregern durch die verschmutzen Zitzengummis 120 nicht nur die Qualität der Milch beeinträchtigt werden kann, sondern ggf. auch die Eutergesundheit des Tieres betroffen sein kann.

Anschließend werden die einzelnen Melkbecher 110 der Reihe nach an die einzelnen Zitzen angelegt, wobei, wie zuvor dargestellt ist, das Melkgeschirr 100 mit einer Hand in der korrekten Position zu halten ist, während die andere Hand den Melkbecher 100 an der Zitze befestigt. Nach Befestigung des Melkgeschirrs 100 und ggf. nach Justierung des Seilzuges 153 und/oder des Trägers 151 kann sodann der eigentliche Melkvorgang, beispielsweise mit einer entsprechenden Stimulationsphase begonnen werden. Dabei werden in der Regel über die Steuerleitungen 121 oder über weitere druckluftbetriebene Steuereinrichtungen (nicht gezeigt) entsprechende mechanische Reize über die Zitzenbecher 110 an die Zitze des Tieres übertragen. Durch die üblicherweise angewandte gegenphasige Ansteuerung jeweils zweier Melkbecher ergibt sich während des Melkvorganges ein Schwingen des Melkgeschirrs 100, das weiterhin zu einer Lockerung der Eutermuskulatur und damit zu einem verbesserten Milchfluss beiträgt.

Der genaue Ablauf des Melkvorganges hängt von der gewählten Strategie ab und beinhaltet typischerweise eine Stimulationsphase, eine Phase, in der die Milch jedes Viertels zunächst durch Sicht geprüft wird, den eigentlichen Melkvorgang, der auch weiterhin von einer Stimulationsaktivität begleitet sein kann und eine entsprechende Phase des Nachmelkens. Nach Beendigung des Melkvorganges, d. h. zu dem Zeitpunkt, in dem der Milchfluss aus dem Euter des Tieres auf einen bestimmten minimalen Wert abgenommen hat, muss das Melkgeschirr 100 wieder von dem Euter entfernt werden, wobei wiederum ein kräfteraubender Vorgang erforderlich ist. Insbesondere muss wiederum das Melkgeschirr 100 in korrekter Position gehalten werden, wenn die einzelnen Melkbecher 110 von den Zitzen abgenommen werden, da ein möglichst geringer Lufteintritt in die Milchleitungen 117 stattfinden soll. Ferner besteht auch in dieser Phase des Melkvorganges die Gefahr, dass die Melkbecher 110 den Boden berühren, indem beispielsweise das Melkgeschirr 100 kurzzeitig zu tief gehalten wird, so dass die Gefahr einer weiteren Verschmutzung sowie die Beschädigung einzelner Teile des Melkgeschirrs 100 auftreten können. Insbesondere bei Betrieben mit relativ vielen Tieren und bei entsprechend wenig verfahrenem Personal kann daher auch die Reinigung des Melkgeschirrs 100 vor dem Anbringen an einem nächsten Tier unter Umständen nicht mit der nötigen Sorgfalt durchgeführt werden, so dass die Gefahr der Milchverschmutzung sowie der Übertragung von Krankheitserregern auf das Tiereuter relativ ausgeprägt ist.

Da die Einführung vollautomatisierter Melkanlagen für die meisten Agrarbetriebe aus Kostengründen und aufgrund der möglicherweise geringeren Effizienz keine gangbare Lösung ist, besteht eine Aufgabe der vorliegenden Erfindung darin, den teilautomatisierten Melkvorgang effizienter zu gestalten, so dass der Kraftaufwand und/oder gesundheitliche Beeinträchtigungen reduziert und die Hygienebedingungen verbessert werden.

Für milchproduzierende Agrarbetriebe ist es von großer Bedeutung, qualitativ hochwertige Milch in großer Menge bei möglichst geringen Produktionskosten zu erzeugen. Diese Entwicklung wird sich durch die EU-Erweiterung noch verschärfen und Landwirte dazu zwingen, in noch ökonomischerer Weise die Milch zu produzieren. Neben den Kosten für eine artgerechte Unterbringung sowie Fütterung der Tiere sind es im Wesentlichen die Personalkosten, die es bei der Milcherzeugung zu senken gilt. Aus diesem Grunde müssen immer mehr Tiere von einer stetig abnehmenden Menge an Fachpersonal versorgt werden, wobei insbesondere das Melken der Tiere zunehmend automatisiert wird, um diesen zeitaufwendigen Prozess in effizienter Weise durchführen zu können. Im Wesentlichen gibt es zur Zeit zwei Systeme, die bei der Erzeugung von Milch beim Melken in mittleren und größeren Betrieben zum Einsatz kommen. Zum einen werden Tiere in vollautomatisierter Weise durch sogenannte Melkroboter gemolken, wobei die Tiere im Wesentlichen entsprechende Melkkabinen aufsuchen und sodann vollständig maschinell gemolken werden, wobei das Säubern des Euters, das Anlegen der Melkbecher, das Starten und Überwachen des Melkvorganges und das Abnehmen der Melkbecher in vollautomatisierter Weise stattfindet. Zum anderen werden sogenannte Melkstände eingesetzt, wobei die Reinigung des Euters, möglicherweise eine gewisse Vorstimulation und das Anlegen des Melkgeschirrs sowie das Abnehmen manuell oder maschinell erfolgt. Der Melkvorgang selbst läuft typischerweise automatisch ab, wobei das Ende des Melkvorganges dann wieder vom Personal oder von einem Sensor erkannt wird, was ggf. unter Zuhilfenahme diverser Messsignale stattfinden kann, die während des Melkvorganges erzeugt werden können. Obwohl im Prinzip eine vollautomatische Milchgewinnung in wirtschaftlicher Hinsicht wünschenswert erscheint, so ergeben sich dennoch gewisse Einschränkungen aus dem vollautomatischen Melkvorgang mittels eines Melkroboters, da die Anschaffungskosten sowie die Unterhaltskosten relativ hoch sind. Ferner scheint sich durch neuere Forschungen anzudeuten, dass langfristig ein geringerer Milchertrag mit gängigen Melkrobotern erzielt wird im Vergleich zu Betrieben, die den Melkvorgang unter Zuhilfenahme von Melkständen praktizieren. Aber auch bei landwirtschaftlichen Betrieben mit Melkständen ergeben sich deutliche Unterschiede im langfristigen Milchertrag, was zum Teil auf die verwendeten Geräte und Materialien der Melkstände und die angewendete Melktechnik zurückzuführen ist.

Für das Erzielen eines hohen Milchertrags ist es entscheidend, die Gesundheit, insbesondere die Eutergesundheit, und die Melkbereitschaft der Tiere auf einem hohen Niveau zu halten. Dies wird insbesondere dadurch erreicht, dass der Melkvorgang möglichst naturgetreu abläuft, d. h. dem Saugen des Kalbes möglichst ähnlich nachgebildet ist. So ist beispielsweise vor dem eigentlichen Abmelken der Milch ein Stimulationsvorgang auszuführen, der dazu dient, dass die Kuh in eine Melkbereitschaft versetzt wird. Während der Stimulationsphase vor dem Melkvorgang wird das zum Freisetzen der Milch aus den Alveolen in die entsprechenden Zisternen der Euterviertel erforderliche Hormon Oxytozin ausgeschüttet. Da dieses Hormon etwa eine Minute benötigt, bis es am Euter wirksam wird, ist zumindest eine einminütige Stimulation erforderlich, um einen effizienten Melkvorgang einzuleiten. Selbstverständlich sind vor und während des Melkvorgangs Bedingungen zu schaffen, die eine angenehme Atmosphäre für das Tier garantieren, so dass eine Verkrampfung der glatten Eutermuskulatur vor und während des Melkvorganges zuverlässig verhindert wird. Bei einer steigenden Zahl an Tieren, die von einer einzelnen Person beim Melkvorgang zu versorgen ist, wird jedoch häufig die manuelle Euterreinigung und der Stimulationsvorgang nur unzureichend oder zu kurz ausgeführt, so dass der Melkvorgang bereits beginnt, bevor das Oxytozin in ausreichender Weise wirksam ist. Um die Zeitdauer der manuellen Stimulation zu verkürzen oder gänzlich weggelassen zu können, wird daher häufig eine automatische Stimulation bei angelegtem Melkgeschirr durchgeführt, wobei die Pulsationsfrequenz, d. h. die Häufigkeit, mit der der Zitzengummi eingefaltet und entspannt wird, so angehoben, dass kein Abmelken der Milch erfolgt und eine gewisse Massagewirkung für die Zitzen erreicht wird. Diese relativ hohe Pulsationsfrequenz wird dann für eine gewisse Zeitdauer aufrecht erhalten und wird dann beispielsweise kontinuierlich abgesenkt, bis die eigentliche Pulsationsfrequenz für den Melkvorgang mit der entsprechenden Zeitdauer für die Saug- und die Entlastungsphase erreicht wird, so dass in dieser Übergangsphase kontinuierlich eine ansteigende Menge an Milch ermolken wird.

Obwohl relativ hohe Erträge mit dieser Melktechnik erzielt werden können, so zeigt sich, dass langfristig der Ertrag der gesamten Herde dennoch unter den erwarteten Werten bleiben kann. Gründe dafür können beispielsweise eine nicht optimale Eutergesundheit und/oder ein nicht ausreichendes Ausmelken der Tiere sein, was langfristig zu Einbußen im Milchertrag führen kann. Für ein hohes Maß an Eutergesundheit ist es entscheidend, dass das Eindringen von krankheitserregenden Keimen in die Zitze und sodann in das Innere der Euterviertel wirksam reduziert oder verhindert wird. Bei einem natürlichen Ablauf des Saugvorgangs besitzt das Tier gewisse natürliche Schutzmechanismen, die ein Eindringen von krankheitserregenden Keimen erschweren oder verhindern. Zum einen wird die Zitze beim Trinkpausen durch den Schließmuskel wirksam verschlossen, so dass das Eindringen von Keimen verringert wird. Ferner ist das Innere des Strichkanals durch eine Absonderung der Schleimhaut, das sogenannte Laktosebum, ausgekleidet, welches so gestaltet ist, dass ein Einnisten und ein Weitertransport in Richtung zum Euterinneren reduziert wird. Dieser Säureverschluss, der durch das Laktosebum erreicht wird, dient als eine zweite Barriere, die bei einem nicht oder nicht vollständig schließenden Schließmuskel wirksam wird, um einen weiteren Schutz vor Kontaminierung des Euters bereitzustellen.

Durch den halb-maschinellen und insbesondere den vollautomatischen Melkprozess kann es jedoch zu einer Schädigung dieser Barrieren kommen. Beispielsweise wird häufig eine Verhärtung der Zitzen und damit ein unvollständiges Verschließen des Strichkanals beobachtet.

Ferner kann bei der zuvor beschriebenen automatischen Stimulation durch eine erhöhte Pulsationsfrequenz beispielsweise bei einer zu langen Stimulationsphase zu einer erhöhten Anzahl von Leukozyten kommen, was auf ein erhöhte Zellzahl aufgrund einer Schleimhautirritation hindeutet. Es wird angenommen, dass durch die automatische Stimulation mit erhöhter Pulsationsfrequenz gewissermaßen eine "Behämmerung" der Zitze und damit des Strichkanals und des die Innenseite der Zitze auskleidenden Schleimhäute stattfindet, so dass auf Grund einer gewissen Schädigung der Schleimhäute die Produktion des Laktosebums beeinträchtigt wird und ein vermehrtes Eindringen von krankheitserregenden Keimen stattfinden kann. Da jedoch eine gewisse Mindestzeitdauer der Stimulation zur Ausschüttung des Oxytozins und zu dessen Wirksamkeit am Euter erforderlich ist, sollte die Stimulationsphase zumindest für diese Zeitdauer durchgeführt werden und sollte dann zügig in einen effizienten Melkvorgang übergehen. Daher könnte zwar eine Verkürzung der durch die Pulsationsfrequenz hervorgerufenen Stimulation ggf. die Schädigung der inneren Schleimhäute verringern oder vermeiden, würde aber gleichzeitig zu einem weniger effizienten Melkvorgang führen, wodurch insbesondere der langfristige Milchertrag verringert wird.

Weiterhin ist eine Stimulation während des Melkvorgangs vorteilhaft, um damit eine ständige Lockerung der glatten Eutermuskulatur sicherzustellen, so dass die Milch von den milchproduzierenden Zellen ständig in die Euterviertel abtransportiert werden kann, so dass ein hoher Ausmelkgrad erreicht werden kann, der für eine langfristige Eutergesundheit und eine hohe Milchproduktion wichtig ist. Bei konventionellen Melkgeschirren wird die Lockerung der glatten Eutermuskulatur dadurch zu erreichen versucht, dass die Saug- und Entlastungsphasen jeweils gegenphasig für je zwei Euterviertel durchgeführt werden, so dass eine gewisse Schwingung des Melkgeschirrs hervorgerufen wird. Dabei hängt die stimulierende Wirkung u. a. von dem verwendeten Melkgeschirr ab, da beispielsweise die Beschaffenheit der kurzen Milchschläuche in Zusammenwirken mit der Größe und Masse des Milchsammelstücks die Art der durch die gegenphasige Taktung hervorgerufenen Schwingung des Melkgeschirrs beeinflussen. Somit ist eine Stimulation während des eigentlichen Melkvorgangs im Wesentlichen durch die Frequenz des Pulsators im Zusammenwirken mit dem Melkgeschirr bestimmt, wodurch unter Umständen keine optimale Stimulation erreicht wird, insbesondere da beim natürlichen Saugvorgang die Stimulation der Zitze bzw. des Euters u. a. auch durch stoßartige Bewegungen des Kalbes hervorgerufen werden.

Ein weiteres Problem beim Melken mit konventionellen Melkgeschirren besteht darin, dass häufig, durch Zucht bedingt, die Euterviertel des Tieres unterschiedlich ausgeprägt sind, so dass beispielsweise die hinteren Euterviertel typischerweise größer ausgebildet sind als die vorderen Euterviertel. Da bei einem konventionellen Melkgeschirr in der Regel keine separate Ansteuerung des Melkvakuums für die einzelnen Melkbecher erfolgt, kann es zu einen unterschiedlich langen "Blindmelken" bei den diversen Eutervierteln kommen. Ein übermäßiges Blindmelken führt jedoch zu einer erhöhten Zellzahl in der Mich sowie zu einer möglichen Schädigung des betreffenden Euterviertels sowie zu einer Verkrampfung der Eutermuskulatur. Um der Problematik unterschiedlich ausgeprägter Euterviertel Rechnung zu tragen, wird häufig eine Zugeinrichtung in Verbindung mit dem Melkgeschirr so vorgesehen, dass eine entsprechende Schrägstellung des Melkgeschirrs, während des Melkens oder nach einer gewissen Melkdauer eingestellt werden kann. Dazu wird an einem entsprechenden Gestänge, beispielsweise ein Seilzug, stärker gespannt, um somit dem Melkgeschirr eine nach vorn gerichtete Neigung zu verleihen, um damit einen größeren mechanischen Stimulationsreiz durch die Melkgeschirrbewegung auf die hinteren Zitzen und damit Euterviertel im Vergleich zu den vorderen Eutervierteln auszuüben. Dies erfordert jedoch ein entsprechendes manuelles Eingreifen, das beim Melken großer Bestände zu einem erhöhten Zeitaufwand führen kann.

Ein weiteres Problem bei der Milcherzeugung in relativ großen Tierbeständen besteht in einer immer häufiger beobachteten Milchblockade bei sensiblen Tieren und insbesondere bei Jungtieren, da diese vermutlich wesentlich stressempfindlicher sind als ältere Tiere. Um jedoch die Milchleistung dieser Jungtiere auf die durch die Konstitution des Tieres vorgegebenen Möglichkeiten zu steigern, ist in der Regel bei konventioneller Melktechnik mittels Melkständen und Melkgeschirren ein entsprechender Zeit- und Arbeitsaufwand erforderlich, was sich wiederum negativ auf die Wirtschaftlichkeit des Gesamtbetriebs auswirkt.

Angesichts der beim halbmaschinellen Melken mittels Melkstand und Melkgeschirr auf-tretenden Probleme ist es eine weitere Aufgabe der vorliegenden Erfindung, eine Bewegung des Melkgeschirrs am Euter in effizienterer Weise zu ermöglichen, um damit den Melkvorgang naturgetreuer zu gestalten.

Gemäß einem ersten Aspekt wird diese Aufgabe gelöst durch eine Haltevorrichtung für die individuelle Entnahme von Melkbechern mit den Merkmalen gemäß Anspruch 1. Diese Vorrichtung weist eine Befestigungsvorrichtung auf, um die Haltevorrichtung an einer vorgesehenen Melkposition zu fixieren. Ferner ist die Haltevorrichtung so ausgebildet, jeden Melkbecher in einer ersten Betriebsphase in jeweils einer relativ zueinander fixierten Stellung zu halten und manuellen Zugriff zu ermöglichen und während einer zweiten Betriebsphase eine Bewegung jedes Melkbechers relativ zu der Haltevorrichtung und relativ zu mindestens einem weiteren Melkbecher in mehreren Richtungen zu ermöglichen.

Die erfindungsgemäße Haltevorrichtung für Melkbecher ermöglicht also eine Fixierung der Melkbecher an einer vorgesehenen Melkposition während einer ersten Betriebsphase, die beispielsweise den Zeitraum vor dem Anlegen der einzelnen Melkbecher an die Zitzen repräsentieren kann, so dass insbesondere das kräftezehrende und/oder gesundheitsbeeinträchtigende Halten eines Melkgeschirres unter dem Euter vermieden werden kann. Ferner wird durch die fixierte relative Stellung der einzelnen Melkbecher zueinander während dieser ersten Betriebsphase die Gefahr einer Verschmutzung von Zitzengummis, beispielsweise durch Bodenberührung, deutlich reduziert, so dass insbesondere die Milchqualität und der Gesundheitszustand der Tiere selbst bei Einsatz unerfahrener Arbeitskräfte deutlich verbessert werden kann. Ferner erlaubt es die erfindungsgemäße Haltevorrichtung, dass während einer zweiten Betriebsphase auf die Melkbecher individuell zugegriffen ist und die Melkbecher einzeln handhabbar sind. Auf Grund des relativ geringen Kraftaufwandes kann daher, über längere Zeiträume hinweg mit hoher Konzentration gearbeitet werden, wodurch die Arbeitseffizienz ansteigt. Des weiteren kann auf Grund der Arbeitserleichterung anderen Aspekten des Melkvorganges mehr Beachtung geschenkt werden, etwa der Begutachtung des Euters des Tieres, etc.

In einer weiteren vorteilhaften Ausführungsform weist die Haltevorrichtung einen Behälter auf, in welchem die Melkbecher während der ersten Betriebsphase zumindest teilweise eingeführt sind. Der Behälter der erfindungsgemäßen Haltevorrichtung kann wesentlich zu einer reduzierten mechanischen Belastung bei der Handhabung der Melkbecher sowie zu besseren Hygienebedingungen beitragen, da insbesondere der in Behälter eingeführte Bereich der Melkbecher gegen mechanische Belastungen und Schmutz geschützt ist. Beispielsweise kann bei einem Transport des Melkgeschirrs in der Haltevorrichtung von einem Melkstand zu einem anderen ein wesentlich höher Hygienestandard erzielt werden gegenüber einer "offenen" Konstruktion der Haltevorrichtung, da beispielsweise eine Berührung der Behälterwand mit kontaminierten Bereichen sich zunächst nicht auf die Melkbecher auswirkt und auch in einfacher Weise von der Behälterwand entfernbar ist.

In einer weiteren vorteilhaften Ausführungsform weist die Haltevorrichtung eine Führungsvorrichtung zum Führen von Milchschläuchen beim manuellen Bewegen der Melkbecher relativ zu der Haltevorrichtung auf. Die Führungsvorrichtung vermeidet somit, dass flexible Verbindungsschläuche, die die Melkbecher mit einer Milchleitung oder einem Milchsammelbehälter verbinden, sich nicht unkontrolliert bewegen, während beispielsweise die Melkbecher an die Zitzen angelegt werden oder während des Melkvorgangs, bei welchem eine Schwingbewegung der Melkbecher auftreten kann. Insbesondere kann die Führungsvorrichtung so ausgebildet sein, dass die Gefahr einer Bodenberührung der Milchschläuche während der ersten Betriebsphase, d. h. vor dem Anlegen der Melkbecher an die Zitzen, sowie auch während einer zweiten Betriebsphase, d. h. beim Anlegen oder beim Melkvorgang, deutlich verringert ist, wodurch zum einen die Lebensdauer dieser Milchschläuche verlängert wird, da insbesondere die Gefahr einer Trittbelastung minimiert wird, und zum anderen eine Verschmutzung der Milchschläuche gering gehalten wird.

In einer weiteren vorteilhaften Weiterbildung umfasst die Haltevorrichtung eine steuerbare Vakuumschalteinrichtung, die so ausgebildet ist, um ein Betriebsvakuum steuerbar an jeden der Melkbecher anzulegen. Mittels der Vakuumschalteinrichtung ist es möglich, zuverlässig das Betriebsvakuum in jedem der Melkbecher individuell ein- bzw. auszuschalten, so dass die Melkbecher an die jeweiligen Zitzen anlegbar sind, ohne das Betriebsvakuum nennenswert zu beeinträchtigen.

In einer bevorzugten Ausführungsform weist die Haltevorrichtung einen Betätigungsschalter in der Vakuumschalteinrichtung für jeden der Melkbecher auf. Auf Grund des Betätigungsschalters für jeden einzelnen Melkbecher kann ein Bediener der Melkanlage in gezielter Weise das Betriebsvakuum in jedem einzelnen Melkbecher ein- bzw. ausschalten, so dass der Einfluss des Anlegens bzw. Abnehmens der Melkbecher auf das Betriebsvakuum noch weiter eingeschränkt werden kann. Ferner bietet sich die Möglichkeit, die Melkbecher in schonender Weise von der Zitze abzunehmen, da bereits unmittelbar vor dem Abnehmen das Betriebsvakuum an diesem Melkbecher abgeschaltet werden kann, wobei dann der Vorgang des Abnehmens zu keinerlei Einbrechen des Betriebsvakuums und damit zu einem Risiko führt, dass die noch verbleibenden Melkbecher von den Zitzen abfallen. Ferner kann der Vorgang des Abnehmens der Zitzenbecher für das Tier in angenehmerer Weise durchgeführt werden, da beim Abnehmen die Saugwirkung des Betriebsvakuums abgeschaltet werden kann.

In einer weiteren Ausführungsform ist die Vakuumschalteinrichtung so ausgebildet, dass das Betriebsvakuum in Abhängigkeit des Abstandes des Melkbechers von der Haltevorrichtung geschaltet wird. Dadurch kann der Vorgang des Anlegens der Melkbecher noch weiter vereinfacht werden, da beispielsweise bei Annäherung des Melkbechers an die Zitze durch den Bediener das Betriebsvakuum automatisch eingeschaltet wird, ohne dass ein Zutun des Bedieners erforderlich ist. Damit kann beispielsweise das Anlegen des Melkbechers an die Zitze mit einer Hand ausgeführt werden, so dass gleichzeitig das Euter des Tieres stimuliert werden kann.

In einer vorteilhaften Weiterbildung umfasst die Haltevorrichtung mehrere Anschlüsse, die eine Verbindung mit einem oder mehreren Milchschläuchen, die die Haltevorrichtung mit einer Melkanlage verbinden, und mit einer Vakuumleitung der Melkanlage ermöglichen. Die mehreren Anschlüsse, die in der einfachsten Bauweise lediglich als Stutzen vorgesehen sein können, auf die entsprechende Schlauchenden aufgeschoben werden, ermöglichen es, die Haltevorrichtung und damit die Melkbecher in einfacher und rascher Weise vom Rest der Melkanlage abzukoppeln. Beispielsweise können die Anschlüsse und entsprechende Schlauchenden so ausgebildet sein, dass ein dichter Abschluss auf der Schlauchseite und/oder der Anschlussseite gegeben ist, so dass z. B. ein Milchschlauch durch eine einfache Handbewegung abgekoppelt werden kann, ohne das Betriebsvakuum in der restlichen Anlage zu beeinträchtigen.

Vorzugsweise umfasst die Haltevorrichtung Schlauchabschnitte, die mit einem Ende jeweils mit einem Anschluss verbunden sind und mit dem anderen Ende mit jeweils einem Melkbecher verbunden werden können. Durch diesen Aufbau kann die Haltevorrichtung strömungsmäßig als ein Verbindungsstück zwischen der Milchleitung und einem Milchbehälter einer Melkanlage und den Melkbechern betrachtet werden. Somit können in effizienter Weise die Melkbecher und/oder die Milchleitung abgekoppelt werden, ohne dass größere Umbauten an der Melkanlage notwendig sind. Beispielsweise kann in rascher Weise ein oder mehrere Melkbecher ausgetauscht werden, sollte dies beispielsweise auf Grund einer Verschmutzung oder Kontaminierung der Melkbecher erforderlich sein. Insbesondere, wenn eine Vakuumschalteinrichtung vorgesehen ist, die das Betriebsvakuum an jedem Melkbecher individuell ein- oder ausschalten kann, kann ein entsprechender Wechsel vorgenommen werden, ohne dass eine Beeinträchtigung des Melkvorganges stattfindet.

In einer weiteren vorteilhaften Ausführungsform weist jeder Schlauchabschnitt mindestens einen Steuerungsschlauchabschnitt auf, der an einem Ende mit einem Melkbecher verbindbar ist und der mit dem anderen Ende mit einem entsprechenden Steuerungsanschluss der Haltevorrichtung verbunden ist. Auf diese Weise können nicht nur die Milch und das Betriebsvakuum von den Milchschläuchen der Melkanlage zu den Melkbechern über die Haltevorrichtung übertragen werden, sondern auch die zum Ablauf des Melkvorganges erforderlichen Steuerimpulse. Beispielsweise werden typischerweise sogenannte Pulsatoren verwendet, die periodisch Atmosphärenluft und Unterdruck an die Melkbecher anlegen, zum Steuern des Melkvorganges verwendet, so dass auch diese Steuerimpulse in einfacher Weise an die Melkbecher über die Haltevorrichtung ankoppelbar sind. Beispielsweise können die Anschlüsse und die entsprechenden Steuerund Milchleitungen einer Melkanlage so ausgebildet sein, dass die Steuer- und Milchleitungen lediglich an die Haltevorrichtung angeschlossen werden, sobald diese in Position gebracht ist, so dass dann unmittelbar mit dem Melkvorgang begonnen werden kann. Zum Beispiel kann die Haltevorrichtung die Befestigungsvorrichtung in Form eines leicht befestigbaren Stativs aufweisen, so dass die Haltevorrichtung rasch von einer Position zu einer anderen getragen werden kann, wobei eben dann lediglich der Steuerschlauch und der Milchschlauch anzuschließen sind und die Anlage somit dann betriebsbereit ist. Dabei wird durch die Haltevorrichtung weiterhin das Anlegen der Melkbecher an die Zitzen im Gegensatz zu einem konventionellen Melkgeschirr dennoch deutlich vereinfacht, so dass relativ ermüdungsfrei und hygienisch kleinere Tierbestände gemolken werden können, auch wenn kein Melkstand vorhanden ist.

In einer weiteren vorteilhaften Ausführungsform weist die Befestigungsvorrichtung eine Halterung auf, um die Haltevorrichtung an einem Melkstandträger zu befestigen. Auf diese Weise kann die erfindungsgemäße Haltevorrichtung in kompatibler Weise mit bestehenden Melkständen verwendet werden, wobei dann gegenüber konventionellen Melkgeschirren die zuvor genannten Vorteile erreicht werden können.

In einer weiteren Ausführungsform ist die Befestigungsvorrichtung so ausgebildet, dass diese so einstellbar ist, dass die Längsachsen der Melkbecher nahezu horizontal ausgerichtet sind. Auf diese Weise kann eine besonders günstige Position der Haltevorrichtung eingerichtet werden, in der zum einen das Herausnehmen der Melkbecher beim Anlegen an die Zitzen einfach ist, wobei dennoch die Gefahr einer Verschmutzung bzw. Kontamination der Melkbecher durch in der Luft vorhandene, aufgewirbelte Verschmutzungsteilchen gering, die ansonsten bei einer im Wesentlichen vertikalen Ausrichtung der Melkbecher in die Milchleitung eindringen könnten.

Vorzugsweise ist die Befestigungsvorrichtung so ausgebildet, dass die Haltevorrichtung von einer ersten Position, die der ersten Betriebsphase entspricht, mindestens in eine zweite Position zur Reinigung zumindest eines Bereichs der Melkbecher überführbar ist. Durch diese Eigenschaft der Haltevorrichtung kann diese in effizienter Weise den Reinigungsvorgang zumindest eines Teils der Melkbecher unterstützen, so dass auch während kurzer Phasen, beispielsweise zwischen zwei Melkvorgängen, eine Reinigung, zumindest teilweise, der Melkbecher einfach möglich ist. Ferner kann die Haltevorrichtung in der zweiten Position auch so orientiert sein, dass in einfacher Weise eine entsprechende Reinigungsvorrichtung aufgesetzt werden kann, so dass ein gründliches Durchspülen der Melkbecher und der entsprechenden Milchleitung nach Beendigung aller Melkvorgänge ermöglicht wird.

Vorteilhafterweise ist die Haltevorrichtung so ausgebildet, dass eine Position zum Zwischendesinfizieren der Melkbecher möglich ist. Somit kann eine effiziente Spülung der Melkbecher zur Reduzierung einer Keimübertragung von Tier zu Tier stattfinden. Dabei ist in vorteilhaften Ausführungsformen ein Behälter vorgesehen, der die Spülflüssigkeit aufnimmt und mittels einer entsprechenden Leitung kontrolliert abführen kann, so dass eine Kontaminierung des Stalles mit chemischen Mitteln gering gehalten werden kann.

In einer weiteren vorteilhaften Ausbildung weist die Vakuumschalteinrichtung der Haltevorrichtung eine Abschalteinrichtung auf, die ausgebildet ist, bei einem Verlust des Melkvakuums in einem Melkbecher, diesen individuell und automatisch vom Betriebsvakuum abzukoppeln. Mit dieser Abschalteinrichtung kann somit sichergestellt werden, dass beispielsweise bei einem Abfallen eines Melkbechers von einer Zitze die weiteren Melkbecher dennoch mit dem Betriebsvakuum beaufschlagt bleiben, so dass der Melkvorgang an diesen Zitzen weitergeführt werden kann oder zumindest ein Abfallen der verbleibenden Melkbecher vermieden wird. Die Abschalteinrichtung kann in anderen Ausführungsformen auch zum Einschalten des Betriebsvakuums vorgesehen sein, indem beispielsweise ein manueller Betätigungsschalter an der Haltevorrichtung angebracht ist, der beim Anlegen eines Melkbechers an die Zitze betätigt werden kann, um das Betriebsvakuum an den Melkbecher durchzuschalten.

In einer weiteren Ausführungsform ist mindestens ein Anschluss, der beispielsweise mit dem Betriebsvakuum auf der einen Seite und mit einem Melkbecher auf der anderen Seite verbunden sein kann, mit einem steuerbaren Ventil versehen. Durch die Verwendung eines steuerbaren Ventils lässt sich ein hohes Maß an Bedienungskomfort erreichen, da beispielsweise das Betriebsvakuum in effizienter Weise geschaltet werden kann. Beispielsweise kann das Ventil als ein elektrisches Ventil vorgesehen sein, so dass eine entsprechende Schaltereinheit zur Betätigung des steuerbaren Ventils an einer für die Bedienung der Haltevorrichtung bzw. für eine für den Melkvorgang optimalen Position angeordnet werden kann, wobei die Lage des steuerbaren Ventils an einer für den Melkvorgang optimalen Position angebracht werden kann. Beispielsweise kann ein entsprechendes Schaltelement unmittelbar an dem Melkbecher vorgesehen sein, so dass das An- und Ausschalten des Betriebsvakuums mit einer Hand durchführbar ist. Vorteilhaft ist es auch, das steuerbare Ventil als ein pneumatisch betriebenes Ventil vorzusehen, da entsprechende Ventile, Steuerleitungen, Bedienelemente und dergleichen sich als robuste und zuverlässige Komponenten auf dem Gebiet der Melktechnik erwiesen haben.

In einer weiteren Ausführungsform weist die Haltevorrichtung ferner eine Reinigungsvorrichtung auf, die von einer ersten Reinigungsposition in der ersten Betriebsphase, in der zumindest der Kopfteil des Zitzengummis der Einwirkung eines Reinigungsfluids aussetzbar ist, in eine zweite Position zur Freigabe der Melkbecher für die zweite Betriebsphase bewegbar ist. Eine so gestaltete Reinigungsvorrichtung ermöglicht eine effiziente Reinigung zumindest des Kopfteils des Zitzengummis, der während dem Melkvorgang einer erhöhten Kontamination ausgesetzt sein kann. Dieser Reinigungsvorgang kann durch das Vorsehen der Reinigungsvorrichtung an der Haltevorrichtung auch während relativ kurzer Zeitintervalle, beispielsweise zwischen den Melkvorgängen zweier Tiere, durchgeführt werden, so dass eine Verunreinigung der Milch sowie eine Übertragung krankheitserzeugender Keime auf die Euter der Tiere deutlich reduziert werden kann, wobei von Seiten des Bedienpersonals kein hoher Arbeitsaufwand oder ein hoher Ausbildungsstandard erforderlich ist.

In einer weiteren Ausbildung weist die Reinigungsvorrichtung ein Dichtungselement auf, um damit das Zitzengummiinnere abzudichten, wenn sich die Haltevorrichtung in der Reinigungsposition befindet. Eine entsprechende Anordnung ermöglicht somit das Verwenden sehr effizienter Reinigungsfluide, wobei die Möglichkeit eines Eindringens in die Milchleitung minimal bleibt.

In einer weiteren Ausführungsform weist das Dichtungselement mindestens ein Düsenelement auf, das zum Einführen von einem Reinigungsfluid in das Zitzengummiinnere dient. Somit können mit einer derart ausgebildeten Reinigungsvorrichtung auch das Zitzengummiinnere sowie nachgeschaltete Milchleitungen nach Abschluss des Melkvorganges in effizienter Weise gespült und gereinigt werden, ohne dass ein zusätzlicher Arbeitsaufwand erforderlich ist. Zu diesem Zweck kann bei beispielsweise in einigen Ausführungsformen ein entsprechender Anschluss zur Zufuhr eines oder mehrerer Reinigungsfluide zur Reinigungsvorrichtung vorgesehen sein, so dass ein Reinigungsvorgang jederzeit ohne großen Aufwand durchführbar ist. Z. B. kann auch eine Ablaufleitung bzw. ein Ablaufanschluss vorgesehen sein, der zur Abfuhr verbrauchten Reinigungsfluids dient, wenn lediglich eine äußere Spülung der Melkbecher oder Teile davon durchgeführt wird.

In einer weiteren Ausführungsform ist ferner eine Stromversorgungseinheit in der Haltevorrichtung vorgesehen. Die Stromversorgungseinheit kann so ausgebildet sein, dass entsprechende Verbraucher, beispielsweise Pulsatoren, elektrische Ventile, Steuerungselektronik, und dergleichen, mit geeigneten Spannungen versorgt werden. Dabei kann die Stromversorgungseinheit durch Anschluss an ein externes Stromnetz mit Leistung versorgt werden, oder kann in anderen Ausführungsformen selbst elektrische Leistung erzeugen, wenn beispielsweise keine entsprechenden elektrischen Anschlussleitungen vorhanden sind. Beispielsweise kann die Stromversorgungseinheit pneumatisch angetrieben sein, beispielsweise durch Druckluft oder mittels des Betriebsvakuums, so dass damit die erforderlichen Betriebsspannungen ohne externen Stromanschluss bereitgestellt werden können.

In einer weiteren Ausführungsform ist ein Sensorelement in der Haltevorrichtung vorgesehen, das so ausgebildet ist, den Milchdurchfluss zumindest aus einem Melkbecher zu erfassen. Durch diese Maßnahme lässt sich eine Kontrolle des Melkvorganges ermöglichen, wobei beispielsweise die Durchflussmenge aktuell angezeigt werden kann und/oder für weitere Steuerungszwecke verwendet werden kann. Vorteilhafterweise ist ein entsprechendes Sensorelement für jeden der Melkbecher vorgesehen, so dass jedes einzelne Euterviertel überwacht werden kann. Beispielsweise kann in der Haltevorrichtung eine entsprechende Steuerungselektronik vorgesehen sein, die das eine oder die mehreren Ausgangssignale der Sensorelemente auswertet und daraufhin den Melkvorgang steuert. Beispielsweise kann eine Warnung ausgegeben werden, wenn der Milchfluss in einem Melkbecher einen gewissen kritischen Wert unterschreitet, so dass der Melkbecher dann von einem Bediener abgenommen werden kann.

In weiteren vorteilhaften Ausführungsformen ist ferner ein Qualitätssensorelement in der Haltevorrichtung vorgesehen, das ausgebildet ist, mindestens eine die Milchqualität kennzeichnende Eigenschaft zu erfassen. Mittels dieser Vorrichtung kann der Melkvorgang auch für unerfahrenes Bedienpersonal so gestaltet werden, dass eine optimale Milchqualität in Kombination mit einer erhöhten Tiergesundheit erreicht wird. Insbesondere kann das Qualitätssensorelement, das vorteilhafterweise für jeden einzelnen Melkbecher vorgesehen ist, mit einer entsprechenden Auswertesteuerung verbunden sein, so dass z. B. der Salzgehalt der Milch erfasst wird, um dem Bediener anzuzeigen, ob beispielsweise ein Euterviertel verstärkt zu melken ist, um damit einer sich abzeichnenden gesundheitlichen Störung des betreffenden Euterviertels vorzubeugen. Selbstverständlich können auch andere die Milchqualität kennzeichnende Eigenschaften, beispielsweise Anzahl und/oder Größe von Eiterflocken und dergleichen, erfasst und für die weitere Steuerung des Melkvorgangs verwendet werden. Wenn die Haltevorrichtung über entsprechende steuerbare Ventilelemente, Pulsatoren, oder dergleichen verfügt, können die Ausgangssignale der Sensorelemente vorteilhafterweise auch benutzt werden, um in automatisierter Weise den Melkvorgang ohne Eingreifen eines Bedieners zu steuern.

Erfindungsgemäß (Siehe Anspruch 41) weist die Haltevorrichtung ferner eine Stimulationseinrichtung auf, die ausgebildet ist, um mechanisch auf mindestens einen Milchschlauch und/oder Steuerschlauch einzuwirken, der einen Melkbecher mit der Haltevorrichtung während der zweiten Betriebsphase verbindet. Eine Aktuatorvorrichtung zur Erzeugung einer Bewegung eines Melkgeschirrs gemäß dem Oberbegriff des Anspruchs 41 ist aus der DE-A-39 31 769 bekannt.

Durch die Stimulationseinrichtung kann somit in gezielter Weise eine Bewegung der Melkbecher an den Zitzen erreicht werden, so dass eine entsprechende Stimulation stattfinden kann, ohne dass eine große Masse an dem Euter des Tieres schwingen muss, wie dies bei konventionellen Melkgeschirren mit Milchsammelstück der Fall ist.

Die Stimulationseinrichtung weist ein Antriebselement und ein damit gekoppeltes Aktuatorelement auf, wobei das Aktuatorelement mit dem mindestens einen Milchschlauch und/oder Steuerschlauch während des Melkens in Kontakt ist. Somit kann eine für die Funktion optimierte Bauweise für das Aktuatorelement unabhängig von dem Antriebselement erreicht werden, so dass eine optimale Stimulation erreicht wird. Beispielsweise kann das Aktuatorelement in Form eines Bügels oder einer Platte so an der Haltevorrichtung angebracht sein, dass ein ständiger Kontakt mit den flexiblen Milchschläuchen erreicht wird, wobei der Bügel bzw. die Platte auch gleichzeitig als eine gewisse Führung der Milchschläuche bzw. Melkbecher dienen kann, wenn diese aus der Haltevorrichtung entnommen oder in diese zurückgeführt werden. Auch kann eine entsprechend vorgelagerte Platte bzw. oder vorgelagerter Bügel als eine wirksame Schutzmaßnahme betrachtet werden, wenn beim Handhaben der Melkbecher oder beim Melkvorgang einer oder mehrere Melkbecher abfallen, da dann der Bügel bzw. die Platte die effektive Länge des Milchschlauches so verkürzen können durch Knicken an einer entsprechenden Kante, dass ein direkter Kontakt des Melkbechers mit dem Boden unter Umständen vermieden wird. Ein entsprechendes Aktuatorelement kann für mehrere Melkbecher oder individuell für jeden Melkbecher vorgesehen werden.

In anderen Ausführungsformen kann die Stimulationseinrichtung ein Antriebselement in der Führungseinrichtung aufweisen, so dass eine individuelle mechanische Einwirkung auf jeden einzelnen Milchschlauch und damit auf jeden einzelnen Melkbecher ermöglicht wird. Beispielsweise können entsprechende Rollen oder Zylinder der Führungseinrichtung mit einem Motor oder anderen Antriebsmitteln gekoppelt sein, so dass kurze Drehbewegungen der Rolle oder Hin- und Herbewegungen des Zylinders eine entsprechende Stimulationswirkung durch den an der Zitze anliegenden Melkbecher hervorrufen.

In einer weiteren Ausführungsform umfasst die Stimulationseinrichtung eine Steuerungseinrichtung, die aus ausgebildet ist, eine Frequenz der mechanischen Einwirkung und/oder eine Stärke der mechanischen Einwirkung zu steuern. Mit Hilfe dieser Steuerungseinrichtung ist es möglich, den Stimulationsvorgang effizient zu gestalten, ohne dass äußere Einflüsse, etwa ein unterschiedlicher Abstand des Tieres zur Haltevorrichtung, eine geänderte Orientierung der Haltevorrichtung, und dergleichen im Wesentlichen einen negativen Einfluss auf den Stimulationsvorgang ausüben. Beispielsweise kann die Steuerungseinrichtung so ausgebildet sein, dass das Schwingungshalten des Melkgeschirrs an der Zitze des Tieres erkannt und eine geeignete Frequenz und/oder Amplitude auf der Grundlage des erkannten Schwingungsverhaltens eingestellt wird.

In einer weiteren Ausführungsform ist eine Einrichtung zum rhythmischen Ziehen der Schlauchabschnitte vorgesehen, so dass beim Nachmelken eine optimale Lage der Melkbecher und ein entsprechender Reiz für das Tier gegeben ist. In einer vorteilhaften Ausführungsform kann dazu eine Klemmvorrichtung und eine Antriebseinheit vorgesehen werden, so dass die Schlauchabschnitte eingeklemmt und dann mittels der Antriebsvorrichtung gezogen werden, um damit die Melkbecher mit den Zitzen in eine Position zu bringen, die für das Nachmelken gewünscht wird. Die Antriebseinheit kann manuell antreibbar sein oder kann mittels geeigneter Antriebsmittel, beispielsweise einem Elektromotor, oder ähnlichem angetrieben werden. Vorteilhafterweise kann die Ansteuerung so erfolgen, dass ein rhythmisches Ziehen an den Melkbechern auftritt, was sich beispielsweise mit Hilfe einer Exzentrischen Scheibe in Verbindung mit einem Motor erreichen lässt. In vorteilhaften Varianten ist die Klemmvorrichtung mit der Stimulationseinrichtung gekoppelt, so dass entsprechende Komponenten der Stimulationseinrichtung auch für das Nachmelken verwendet werden können. So kann beispielsweise der Bügel der Stimulationseinrichtung mit einer zweiten, herunter klappbaren Bügelkomponente versehen sein, um die Schlauchabschnitte festzuklemmen und diese dann, bei Bedarf periodisch, in eine gewünschte Position zu ziehen, wobei die Antriebseinheit der Stimulationseinrichtung dann so ausgebildet ist, um die Position anfahren zu können.

In weiteren Ausführungsformen sind Einrichtungen vorgesehen, die eine Justierung der Melkbecher in einer vorbestimmten Orientierung in der Haltevorrichtung gewährleisten, so dass entsprechende Reinigungsvorrichtungen an die Melkbecher angeschlossen werden können, die eine immer gleichbleibende Lage der Melkbecher erfordern.

In weiteren Varianten können zumindest Bereiche von Schlauchverbindungen, die die Melkbecher mit dem Betriebsvakuum oder anderen Quellen verbinden, so in ihrer Ausgestaltung konzipiert sein, dass die Form der Schlauchverbindungen in Verbindung mit einer entsprechenden Führung eine hohe Stabilität gegen eine Verdrehung der Schlauchverbindung ergibt. So kann eine geeignete Querschnittsprofilierung dazu dienen, dass ein hoher Widerstand gegen Torsionskräfte in der Haltevorrichtung möglich ist. Insbesondere kann eine entsprechende Profilierung durch Integration einer mehrerer Steuerleitungen und/oder Stimulationsleitungen in den milchführenden Schlauch erreicht werden.

Gemäß einem weiteren Aspekt der vorliegenden Erfindung wird ein Melkgeschirr bereitgestellt, dass mehrere Melkbecher, mehrere Verbindungsschläuche, die mit den Melkbechern verbunden sind, und eine Haltevorrichtung nach einem der vorhergehenden Ansprüche umfasst.

Auf Grund der erfindungsgemäßen Haltevorrichtung kann das Melkgeschirr einen grundsätzlich einfacheren Aufbau aufweisen als in konventionellen Melkgeschirren, wobei insbesondere ein schweres, unhandliches Milchsammelstück bei den beweglichen Teilen des Melkgeschirrs vermieden werden kann. Wie zuvor ausgeführt ist, kann dadurch das Anlegen der Melkbecher in wesentlich komfortablerer Weise vonstatten gehen, da lediglich das Gewicht eines einzelnen Melkbechers gehandhabt werden muss im Gegensatz zu einigen Kilogramm eines konventionellen Melkgeschirrs.

Die Verbindungsschläuche können dabei milchführende Leitungen, Steuerleitungen und Stimulationsleitungen aufweisen, wobei entsprechende Leitungen für einen Melkbecher ganz oder teilweise gekoppelt sein können.

In einer vorteilhaften Weiterbildung weist jeder Verbindungsschlauch zumindest eine milchführende Leitung und eine Steuerleitung in einer gemeinsamen Schlauchummantelung auf. Mit dieser Anordnung wird die Anzahl der erforderlichen Schlauchverbindungen klein gehalten. Ferner lässt sich durch eine derartige Ausbildung der Herstellungsaufwand gering halten, wenn der Verbindungsschlauch mit mindestens der milchführenden Leitung und der Steuerleitung in einem gemeinsamen Herstellungsverfahren produziert werden. Des weiteren können bei den Steuerleitungen auch Leitungen integriert sein, die zur Ansteuerung der Vakuumschaltvorrichtung vorgesehen sind, so dass sich trotz dieser zusätzlichen Leitungen die Anzahl der Verbindungsschläuche nicht erhöht. Es können auch elektrische Leitungen innerhalb der Schlauchummantelung vorgesehen sein, so dass ein entsprechender Schutz für die elektrischen Leitungen gegeben ist.

Vorteilhafterweise weist jeder Verbindungsschlauch oder jeder Melkbecher ein Bedienelement auf, um zumindest das Melkvakuum zu jedem Melkbecher schaltbar zu machen. Eine entsprechende Anordnung eines Schaltelements am Melkbecher bzw. an dem zugehörigen Verbindungsschlauch erlaubt ein äußerst bequemes Anlegen und Abnehmen der Melkbecher, da das Einschalten und Ausschalten des Melkvakuums unmittelbar vor dem Anlegen bzw. Abnehmen des Melkbechers, ggf. mit nur einer Hand, stattfinden kann.

Gemäß einem weiteren Aspekt der vorliegenden Erfindung wird ein Melkstand bereitgestellt mit einem Träger zum Halten und Führen einer Milchleitung und einer Steuerleitung, mehreren Melkbechern, die mit der Milchleitung und der Steuerleitung in Fluidverbindung stehen und einer Haltevorrichtung nach einem der vorhergehenden Ansprüche. Durch die Verwendung der erfindungsgemäßen Haltevorrichtung ergeben sich für den Melkstand entsprechende Vorteile beim Melken von Tieren, wie sie zuvor bereits dargelegt sind.

Vorteilhafterweise ist die Haltevorrichtung an dem Träger mittels der Befestigungsvorrichtung angebracht, wobei in vorteilhaften Weiterbildungen der Träger und/oder die Befestigungsvorrichtung ein Schwenken der Haltevorrichtung in mehreren Richtungen ermöglicht, um somit eine optimierte Betriebs- und/oder Reinigungsposition zu erreichen.

In einer weiteren vorteilhaften Ausführungsform ist in dem Melkstand eine an dem Träger angebrachte Schlauchführung vorgesehen, wobei die Schlauchführung ausgebildet ist, die Fluidverbindung zwischen den Melkbechern und der Milchleitung in der ersten und der zweiten Betriebsphase herzustellen. Beispielsweise können entsprechende Einrichtungen zum Führen, Halten und Justieren entsprechender Milchschläuche konventioneller Trägersysteme für Melkstände auch in Verbindung mit der erfindungsgemäßen Haltevorrichtung verwendet werden, so dass ein hohes Maß an Kompatibilität mit bestehenden Anlagen erreicht wird.

Erfindungsgemäß wird gemäß einem weiteren Aspekt eine Aktuatorvorrichtung zur Erzeugung einer Bewegung eines Melkgeschirrs gemäß Anspruch 41 bereitgestellt, wobei die Aktuatorvorrichtung eine Halteeinrichtung zur Befestigung der Aktuatorvorrichtung an einer zu dem Melkgeschirr beabstandeten Position aufweist. Des weiteren umfasst die Aktuatorvorrichtung ein Aktuatorelement, das mit einer flexiblen Komponente, die mit dem Melkgeschirr beim Melkvorgang verbunden ist, gekoppelt werden kann, um damit der flexiblen Komponente eine Bewegung in zumindest einer Richtung zu verleihen.

Die erfindungsgemäße Aktuatorvorrichtung lässt sich somit an einer beliebigen geeigneten Position so anbringen, dass eine Kopplung über eine flexible Komponente, beispielsweise einen Milchschlauch, einen Pulsatorschlauch, oder dergleichen, an das Melkgeschirr stattfinden kann, so dass die entsprechende an die flexible Komponente übertragene Bewegung auch an dem Melkgeschirr wirksam wird. Durch die erfindungsgemäße Aktuatorvorrichtung kann somit zu einem gewissen, gewünschten Grade eine Entkopplung der für das Melken erforderlichen Pulsation von einer für andere Wirkungen erforderliche Bewegung des Melkgeschirrs erreicht werden. Beispielsweise kann mittels der erfindungsgemäßen Aktuatorvorrichtung eine effiziente Stimulation vor dem eigentlichen Melkvorgang stattfinden, ohne dass eine manuelle Stimulationsphase erforderlich ist. Zu diesem Zwecke kann beispielsweise die Aktuatorvorrichtung so gestaltet sein, um eine entsprechende Bewegung des Melkgeschirrs am Euter für eine gewünschte Zeitdauer, beispielsweise eine Minute oder länger, hervorzurufen, so dass das zum Melken erforderliche Hormon im Euter wirksam werden kann. Dazu kann es vorteilhaft sein, die Pulsation während dieser Stimulationsphase gänzlich einzustellen und den Strichkanal der Zitze durch Einfalten des Zitzengummis geschlossen zu halten, so dass im Wesentlichen keine Milch während der Stimulationsphase abgemolken wird. Wenn die mindestens eine Richtung, in der das Aktuatorelement die flexible Komponente bewegen kann, so orientiert ist, dass eine gewünschte Schrägstellung des Melkgeschirrs am Euter erreicht wird, so kann die erfindungsgemäße Aktuatorvorrichtung auch in effizienter Weise für das Schrägstellen des Melkgeschirrs verwendet werden, um damit unterschiedliche Stimulationsreize während des Melkvorgangs auf z. B. vordere und hintere Euterviertel auszuführen. Auch können mittels der erfindungsgemäßen Aktuatorvorrichtung gezielt Bewegungen am Melkgeschirr während des eigentlichen Melkvorgangs hervorgerufen werden, so dass ein stimulierendes Melken in effizienterer Weise erreicht werden kann. Das stimulierende Melken ist insbesondere in den ersten drei Monaten nach der Geburt des Kalbes wichtig, um das für die langfristige Aktivierung der milchbildenden Zellen notwendige Hormon Prolaktin in ausreichender Menge zu erzeugen. Bei einer ausreichenden Menge des Aktivierungshormons Prolaktin, das durch ein gezieltes stimulierendes Melken erreicht werden kann, wird das genetische Potential des Tieres ausgeschöpft und trägt damit in Verbindung mit einer verbesserten Eutergesundheit zu einem höheren Milchertrag bei.

Auch während des automatischen Nachmelkens kann durch die erfindungsgemäße Aktuatorvorrichtung eine Lockerung der glatten Eutermuskulatur bewirkt werden, so dass eine Verkrampfung der Muskulatur, die beispielsweise durch Eindringen von Vakuum in die Zitze hervorgerufen werden kann, vermieden wird. Somit lässt sich insgesamt der Milchertrag verbessern, wobei dennoch mehr Milch in geringerer Zeit bei reduziertem Aufwand des Fachpersonals erreicht wird. Insbesondere kann durch die erfindungsgemäße Aktuatorvorrichtung die Ausschüttung des Oxytozins durch eine gezieltere Bewegung des Melkgeschirrs am Euter gleichmäßiger gestaltet werden, so dass in Verbindung mit einer verbesserten Lockerung der Eutermuskulatur ein höherer Ausmelkgrad bei einer insgesamt reduzierten Melkzeit erreicht werden kann. Auf Grund des besseren Ausmelkens wird einerseits die Milchproduktion auf einem hohen Niveau gehalten und andererseits werden unerwünschte Milchbestandteile, z.B. pathogene Keime, etc., verstärkt aus den oberen Bereichen der Euterviertel wirksam ausgeschwämmt. Auch kann der Milchblockade insbesondere von Jungtieren wirksamer begegnet werden, da die erfindungsgemäße Aktuatorvorrichtung eine schonendere und naturgetreuere Stimulation ermöglicht. Insbesondere kann eine stoßartige Stimulation bei entsprechend Orientierung der Bewegungsrichtung des Aktuatorelements erzielt werden. Beispielsweise kann das Aktuatorelement so ausgebildet sein, dass eine Bewegung in Längsrichtung der flexiblen Komponente, beispielsweise des Milchschlauches, hervorgerufen wird, so dass dadurch an den Melkbechern insgesamt eine Bewegung zum Zitzengrund hin hervorgerufen wird. Durch den Wegfall bzw. die Verminderung der "Behämmerung" der Zitze bei der konventionellen, pulsatorinduzierten Stimulation kann eine Schädigung der inneren Zitzenauskleidung entscheidend verringert werden.

Ein weiterer Vorteil der erfindungsgemäßen Aktuatorvorrichtung besteht darin, dass diese in bereits vorhandenen Melkanlagen eingesetzt werden kann, da die Haltevorrichtung ein entsprechendes Befestigen der Aktuatorvorrichtung an einer geeigneten Position, beispielsweise am Gestänge oder Haltearm eines Melkstandes so ermöglicht, dass ein mechanischer Kontakt zu einer flexiblen Komponente, beispielsweise dem Milchschlauch und/oder dem Pulsatorschlauch ermöglicht. Auch ist eine Befestigung der erfindungsgemäßen Aktuatorvorrichtung an einer Zugvorrichtung zur Einstellung der Neigung des Melkgeschirrs in Bezug auf das Tiereuter möglich. Durch eine entsprechende Anordnung können sowohl stimulierende Bewegungen am Euter des Tieres hervorgerufen werden als auch eine Bewegung, die zur Anstellung der Melkbecher in Bezug auf das Tiereuter erforderlich ist. Selbstverständlich können auch beide Bewegungen kombiniert werden, so dass um eine gewünschte "Mittelstellung" herum, die einem gewünschten Anstellwinkel der Melkbecher entspricht, eine entsprechende stimulierende Bewegung bewirkt werden kann.

Erfindungsgemäß umfasst die Aktuatorvorrichtung eine Steuereinrichtung, die mit dem Aktuatorelement funktionell verbunden und so ausgebildet ist, um das Aktuatorelement zu einer gesteuerten Bewegung zu veranlassen.

Das Vorsehen einer Steuereinrichtung ermöglicht eine weitgehendere Automatisierung des Melkvorganges, indem beispielsweise eine zeitliche Steuerung der Bewegung mittels der Steuereinrichtung stattfinden kann. Z. B. kann die für eine wirksame Vorstimulation erforderliche Bewegung mittels der Steuereinrichtung so gesteuert werden, dass die erforderliche Mindestzeit, die zur Ausschüttung und zum Transport des Oxytozins erforderlich ist, zuverlässig eingehalten wird, ohne dass ein manuelles Eingreifen erforderlich ist.

In einer weiteren bevorzugten Ausführungsform ist die Steuereinrichtung so ausgebildet, um die Intensität und/oder den zeitlichen Ablauf der gesteuerten Bewegung zu bestimmen. Diese Ausbildung der Steuereinrichtung ermöglicht ein hohes Maß an Flexibilität bei der Durchführung des Melkvorganges, da beispielsweise der zeitliche Verlauf sowie die Intensität der Stimulation mittels der Steuereinrichtung festgelegt werden kann. Beispielsweise kann eine andere Bewegungsart und damit Stimulationsart während der Vorstimulation ausgeführt werden für eine vorgeschriebene Zeitdauer, beispielsweise mindestens eine Minute, die dann in eine weniger intensivere Stimulation während des eigentlichen Melkvorgangs übergeht. Insbesondere kann es vorteilhaft sein, mittels der Steuereinrichtung stoßartige Stimulationsimpulse zu generieren, um damit ein entsprechendes Stoßen des Kalbes während eines natürlichen Saugvorgangs zu simulieren.

In einer vorteilhaften Weiterbildung der vorliegenden Erfindung ist die Steuereinrichtung ferner ausgebildet, mit einer Sensoreinrichtung zu kommunizieren und das Aktuatorelement auf der Grundlage eines Signals der Sensoreinrichtung zu steuern.

Häufig sind in der Melkanlage entsprechende Sensoren zum Erfassen gewisser, für den Melkvorgang charakteristischer Merkmale vorhanden. Beispielsweise ist häufig ein Milchdurchflusssensor vorgesehen, um den Verlauf des Melkvorganges zu überwachen. Ferner werden häufig Sensoren eingesetzt, um eine oder mehrere Eigenschaften der ermolkenen Milch zu erfassen. Beispielsweise kann die Anzahl der Eiterflocken während des Melkens ermittelt werden, oder es kann die elektrische Leitfähigkeit der Milch gemessen werden, um damit ein Maß für den Anteil an Salzen in der Milch zu erhalten, was wiederum Aufschluss über den Gesundheitszustand des Euters geben kann. Durch die Steuerung des Aktuatorelements auf der Grundlage eines entsprechenden Sensorsignals kann somit mittels der erfindungsgemäßen Aktuatorvorrichtung der Melkvorgang noch effizienter gestaltet werden, da beispielsweise die Art und/oder die Intensität der Stimulation während des Melkens entsprechend angepasst werden kann oder beispielsweise die Orientierung des Melkgeschirrs am Euter verändert werden kann. Beispielsweise kann eine abrupte Änderung in der Milchflusskurve darauf hindeuten, dass Euterviertel bereits leer gemolken sind oder nahe davor sind, so dass eine entsprechende neue Orientierung des Melkgeschirrs zu einer geringeren Stimulation und damit einer geringeren Melkbereitschaft dieser Euterviertel führen kann. Selbstverständlich kann die erfindungsgemäße Aktuatorvorrichtung auch auf der Grundlage anderer Sensorelemente betrieben werden.

In einer weiteren vorteilhaften Ausführungsform ist die Sensoreinrichtung ausgebildet, um ein für den Status des Melkvorgangs und/oder für den Stimulationszustand eines Tieres repräsentatives Signal zu erzeugen.

Wie zuvor erwähnt ist, kann ggf. der Status des Melkvorganges anhand des Flocken- und/oder Salzgehaltes der ermolkenen Milch bestimmt werden. In vorteilhaften Ausführungsformen ist ein Milchflusssensor vorgesehen, mit der zeitliche Verlauf des Milchflusses erfasst werden kann. In besonders vorteilhaften Beispielen ist der Milchflusssensor ausgebildet, den Milchfluss nahezu kontinuierlich zu erfassen, so dass damit auch die sogenannten Entspannungsrhythmen des Tieres ermittelt werden können. Die Milchflusskurve zeigt bei einer adäquaten Stimulation während des Melkens ein charakteristisches An- und Abschwellen des Milchflusses, woraus auf den Entspannungszustand und damit auf den Stimulationszustand des Tieres geschlossen werden kann. Anhand der Müchflusskurve kann somit eine Steuerung der Art und/oder Intensität der durch das Aktuatorelement am Melkgeschirr hervorgerufenen Bewegung erfolgen. Beispielsweise kann durch eine verstärkte Bewegung und/oder durch eine Änderung der Frequenz bei einem Abweichen der Milchflusskurve von einem Sollwert eine andere Art der Stimulation während des Melkens eingestellt werden. In vorteilhaften Ausführungsformen können zu diesem Zweck individuell für einzelne Tiere entsprechende Referenzdaten erstellt werden, die dann zur Steuerung des Aktuatorelements benutzt werden. So kann bei einem Abweichen von den Referenzdaten, die beispielsweise als Referenzkurve, als Datenpunkte, etc. in einem Speicher abgelegt sein können, eine Änderung der Melkgeschirrbewegung veranlasst. So kann bei einem im Vergleich zu den Referenzdaten vorzeitigen Abfall des Milchflusses eine verstärkte Stimulation, oder eine andere Schrägstellung des Melkgeschirrs stattfinden. Um die Referenzdaten ständig auf einem aktuellen Stand zu halten, können die aktuellen Milchflussdaten in die Referenzdaten miteingebunden werden, beispielsweise in Form eines gleitenden Mittelwertes oder ähnlichen Algorithmen. In anderen Fällen können Sensoreinrichtungen vorgesehen sein, die den Stimulationszustand des Tieres anzeigen, so dass beispielsweise die Dauer und/oder die Intensität der durch das Aktuatorelement hervorgerufenen stimulierenden Bewegung entsprechend eingestellt werden kann. Eine entsprechende den Stimulationszustand erfassendes Sensorelement kann eine Einrichtung umfassen, die beispielsweise die Tritthäufigkeit und/oder eine Schwanzbewegung, beispielsweise Anheben des Schwanzes, den Oxytozingehalt im Blut oder den Zustand der Zitze erfasst.

Sensoreinrichtungen, die beispielsweise die Tritthäufigkeit oder die Bewegung des Schwanzes des Tieres feststellen, können auf unterschiedlichen Konzepten beruhen, beispielsweise kann bei einer Sensoreinrichtung für die Schwanzstellung eine Vorrichtung zum Messen der Neigung, beispielsweise ein Neigungsschalter, vorgesehen sein. Entsprechende Sensorelemente sind vorteilhafterweise für eine drahtlose Kommunikation ausgelegt und können über längere Zeiträume am Tier belassen werden, so dass ggf. auch andere Informationen abgerufen und für Überwachungs- oder Auswertezwecke verwendet werden können. So kann beispielsweise die erfindungsgemäße Aktuatorvorrichtung für eine Kommunikation drahtlose mit einem entsprechenden Sensorelement am Schwanz des Tieres ausgebildet sein, um damit während der Vorstimulationsphase die Wirksamkeit der Stimulation zu überwachen und ggf. die stimulierende Bewegung entsprechend anzupassen. In anderen Beispielen kann eine entsprechende, den Erregungszustand der Zitze erkennenden Sensoreinrichtung in einem oder mehreren Melkbechern vorgesehen sein. Da typischerweise bei erfolgreicher Stimulation der Zitzen diese erigieren, kann dieser Zustand im Melkbecher beispielsweise durch eine druckempfindliche Komponente am oder im Zitzengummi erfasst werden. Des weiteren kann die Tritthäufigkeit der Tiere während des Melkvorgangs Aufschluss darüber geben, ob der Melkvorgang gegenwärtig von dem Tier als unangenehm empfunden wird. Auf der Grundlage entsprechender Signale kann sodann die stimulierende Bewegung und/oder die Stellung des Melkgeschirrs am Euter nachjustiert werden. In anderen Ausführungsformen können selbstverständlich zwei oder mehrere Sensoreinrichtungen mit entsprechenden Signalen verwendet werden, um eine eindeutigere Erkennung des Stimulationszustands zu erhalten und dementsprechend mittels der Aktuatorvorrichtung reagieren zu können.

In einer weiteren vorteilhaften Ausführungsform ist die Aktuatorvorrichtung ferner so ausgebildet, um eine mit dem Melkgeschirr verbundene Pulsatoreinrichtung zu steuern.

Auf diese Weise kann der Melkvorgang effizienter gestaltet werden, da die Bewegung, beispielsweise die Stimulationsbewegung, im Melkgeschirr effizient mit dem Betrieb der Pulsatoreinrichtung koordiniert werden kann. Eine Steuerung kann beispielsweise so vorgenommen werden, dass erst nach Beendigung der Vorstimulationsphase die Pulsatoreinrichtung so angesteuert wird, um den eigentlichen Melkvorgang zu beginnen. Zum Beispiel kann ein permanentes Einfalten des Zitzengummis, vorteilhafterweise unter nur geringer Beaufschlagung mit Außendruck und nur bei geringen Betriebsvakuum, während der Stimulationsphase durch die Aktuatorvorrichtung stattfinden, und erst bei einer entsprechenden abgelaufenen Stimulationszeit wird dann die Pulsatoreinrichtung durch die Aktuatorvorrichtung gestartet, um den eigentlichen Melkvorgang in Gang zu setzen. Insbesondere wenn die Steuereinrichtung der Aktuatorvorrichtung mit entsprechenden Sensoren verbunden ist, die den Stimulationszustand des Tieres anzeigen, kann eine höchst effiziente Koordinierung der Pulsatoreinrichtung und der Aktuatorvorrichtung stattfinden, da dann der Melkvorgang zuverlässig erst dann ausgelöst werden kann, wenn die entsprechende Melkbereitschaft des Tieres vorhanden ist. Selbstverständlich sind auch andere Abläufe des Melkvorgangs durch Koordinierung der Aktuatorvorrichtung und der Pulsationseinrichtung möglich. Beispielsweise kann es unter Umständen vorteilhaft sein, den Melkvorgang ggf. kurzzeitig zu unterbrechen und eine intensivere oder entsprechend gestaltete Stimulationsphase auszuführen, um etwa beispielsweise den Oxytozinpegel und Prolaktinpegel wieder anzuheben, ohne dass zuvor die Zisternenmilch vollständig abgesaugt wird und ein Verkrampfen der Eutermuskulatur auf Grund des eindringenden Vakuums stattfinden könnte.

In einer weiteren Ausführungsform ist die Aktuatorvorrichtung so ausgebildet, um eine Einfaltungsfrequenz und/oder eine Druckbeaufschlagung eines von der Pulsatoreinrichtung pneumatisch angesteuerten Zitzengummis zumindest während einer Stimulationsperiode der Pulsatoreinrichtung zu steuern.

Indem die erfindungsgemäße Aktuatorvorrichtung direkt auf die Frequenz und/oder die Druckbeaufschlagung beim Einfalten des Zitzengummis zugreifen kann, ist somit eine sehr flexible Koordinierung der Funktion der Aktuatorvorrichtung und der Pulsatoreinrichtung möglich. Beispielsweise kann während der Vorstimulation die Einfaltfrequenz relativ hoch gewählt werden mit einer relativ geringen Druckbeaufschlagung, so dass die Schleimwände der Zitzeninnenseite nicht geschädigt werden, und ein Abmelken der Zisternenmilch während der Stimulationsphase verhindert wird, wobei aber dennoch ein gewisses Maß an Stimulation der Zitze erreicht wird. Gleichzeitig kann durch die Aktuatorvorrichtung eine zusätzliche Bewegung erzeugt werden, beispielsweise eine stoßartige Bewegung, so dass in Kombination eine effizientere Stimulation erreicht wird, wobei die Koordinierung beider Einrichtungen, d. h. der Pulsatoreinrichtung und der Aktuatorvorrichtung vorteilhafterweise nur von einer Einrichtung bestimmt wird, so dass ein zuverlässiger Ablauf des gesamten Melkvorgangs stets gegeben ist. Ferner ermöglicht diese Ausführungsform, den Melkvorgang flexibler zu gestalten als dies durch entsprechende individuelle Ansteuerungen der Pulsatoreinrichtung und der Aktuatorvorrichtung möglich ist. Insbesondere kann auch durch das Zusammenwirken des Pulsators mit der Aktuatorvorrichtung das Stimulieren während des gesamten Melkvorgangs verbessert werden, so dass durch dieses stimulierende Melken langfristig die Milchproduktion und die Eutergesundheit gesteigert werden können.

In einer weiteren vorteilhaften Ausführungsform ist die Aktuatorvorrichtung ferner ausgebildet, eine Neigung von Längsachsen von Melkbechern des Melkgeschirrs in Bezug zu dem Tiereuter während des Melkvorgangs zu ändern.

Wie zuvor erläutert wurde, kann es vorteilhaft sein, die Neigung der Melkbecher während des Melkvorgangs oder während gewisser Phasen des Melkvorgangs auf einen gewünschten Wert einzustellen, um damit eine geänderte Stimulation diverser Euterviertel zu erreichen. Dabei kann eine entsprechende Änderung der Neigung erreicht werden, indem beispielsweise ein Zug an einen Milchschlauch oder einen Pulsatorschlauch oder ein Zug an einer entsprechenden Zugvorrichtung erzeugt wird. Die Einstellung der Neigung kann dabei durch manuelle Betätigung eines entsprechenden Schaltknopfes oder einem ähnlichen Bedienelement auch ferngesteuert und/oder in automatisierter Weise erfolgen, wobei ggf. die Neigungseinstellung auch auf Grundlage von Sensorsignalen erfolgen kann, die den Status des Melkvorganges und/oder den Stimulationszustand repräsentieren.

In einer weiteren vorteilhaften Ausführungsform ist das Aktuatorelement so ausgebildet, um der flexiblen Komponente eine Bewegung zumindest in einer zweiten, zur ersten Richtung linear unabhängig orientierten Richtung zu verleihen.

Auf Grund dieser Schaltung des Aktuatorelements ist es möglich, in sehr flexibler Weise stimulierende Bewegungen des Melkgeschirrs am Euter hervorzurufen, so dass insgesamt eine verbesserte Stimulationswirkung erreicht wird.

In einer weiteren Ausführungsform ist die Steuereinrichtung ferner so ausgebildet, um eine durch das Aktuatorelement am Melkgeschirr bewirkte Auslenkung für zumindest zwei unterschiedliche Bewegungen des Aktuatorelements abzuschätzen und die Ansteuerung des Aktuatorelements auf der Grundlage der Abschätzung auszuführen.

Eine entsprechende Ausbildung der Aktuatorvorrichtung erlaubt es somit, die Wirkung der Bewegung des Aktuatorelements zu bewerten und die weitere Ansteuerung des Aktuatorelements in Abhängigkeit dieser Bewertung durchzuführen. Beispielsweise kann die Art der am Melkgeschirr resultierenden Bewegung, die durch das Aktuatorelement in Gang gesetzt wird, deutlich von dem Zustand des mechanischen Systems, d. h. der flexiblen Komponente, dem Melkgeschirr, dem Euter und dergleichen abhängen, so dass eine für das betreffende mechanische System günstige Stimulationsbewegung des Aktuatorelements gewählt werden kann. So ist es beispielsweise möglich, durch Erfassen der zum Bewegen des Aktuatorelements mit einer gegebenen Amplitude benötigten Energie einen resonanten Bereich des mechanischen Systems zu bestimmen, um damit in sehr effizienter Weise eine Bewegung am Melkgeschirr hervorzurufen.

In einer weiteren Ausführungsform ist das Aktuatorelement mit einem flexiblen Milchschlauch und/oder mit einem flexiblen Pulsatorschlauch, die mit dem Melkgeschirr in Fluidverbindung stehen, zur Bewegungserzeugung koppelbar.

Auf diese Weise lässt sich in relativ einfacher Weise die Aktuatorvorrichtung mit dem Melkgeschirr mechanisch verbinden, indem diese beispielsweise an einem Melkarm oder Melkgestänge mittels der Haltevorrichtung fixiert wird und das bewegliche Aktuatorelement mechanisch mit einem der Verbindungsleitungen gekoppelt wird. Dazu kann je nach Beschaffenheit des Aktuatorelements eine entsprechende Befestigungsvorrichtung so vorgesehen sein, dass der Milchschlauch und/oder der Pulsatorschlauch rasch und unkompliziert mit dem bewegbaren Aktuatorelement verbunden werden können.

In einer weiteren vorteilhaften Ausführungsform ist das Aktuatorelement so ausgebildet, dass es mit einer Einrichtung koppelbar ist, die zur Einstellung der Orientierung der Melkbecher relativ zum Euter vorgesehen ist.

Wie zuvor bereits erwähnt ist, kann es vorteilhaft sein, die mechanische Belastung und damit die stimulierende Wirkung, die durch das Melkgeschirr an den einzelnen Eutervierteln hervorgerufen wird, entsprechend den Gegebenheiten des Tieres bzw. entsprechend dem Melkverlauf einzustellen, so dass ein möglichst gleichmäßiges Ausmelken der einzelnen Euterviertel erreicht wird. Häufig sind dazu in konventionellen Melkständen entsprechende Melkarme oder Zugvorrichtungen so vorgesehen, dass durch einen entsprechenden Zug die Längsachse der Melkbecher mehr oder weniger aus der vertikalen Stellung ausgelenkt werden kann. Erfindungsgemäß ist nunmehr das Aktuatorelement so ausgebildet, dass es mit einer entsprechenden Zugeinrichtung gekoppelt werden kann, so dass eine Bewegung des Melkgeschirrs am Euter über die mechanische Bewegung des Aktuatorelements und über die Zugvorrichtung übertragen wird. In einigen Ausführungsformen kann dabei generell die Neigung der Melkbecher mittels der erfindungsgemäßen Aktuatorvorrichtung eingestellt werden, wobei dann zusätzlich oder alternativ auch eine stimulierende Bewegung des Melkgeschirrs erzeugt werden kann. Beispielsweise kann die Stellung der Melkbecher auch während des Melkvorgangs in geeigneter Weise nachgeführt werden, wobei die Nachführung auf Grund eines voreingestellten Ablaufs und/oder auf der Grundlage von Sensorsignalen und/oder durch Initiative eines Bedieners stattfinden kann.

In einer vorteilhaften Weiterbildung umfasst das Aktuatorelement eine pneumatische Antriebseinrichtung. Mittels einer pneumatischen Antriebseinrichtung lässt sich ein relativ einfacher mechanischer Aufbau mit vergleichsweise geringem Aufwand bei der Versorgung der Antriebseinrichtung verwirklichen. Da insbesondere pneumatisch betriebene Einrichtungen in einer Melkanlage Verwendung finden, sind in der Regel entsprechende Vorrichtungen zum Versorgen derartiger pneumatischer Einrichtungen vorhanden und können auch für die Versorgung mit Druckluft bzw. Vakuum der pneumatischen Antriebseinrichtung verwendet werden.

In einer weiteren Ausführungsform umfasst das Aktuatorelement eine elektrische Antriebseinrichtung. Elektrische Antriebseinrichtungen sind in preisgünstiger und vielfältiger Ausgestaltung verfügbar und erlauben damit eine kompakte zuverlässige mechanische Ansteuerung des Aktuatorelements. Insbesondere in Verbindung mit einer entsprechenden Leistungselektronik lässt sich ein hohes Maß an Flexibilität für die mechanische Bewegung des Aktuatorelements, beispielsweise in Hinblick auf die Frequenz und/oder Intensität einer mechanischen Auslenkung erreichen.

In einer weiteren Ausführungsform ist ferner eine pneumatisch angetriebene Wandlereinrichtung vorgesehen, um elektrische Energie zur Versorgung einer oder mehrerer Komponenten bereitzustellen. Mittels einer derartigen pneumatisch angetriebenen Wandlereinrichtung lässt sich beispielsweise die Versorgungsspannung für eine Steuereinrichtung und/oder Sensorelemente und/oder Anzeigeelemente und/oder Kommunikationseinrichtungen erzeugen, wobei lediglich eine Versorgung der Aktuatorvorrichtung mit Druckluft bzw. Vakuum vorzusehen ist, so dass der Aufwand für eine Installation der erfindungsgemäßen Aktuatorvorrichtung selbst in bereits bestehenden Melkanlagen gering bleibt. In anderen Ausführungsformen kann eine elektromagnetische Wandlereinrichtung vorgesehen sein, die mit dem Aktuatorelement mechanisch gekoppelt ist, so dass auf Grund der durch die Wandlereinrichtung erzeugten elektrischen Energie eine Abschätzung der mechanischen Bewegung des Aktuatorelements möglich ist. Bei entsprechender Auslegung kann die für die Abschätzung der mechanischen Bewegung des Aktuatorelements erzeugte Energie auch ferner zur Versorgung einer oder mehrerer Komponenten der Aktuatorvorrichtung oder damit in Verbindung stehender Sensorkomponenten verwendet werden. Beispielsweise können mittels der elektromagnetischen Wandlereinrichtung die tatsächlich erreichte Auslenkung und/oder Frequenz der Bewegung des Aktuatorelements erfasst werden und ggf. zum Auffinden resonanter Bereiche des gesamten mechanischen Systems verwendet werden.

Gemäß einem weiteren Aspekt der vorliegenden Erfindung umfasst eine Melkanlage zum maschinellen Melken von Tieren eine Vakuumanlage, die ausgebildet ist, ein zum Absaugen von Milch erforderliches Vakuum bereitzustellen. Ferner umfasst die Melkanlage ein Melkgeschirr mit mehreren Melkbechern, die mit der Vakuumanlage über zumindest abschnittsweise flexible erste Leitungen in Fluidverbindung stehen. Ferner ist eine Pulsatoreinrichtung vorgesehen, die mit den Melkbechern über eine zweite, abschnittsweise flexible Leitung in Fluidverbindung steht und so ausgebildet ist, um ein Einfalten eines Zitzengummis in jedem der Melkbecher in gesteuerter Weise zu bewirken. Schließlich umfasst die Melkanlage eine Aktuatorvorrichtung gemäß einer der vorhergehenden Ausführungsformen.

D. h. die erfindungsgemäße Melkanlage weist eine Aktuatorvorrichtung auf, die in der Lage ist, zusätzlich zu der konventionellen Pulsatoreinrichtung eine Bewegung des Melkgeschirrs am Euter zu bewirken, um somit den Melkvorgang durch zusätzliche Stimulation und/oder Verändern des Neigungswinkels des Melkgeschirrs effizienter zu gestalten. Durch die Aktuatorvorrichtung lassen sich u. a. die zuvor aufgeführten Vorteile erreichen.

In einer weiteren Ausführungsform ist eine Zugvorrichtung zur Einstellung eines Neigungswinkels der Melkbecher am Euter vorgesehen, wobei die Aktuatorvorrichtung mit der Zugvorrichtung mechanisch gekoppelt ist. Mit einer entsprechenden Anordnung lässt sich nicht nur eine effizientere Stimulation erreichen, sondern auch eine automatisierte Einstellung der Neigung des Melkgeschirrs am Euter.

In einer weiteren vorteilhaften Ausführungsform weist die Melkanlage eine Steuerung auf, die zumindest funktionell mit der Aktuatorvorrichtung verbunden und ausgebildet ist, diese zur einer gesteuerten Bewegung des Aktuatorelements zu veranlassen.

Das Vorsehen einer entsprechenden Steuerung erlaubt somit ein hohes Maß an Flexibilität bei der Einstellung einer gewünschten Stimulationsbewegung. Beispielsweise kann ein vorgegebener Stimulationsablauf in der Steuerung implementiert sein, so dass in zuverlässiger Weise ein entsprechende Stimulationsprogramm bei jedem Tier in automatisierter Weise abläuft. In anderen Beispielen kann die Steuerung so ausgebildet sein, dass sich der Stimulationsablauf in einfacher Weise abändern lässt, so dass tierspezifische Eigenheiten und/oder Ereignisse im Melkvorgang berücksichtigt werden können. Hierbei kann die Steuerung in einer beliebigen Komponente der Melkanlage, beispielsweise der Aktuatorvorrichtung enthalten sein oder diese kann als Einzelgerät vorliegen, die mit der Aktuatorvorrichtung verbunden ist. In einer Ausführungsform kann dazu eine drahtlose Kommunikationseinrichtung in der Steuerung und der Aktuatorvorrichtung vorgesehen sein, so dass eine unkomplizierte Anbindung der Steuerung stattfinden kann. Beispielsweise kann die Aktuatorvorrichtung so ausgebildet sein, dass diese einen vorgegebenen Ablauf folgt und nur bei Bedarf durch einen von der Steuerung drahtlos übermittelten Befehl eine entsprechende Änderung im Bewegungsablauf vornimmt. Auf diese Weise kann eine einzelne Person den Melkvorgang für eine Vielzahl von Tieren überwachen und in ferngesteuerter Weise in den entsprechenden Melkvorgang eingreifen, wenn beispielsweise eine Vielzahl von Melkgeschirren in Kombination mit Aktuatorvorrichtungen vorgesehen sind. Dabei kann jeder einzelnen Aktuatorvorrichtung eine einzigartige Kodierung zugeordnet sein, so dass mittels der Steuerung in gezielter Weise auf eine ganz spezielle Aktuatorvorrichtung zugegriffen werden kann. Beispielsweise kann der Melker beobachten, dass die vorderen Euterviertel eines Tieres bereits relativ leergemolken sind, während die hinteren Euterviertel noch einen deutlich höheren Füllgrad zeigen, so dass der Melker dann durch einen entsprechend drahtlos übermittelten Befehl an die entsprechende Aktuatorvorrichtung beispielsweise die Neigung des Melkgeschirrs so ändern kann, dass die Zitzen der hinteren Euterviertel eine höhere mechanische Belastung erfahren. Selbstverständlich können auch andere Verfahrensabläufe durch eine drahtlose Anbindung einer Steuereinrichtung ausgeführt werden, etwa das Einstellen der stimulierenden Bewegung durch Wählen einer gewünschten Frequenz und/oder Intensität.

In einer weiteren vorteilhaften Ausführungsform weist die Melkanlage eine Sensoreinrichtung zur Erfassung einer für den Melkvorgang relevanten Eigenschaft auf.

Mittels einer derartigen Sensoreinrichtung gelingt es, den Melkvorgang noch effizienter zu gestalten, da zumindest zeitweise entsprechende Informationen aus der Sensoreinrichtung verfügbar sind. Z. B. kann die Sensoreinrichtung Eigenschaften in Hinblick auf die Milchqualität und/oder Milchmenge und/oder den Erregungszustand des Tieres und/oder die Art oder Intensität des Melkgeschirrs am Euter und dergleichen erfassen.

In einer weiteren vorteilhaften Ausführungsform ist die Steuerung ausgebildet, ein Sensorsignal der Sensoreinrichtung zu empfangen und die Aktuatorvorrichtung auf der Grundlage des Sensorsignals zu steuern. Auf diese Weise wird eine äußerst effiziente Nutzung der erfindungsgemäßen Aktuatorvorrichtung erreicht, da die Bewegung des Melkgeschirrs am Euter in individueller Weise in Abhängigkeit des aktuellen Zustands angepasst wird.

In einer weiteren vorteilhaften Ausführungsform ist die Steuerung funktionell mit der Pulsatoreinrichtung verbunden und so ausgebildet, um den Betrieb der Pulsatoreinrichtung zu steuern. Mit dieser Ausführungsform lässt sich eine Koordinierung der Funktion der Pulsatoreinrichtung und der Aktuatorvorrichtung erreichen, so dass beispielsweise während der Vorstimulationsphase ein nicht gewünschtes Abmelken der Zisternenmilch verhindert werden kann.

In einer weiteren vorteilhaften Ausführungsform sind die Sensoreinrichtung und die Steuerung so ausgebildet, dass diese in drahtloser Weise kommunizieren können. Auf diese Weise lässt sich eine unkomplizierte Verbindung der Sensoreinrichtung und der Steuereinrichtung erreichen, so dass im praktischen Einsatz ein hohes Maß an Bedienerfreundlichkeit erreicht wird. Hierbei kann in einigen Ausführungsformen die Sensoreinrichtung so gestaltet sein, dass diese eine entsprechende Energieversorgung aufweist, die einen Betrieb über eine lange Zeitdauer hinweg ermöglicht, ohne dass Wartungsarbeiten an der Sensoreinrichtung auszuführen sind. Beispielsweise kann eine kleine Wandlereinrichtung, beispielsweise in Form einer elektromagnetischen Wandlereinrichtung, vorgesehen sein, die zur Umwandlung, beispielsweise mechanischer Bewegungsenergie in elektrische Energie ausgebildet ist, um damit zumindest einen Teil des Energiebedarfs der Sensoreinrichtung zu decken.

In einer weiteren Ausführung ist die Sensoreinrichtung ausgebildet, ein für den Status des Melkvorgangs und/oder den Stimulationszustand des Tieres repräsentatives Sensorsignal zu erzeugen. Mittels einer entsprechenden Sensoreinrichtung lässt sich somit die Stimulation des Tieres mittels der Aktuatorvorrichtung in sehr individueller Weise durchführen. Beispielsweise kann die Vorstimulation solange durchgeführt werden, bis der gewünschte Erregungszustand des Tieres erreicht ist, wobei auch während des Melkvorganges der Zustand des Tieres überwacht und ggf. durch eine verstärkte oder eine geänderte Stimulation wieder auf ein gewünschtes Niveau angehoben werden kann. Auf diese Weise lässt sich ein höherer Ausmelkungsgrad in Verbindung mit einer verkürzten Gesamtmelkzeit erreichen. Um beispielsweise den Status des Melkvorgangs zu überwachen, kann die Sensoreinrichtung einen Milchmengenmesser und/oder einen Milchqualitätsmesser, beispielsweise in Form eines Instruments zur Bestimmung des Milchflusses, des Salzgehalts, etc., und dergleichen aufweisen. Vorteilhafterweise ist der Milchflusssensor für eine hohe Abtastrate oder ein nahezu kontinuierliches Messen ausgelegt, so dass die zuvor beschriebenen Entspannungsrhythmen erfasst werden können, die einen Rückschluss auf die Muskelspannung und damit Stimulationswirkung zulassen oder direkt zur Steuerung des Stimulationsvorgangs verwendet werden können. Um den Stimulationszustand des Tieres im Hinblick auf andere Verhaltensweisen zu überwachen bzw. zu erfassen kann die Sensoreinrichtung entsprechende Sensorelemente aufweisen, die beispielsweise die Tritthäufigkeit des Tieres während des Melkvorgangs erkennen, den Neigungszustand des Schwanzes erfassen, da häufig das Tier bei Erreichen einer gewissen Melkbereitschaft den Schwanz anhebt, den Zustand der Erregungszustand der Zitzen erkennen, und dergleichen. Sensoren für die Trittbelastung und die Neigung des Schwanzes können beispielsweise in einfacher Weise mittels elastischen Bändern an den Beinen bzw. den Schwanz angebracht werden und sind vorzugsweise als drahtlose Sensoreinrichtungen ausgebildet, so dass die Datenübertragung zu der Steuereinrichtung problemlos möglich ist. Entsprechende Sensoreinrichtungen können auch langfristig an dem entsprechenden Tier angebracht werden und sind dabei vorzugsweise so gestaltet, dass eine langfristige Energieversorgung vorhanden ist, so dass auch entsprechende Daten ggf. für andere Zwecke gesammelt und verwendet werden können.

In einer weiteren Ausführungsform ist die Sensoreinrichtung so ausgebildet, um eine Bewegung des Melkgeschirrs oder eines Teiles des Melkgeschirrs zu erfassen. Auf diese Weise lässt sich die tatsächlich durch die Bewegung des Aktuatorelements, das mit der flexiblen Komponente gekoppelt ist, am Melkgeschirr erreichte Bewegung überwachen, so dass auf Grund der erfassten Bewegung dann eine entsprechende Anpassung der Aktuatorbewegung möglich ist. Dazu können geeignete Geschwindigkeits-, Beschleunigungs-, Neigungssensoren und dergleichen verwendet werden.

Vorteilhafterweise ist die Steuerung so ausgebildet, um das Aktuatorelement auf der Grundlage der erfassten Bewegung zu steuern.

In einer weiteren vorteilhaften Ausführungsform ist die Steuerung ausgebildet, die durch das Aktuatorelement am Melkgeschirr bewirkte Auslenkung für zumindest zwei unterschiedliche Bewegungen des Aktuatorelements abzuschätzen und die Ansteuerung des Aktuatorelements auf der Grundlage der Abschätzung auszuführen. Damit kann eine für die Stimulation günstige Bewegungsart durch die Steuerung erkannt werden und die Aktuatorvorrichtung entsprechend angesteuert werden. Insbesondere können dadurch Unterschiede des mechanischen Verhaltens bei der Erzeugung einer Bewegung des Melkgeschirrs am Euter auf Grund unterschiedlicher Komponenten und Gegebenheiten, etwa unterschiedliche Längen der Milchschläuche, unterschiedliche Milchsammelstücke, etc., ausgeglichen werden.

Diese und weitere vorteilhafte Ausführungsformen können den angefügten Patentansprüchen sowie der folgenden detaillierten Beschreibung entnommen werden.

Es werden nunmehr weitere beispielhafte Ausführungsformen mit Bezug zu den begleitenden Zeichnungen beschrieben, in denen:
- Fig. 1a: schematisch ein konventionelles Melkgeschirr zeigt;
- Fig. 1b: einen Ausschnitt eines konventionellen Melkstandes mit einem konventionellen Melkgeschirr in Betriebsstellung darstellt;
- Fig. 2a: schematisch einen Melkstand mit einer Haltevorrichtung in perspektivischer Ansicht gemäß der vorliegenden Ausführungsform zeigt;
- Fig. 2b bis 2e: schematisch weitere Ausführungsformen der erfindungsgemäßen Haltevorrichtung mit beispielhaften Führungsvorrichtungen zum Führen von Milchschläuchen zeigen;
- Fig. 2f und 2g: beispielhafte Ausführungsformen zum individuellen Ein- und Ausschalten des Betriebsvakuums zeigen;
- Fig. 2h: schematisch eine Abschaltvorrichtung zur individuellen Abschaltung des Betriebsvakuums bei Einbruch des Melkvakuums an der Zitze darstellt;
- Fig. 3a: einen Melkstand mit einer erfindungsgemäßen Haltevorrichtung, die ferner eine Stimulationseinrichtung aufweist, zeigt;
- Fig. 3b bis 3e: schematisch weitere Ausführungsformen einer erfindungsgemäßen Haltevorrichtung mit entsprechenden Stimulationseinrichtungen darstellt;
- Fig. 4a und 4b: schematisch eine Reinigungsvorrichtung zeigen, die an der erfindungsgemäßen Haltevorrichtung vorgesehen ist;
- Fig. 4c: die Haltevorrichtung schematisch in einer Melkposition und in einer Reinigungsposition zeigt, wobei in der Reinigungsposition Restflüssigkeit aus den Melkbechern laufen kann und Anschluss an externe Reinigungsvorrichtungen möglich ist;
- Fig. 4d und 4e: die Haltevorrichtung schematisch in einer Position zur Zwischendesinfektion zeigen;
- Fig. 4f: die Haltevorrichtung zeigt, wobei die Orientierung der Melkbecher fixiert ist;
- Fig. 4g: Varianten für verschiedene Schlauchquerschnittsprofile zeigt, so dass eine Verdrehung der Schlauchabschnitte in der Haltevorrichtung reduziert wird;
- Fig. 5: schematisch eine weitere Ausführungsform der erfindungsgemäßen Haltevorrichtung zeigt, wobei Sensorelemente und eine Steuerelektronik vorgesehen sind,
- Fig. 6a: eine Melkanlage mit einer erfindungsgemäßen Aktuatorvorrichtung gemäß anschaulicher Ausführungsformen zeigt;
- Fig. 6b: einen Teil einer Melkanlage darstellt, wobei die Aktuatorvorrichtung zur Einstellung eines Neigungswinkels des Melkgeschirrs verwendet ist; und
- Fig. 6c bis 6e: anschauliche Beispiele von Aktuatorvorrichtungen mit entsprechenden Aktuatorelementen zeigen.

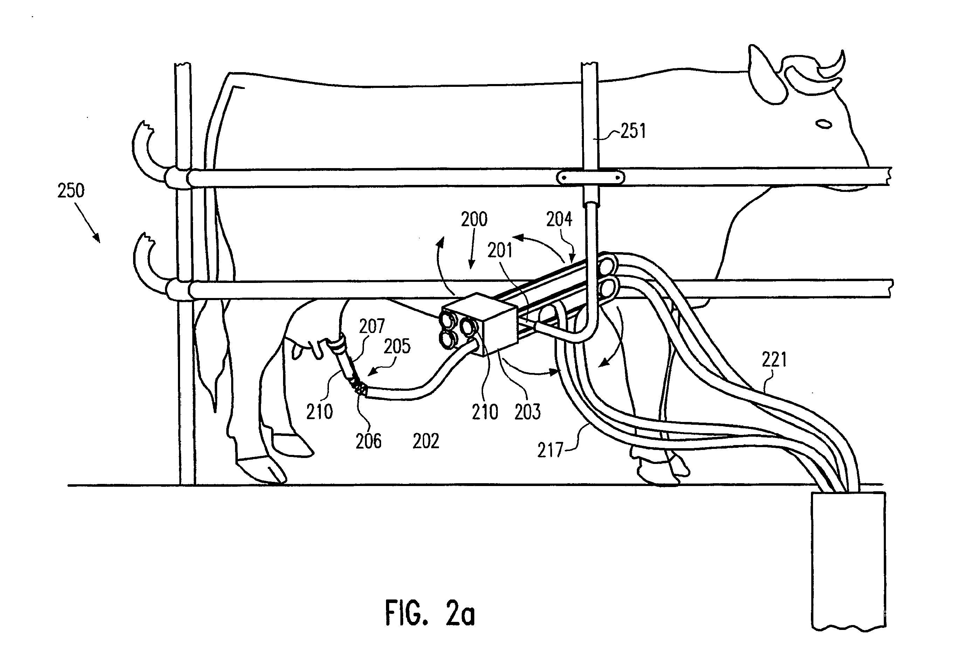

Fig. 2a zeigt schematisch in perspektivischer Ansicht einen Melkstand 250 mit einem Träger 251, der ausgebildet ist, Milchleitungen 217 und Steuerleitungen 221 zu halten und/oder zu führen. Dazu kann der Träger 251 auch entsprechende Vorrichtungen in Form von Seilzügen, Befestigungsschrauben und dergleichen aufweisen, so dass die Milchleitung 217 und die Steuerleitungen 221 entsprechend befestigt werden können. Beispielsweise kann der Träger 251 so ausgebildet sein, wie dies auch mit Bezug zu Fig. 1b beschrieben ist. An dem Träger 251 ist eine Haltevorrichtung 200 angebracht, wobei in bevorzugten Ausführungsformen die Haltevorrichtung 200 zumindest zwischen zwei Positionen hin und her bewegbar ist. Dazu weist die Haltevorrichtung 200 eine Befestigungseinrichtung 201 auf, die in der dargestellten Ausführungsform zur schwenkbaren Befestigung der Haltevorrichtung 200 an dem Träger 251 ausgebildet ist. Beispielsweise kann die Befestigungseinrichtung 201 ein Kugelkopfgelenk aufweisen, das in einer Vielzahl von Positionen fixierbar ist, so dass die Haltevorrichtung 200 in einfacher Weise in zwei oder mehreren Stellungen orientierbar ist. Beispielsweise kann eine bevorzugte Betriebsposition der Haltevorrichtung 200 so sein, dass Melkbecher 210, wenn sie von der Halteeinrichtung 200 in einer relativ zueinander fixierten Position während einer ersten Betriebsphase gehalten werden, im Wesentlichen in Bezug auf ihre Längsachse horizontal angeordnet sind. In diesem Zusammenhang sei darauf hingewiesen, dass der Begriff erste Betriebsphase als eine Phase zu verstehen ist, die beispielsweise unmittelbar vor einem Melkvorgang auftritt, wobei alle Melkbecher 210 von der Haltevorrichtung 200 gehalten werden, bevor einer oder mehrere davon durch manuelle Einwirkung eines Bedieners relativ zur Haltevorrichtung 200 bewegt werden. Obwohl die nahezu horizontale Orientierung der Melkbecher 210 in der Haltevorrichtung 200 vorteilhaft sein kann in Hinblick auf Verschmutzung durch aufgewirbelte Verschmutzungsteilchen, die bei der nahezu horizontalen Anordnung kaum in das Innere der Melkbecher 210 eindringen können, so kann in anderen Ausführungsformen die Haltevorrichtung 200 durchaus so orientierbar sein, dass eine beliebige gewünschte Neigung der Melkbecher 210 in der ersten Betriebsphase erreichbar ist. Die Haltevorrichtung 200 ist ferner so ausgestaltet, dass auf die Melkbecher 210 in der ersten Betriebsphase manuell zugegriffen werden kann, so dass diese dann relativ zu der Haltevorrichtung 200 und relativ zu mindestens einem weiteren Melkbecher 210 in mehreren Richtungen bewegbar sind. Die Phase, wenn alle Melkbecher 210 aus der Haltevorrichtung 200 entnommen sind, soll im Weiteren als zweite Betriebsphase bezeichnet werden.

Ferner weist in der gezeigten Ausführungsform die Haltevorrichtung 200 einen Behälter 203 auf, der so gestaltet ist, um die Melkbecher 210 zumindest teilweise aufzunehmen, wobei dennoch ein manuelles Zugreifen auf die einzelnen Melkbecher 201 möglich ist. Der Behälter 203, der beispielsweise aus Kunststoff hergestellt sein kann, bietet einen erhöhten Schutz gegenüber Verschmutzungen und mechanischen Einwirkungen im Vergleich zu "offenen" Konstruktionen, in denen die Melkbecher 210 beispielsweise relativ großflächig exponiert sein können. Der Behälter 203 kann beispielsweise auch bereichsweise oder insgesamt aus transparentem Kunststoffmaterial hergestellt sein, so dass stets der Zustand der Melkbecher 210 auch in der ersten Betriebsphase inspizierbar ist.

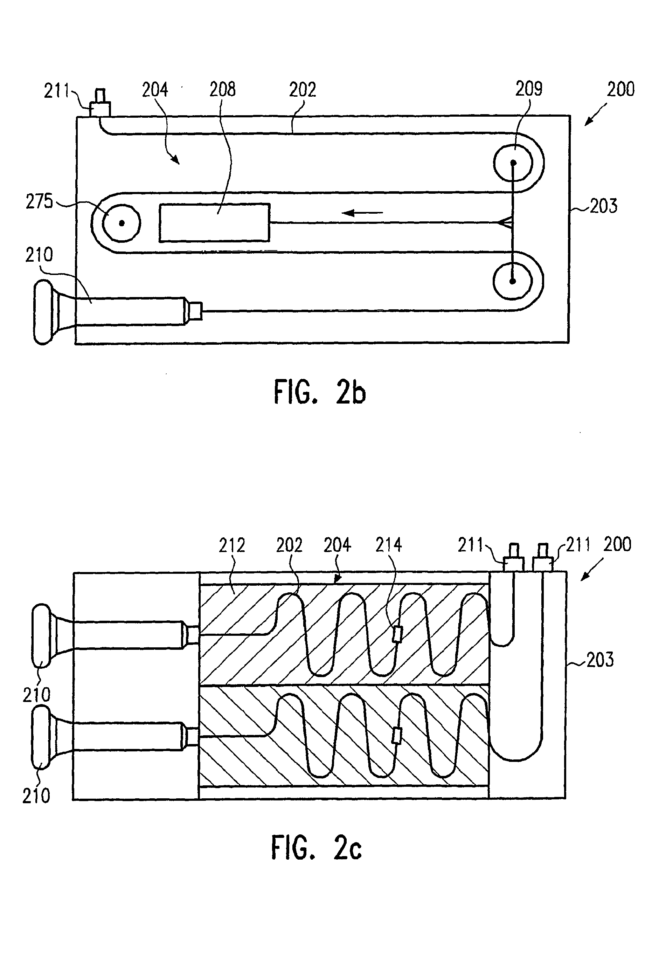

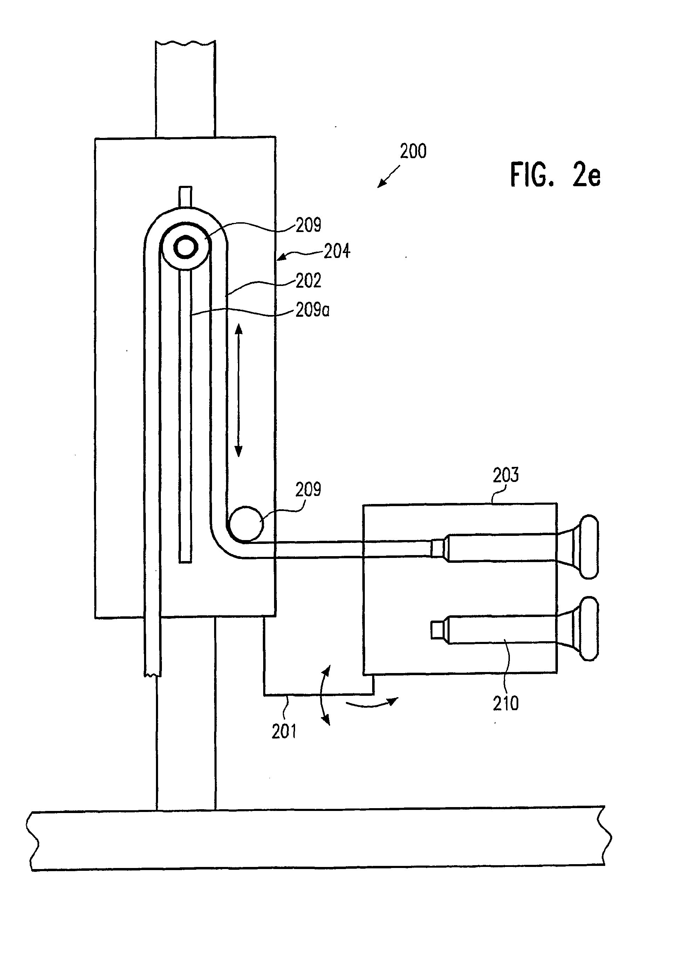

Ferner ist in vorteilhaften Ausführungsformen eine Führungsvorrichtung 204 vorgesehen, die zum Führen der Milchschläuche 202 dient, wenn die Melkbecher 210 von der ersten Betriebsphase in die zweite Betriebsphase überführt werden sollen. Die Führungsvorrichtung 204 kann dazu entsprechende Einrichtungen in Form von Zylindern, Führungsschienen, Rollen, und dergleichen aufweisen, so dass die Melkbecher 210 nach Entnahme aus der Halterung 200 relativ zu dieser bewegbar sind, wobei der Aktionsradius von der Ausbildung der Führungsvorrichtung 204 abhängt. Weitere Ausführungsformen der Führungsvorrichtung 204 werden mit Bezug zu den Fig. 2b bis 2d detaillierter erläutert. Des weiteren ist in der gezeigten Ausführungsform eine Vakuumschalteinrichtung 205 vorgesehen, die ein individuelles Einschalten und Ausschalten des Betriebsvakuums in dem Melkbecher 210 und ggf. in gewissen Abschnitten der Milchleitung 202 ermöglicht. In der gezeigten Ausführungsform ist beispielsweise ein steuerbares Ventilelement 206 vorgesehen, das mittels einem Bedienelement 207 gesteuert werden kann. Das Ventilelement 206 kann ein pneumatisch betriebenes oder ein elektrisch betriebenes Ventil sein, wobei das Bedienelement 207 dann eine entsprechende Ausbildung aufweist, um das Ventilelement 206 bei Bedarf zu betätigen. Die Vakuumschalteinrichtung 205 kann vollständig oder teilweise auch an der Halterung 200 vorgesehen sein, wie dies auch detaillierter mit Bezug zu den Fig. 2e bis 2d erläutert ist.

Während der bestimmungsgemäßen Benutzung des Melkstandes 250 kann beispielsweise mit Hilfe des Trägers 251 grundsätzlich eine gewünschte Höhe für die Haltevorrichtung 200 eingestellt werden. Ferner wird dann mittels der Befestigungsvorrichtung 201 eine gewünschte Orientierung der Haltevorrichtung 200 gewählt, die einen effizienten Melkvorgang ermöglicht. Beispielsweise kann, wie in Fig. 2a gezeigt ist, die Haltevorrichtung 200 so orientiert werden, dass die Längsachsen der Melkbecher 210 im Wesentlichen horizontal ausgerichtet sind. Die entsprechenden Justierarbeiten können von einem Bediener in einfacher Weise durchgeführt werden, da das Gewicht der Haltevorrichtung 200 einschließlich dem Melkbecher 210 von dem Träger 251 aufgenommen wird. Nach Einstellung der gewünschten Orientierung der Haltevorrichtung 200, in der die Melkbecher 210 in der ersten Betriebsphase relativ zueinander fixiert von der Halterung gehalten werden, kann ein Bediener jeden einzelnen Melkbecher 210 manuell an eine Zitze anlegen, wobei die Führungsvorrichtung 204 so verfährt, dass die entsprechende erforderliche Länge der Milchschläuche 202 bereitgestellt wird. Bei der Entnahme der Melkbecher 210 aus der Halterung 200 kann die Vakuumschalteinrichtung 205 so aktiviert werden, dass beispielsweise nur unmittelbar vor dem Anlegen des Melkbechers 210 an der Zitze das Betriebsvakuum an dem Melkbecher 210 anliegt, so dass nur sehr kurzfristig Atmosphärenluft eingesaugt wird. In anderen Ausführungsformen kann die Vakuumschalteinrichtung 205 so ausgebildet sein, dass nach Entnahme eines Melkbechers 210 das Betriebsvakuum automatisch an dem Melkbecher 210 angelegt wird. Dazu kann ein entsprechendes Betätigungselement so vorgesehen sein, dass beispielsweise das Einschalten des Betriebsvakuums nach Herausziehen einer gewissen Länge des Milchschlauches 202 aktiviert wird. Eine entsprechende Ausgestaltung der Vakuumschalteinrichtung 205 in der gezeigten Form oder in der automatisierten Form ermöglicht das Anlegen des Melkbechers 210 in komfortabler Weise mit nur einer Hand. Ferner wird durch die erfindungsgemäße Haltevorrichtung 200 erreicht, dass das Anlegen der Melkbecher 210, die in Verbindung mit den Milchschläuchen 202 und der Haltevorrichtung 200 ein Melkgeschirr bilden, das beispielsweise das in Fig. 1 a gezeigte konventionelle Melkgeschirr 100 ersetzt, eine deutliche Entlastung des Bedieners gewährleistet ist, da lediglich das Gewicht des einzelnen Melkbechers 210 zu handhaben ist. Nach Beendigung des Melkvorganges können die Melkbecher 210 individuell abgenommen werden, wobei mittels der Vakuumschalteinrichtung 205 das Melkvakuum individuell abgeschaltet wird, so dass die Melkbecher abgenommen werden können, ohne dass die Gefahr des Abfallens der noch nicht abgenommenen Melkbecher besteht. Durch das individuelle Anlegen und Abnehmen der einzelnen Melkbecher 210 wird nicht nur eine deutliche Arbeitserleichterung erreicht, sondern die Gefahr einer Verschmutzung bzw. Kontaminierung der Melkbecher 210 sowie der Milchschläuche 202 wird ebenso deutlich reduziert, da die Gefahr einer Bodenberührung der Melkbecher 210 oder der Milchschläuche 202 minimiert wird.

Fig. 2b zeigt schematisch einen Teil der Haltevorrichtung 200 in einer Seitenansicht, wobei lediglich ein Melkbecher 210 dargestellt ist. In dieser Ausführungsform kann die Haltevorrichtung 200 den Behälter 203 in einer Form aufweisen, die die Führungsvorrichtung 204 vollständig aufnehmen kann, so dass sowohl die Melkbecher 210 als auch die Führungsvorrichtung 204 gegen Umgebungseinflüsse in hohem Maße geschützt sind. In anderen Ausführungsformen kann der Behälter 203 in beliebig anderer Weise gestaltet sein, so dass lediglich Teile der Führungsvorrichtung 204 und der Melkbecher 210 abgeschirmt sind. Die Führungsvorrichtung 204 umfasst in dieser Ausführungsform gekoppelte Rollen 209, die gemeinsam in Pfeilrichtung beispielsweise mittels eines Zylinders 208, der mit den Rollen 209 gekoppelt ist, verschiebbar sind. Ein Umlenkelement 275 ist vorgesehen, um den Milchschlauch 202 relativ reibungsarm zu führen. Durch die Anordnung mit einer doppelten Umlenkung des Milchschlauches 202 kann eine relativ große Länge des Milchschlauches 202 bei moderat geringer Baulänge der Haltevorrichtung 200 erreicht werden. In anderen Ausführungsformen kann eine einzelne Rolle 209 vorgesehen sein, um die erforderliche Länge des Milchschlauchs 202 bereitzustellen. Ferner können beliebig andere Mittel vorgesehen sein, um eine exakte Führung der Rolle bzw. Rollen 209 zu ermöglichen. Beispielsweise kann eine entsprechende Schiene anstelle des Zylinders 208 vorgesehen sein, in der eine Achse der Rolle 209 in Pfeilrichtung gleiten kann. Des weiteren kann die Führungsvorrichtung 204 ein Arretierungsmittel (nicht gezeigt) aufweisen, das in einer oder mehreren vorgesehenen Positionen einrastet, um somit ein weiteres Herausziehen des Milchschlauches 202 zu verhindern. Beispielsweise kann die in Fig. 2b gezeigte Stellung eine erste Position repräsentieren, in der die Führungsvorrichtung 204 den Milchschlauch 202 arretiert, so dass die Haltevorrichtung 200 beliebig geneigt oder geschwenkt werden kann, ohne dass ein unbeabsichtigtes Herausgleiten der Melkbecher 210 ermöglicht wird. Vor dem unmittelbaren Anlegen der Melkbecher 210 an die Zitze kann dann die Arretierung deaktiviert werden. In einer anderen Ausführungsform findet eine Arretierung statt, nachdem eine gewisse Länge des Milchschlauches 202 aus der Halterung 200 herausgeführt ist, so dass beispielsweise die Führungsvorrichtung 204 so ausgebildet sein kann, dass das Herausnehmen des Melkbechers 210 gegen eine gewisse Vorspannung der Führungseinrichtung 204 durchgeführt werden muss, die dann durch Arretierung aufgehoben wird. Nach Beendigung des Melkvorganges kann dann die Arretierung deaktiviert werden, so dass durch die Vorspannung der Führungseinrichtung 204 das Zurückführen des Melkbechers 210 unterstützt wird.

Ferner weist die Haltevorrichtung 200 mehrere Anschlüsse 211 auf, die beispielsweise zur Aufnahme von Milchschläuchen und/oder Steuerleitungen dienen. Dadurch können die Milchleitungen 217 und Steuerleitungen 221 jederzeit von der Haltevorrichtung 200 abgekoppelt werden, ohne dass ein mechanischer Eingriff in die Haltevorrichtung 200 erforderlich ist. Beispielsweise können die Milchleitungen 217 und die Steuerleitung 221 entsprechende Anschlusselemente aufweisen, die die entsprechenden Leitungen beim Abkoppeln von den Anschlüssen 211 dicht abschließen. Auf diese Weise kann die Haltevorrichtung 200 an die Milchleitungen 217 und Steuerleitungen 221 an- bzw. abgekoppelt werden, ohne dass beispielsweise der Betrieb anderer Melkgeschirre mit entsprechenden Haltevorrichtungen 200 beeinflusst wird. Ferner ist es dadurch möglich, dass die Schlauchabschnitte 202 in der Haltevorrichtung 200 bei Bedarf separat gereinigt werden können, ohne dass die Milchleitung 217 mitgereinigt werden müssen.

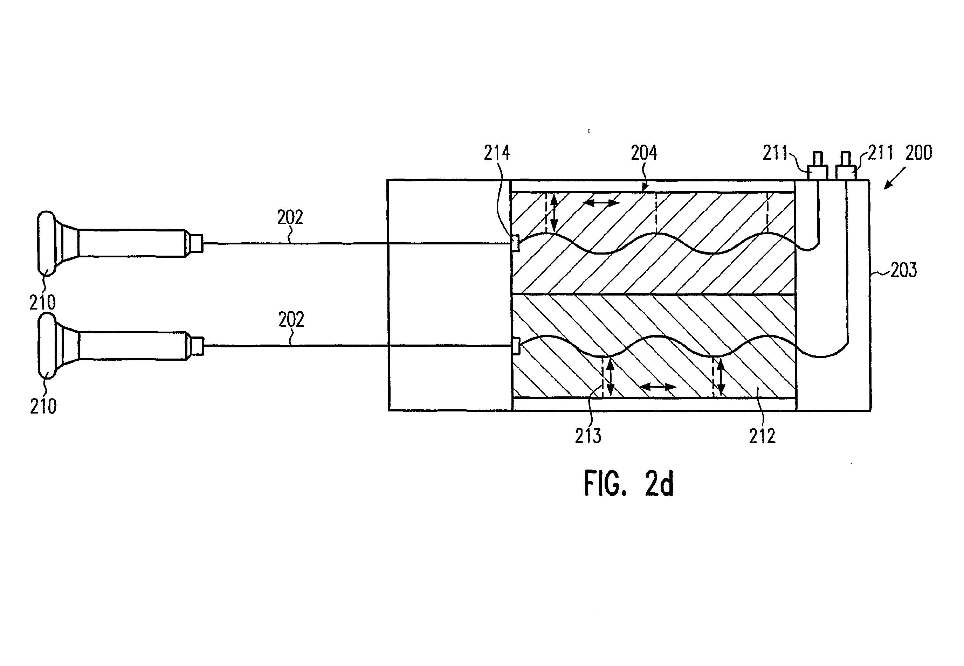

Die Fig. 2c und 2d zeigen schematisch eine Seitenansicht einer weiteren Ausführungsform der Haltevorrichtung 200, wobei die Führungsvorrichtung 204 mechanisch in sehr einfacher Weise ausgeführt ist, so dass sich hier Vorteile in Hinblick auf Herstellungskosten, Wartung, Verschleiß und dergleichen ergeben. In Fig. 2c ist die Haltevorrichtung 200 in der ersten Betriebsphase gezeigt, d. h. die Melkbecher 210 werden in einer zueinander fixierten Position gehalten. Die Führungsvorrichtung 204 kann dabei eine Kammer 212 für die Aufnahme des zugehörigen Schlauchabschnitts 202 aufweisen, der darin mit entsprechend vielen und engen Windungen angeordnet ist, wie dies in der Figur dargestellt ist.

Fig. 2d zeigt die Haltevorrichtung 200 während der zweiten Betriebsphase, wobei die Melkbecher 210 und damit die Schlauchabschnitte 202 teilweise aus der Haltevorrichtung herausgeführt sind. Vorzugsweise ist ein Stoppelement 214 vorgesehen, so dass die Länge des herausgeführten Schlauchabschnitts 202 so begrenzt wird, dass eine schlangenförmige Anordnung des Schlauchabschnitts 202 in der Kammer 212 beibehalten wird. Auf diese Weise ist sichergestellt, dass beim Zurückführen der Melkbecher 210 in die Halterung 200 in etwa wieder die Ausgangsposition erreicht wird, wie sie in Fig. 2c gezeigt ist. Ferner können elastische Elemente 213, beispielsweise in Form von Bändern, vorgesehen sein, die an den Schlauchabschnitten 202 befestigt sind und die in der Kammer 212 vor und zurückgleiten können, so dass mittels dieser elastischen Elemente 213 eine gewisse rücktreibende Kraft auf die Schlauchabschnitte 202 in der zweiten Betriebsphase ausgeübt wird, um damit das Zurückführen in die Haltevorrichtung 200 zu unterstützen.

In anderen Ausführungsformen (nicht gezeigt) kann die Haltevorrichtung 200 andere Einrichtungen in der Führungseinrichtung 204 aufweisen, die das Herausziehen der Schlauchabschnitte 202 in geeigneter Weise zulassen. Beispielsweise kann für jeden Schlauchabschnitt 202 eine zugeordnete Schlauchtrommel vorgesehen sein, die ggf. eine entsprechende Arretierungseinrichtung aufweist und bei Bedarf das Zurückführen der Schlauchabschnitte 202 durch entsprechende Vorspannung unterstützt.

Fig. 2e zeigt die Haltevorrichtung 200 mit der Führungseinrichtung 204, in der die Nachführbewegung der Schlauchabschnitte 202 im wesentlichen in vertikaler Richtung stattfindet. Zu diesem Zweck können entsprechende Rollen 209, die teilweise entlang einer Führung 209a bewegbar sind. Ferner kann in einer Ausführungsform die Befestigungsvorrichtung 201 so ausgebildet sein, dass der Behälter 203 mit den Melkbechern 210 schwenkbar ist, so dass nur geringe Kräfte erforderlich sind, um die Melkbecher 210 in eine gewünschte Position zu bringen. Vorteilhafter Weise lässt sich der Behälter 203 mittels der Befestigungsvorrichtung 201 in eine Melkposition bringen, in der die Melkbecher 210 mit ihren Längsachsen nahezu horizontal oder mit den Öffnungen leicht nach unten weisen angeordnet sind. Bei Bedarf kann dann eine Schwenkung in eine Reinigungsposition erfolgen, in der die Melkbecher 210 für eine externe Reinigungseinrichtung zugänglich sind.

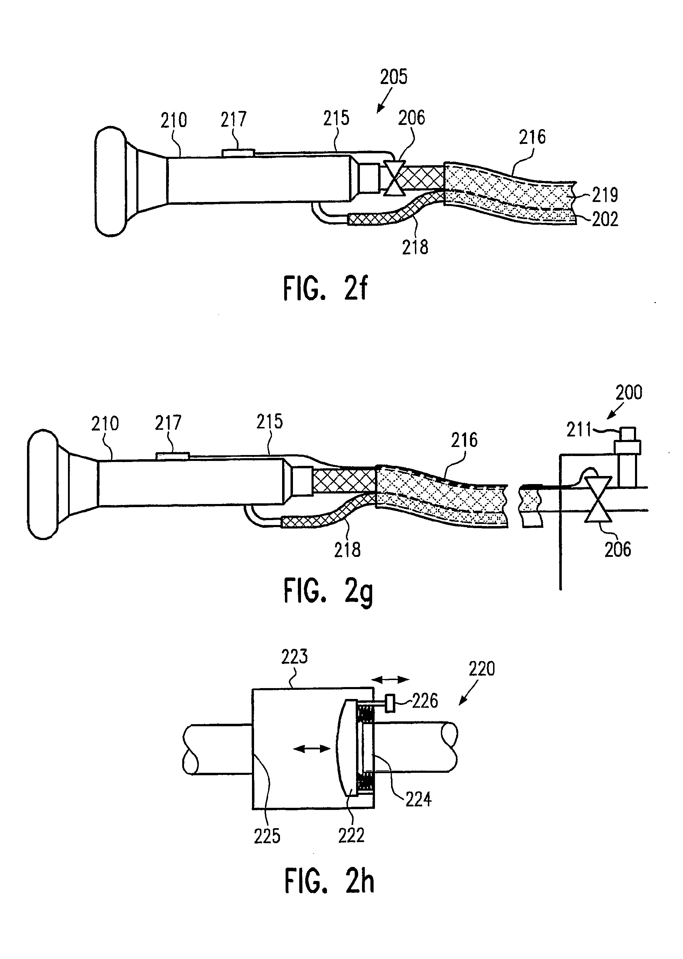

Mit Bezug zu den Fig. 2f und 2g werden nun weitere Ausführungsformen der Vakuumschalteinrichtung 205 beschrieben.

Fig. 2f zeigt schematisch den Melkbecher 210 mit der Vakuumschalteinrichtung 205, wie sie schematisch auch in Fig. 2a dargestellt ist. Das steuerbare Ventil 206 ist dabei als ein pneumatisches Ventil ausgeführt, wobei das entsprechende Bedienelement 207 mittels einer Steuerleitung 215 mit dem Ventil 206 und mit einer entsprechenden Druckluft bzw. Vakuumquelle verbunden ist. Ferner ist in der gezeigten Ausführungsform der Schlauchabschnitt 202, der hier eine Pulsatorleitung 218, eine Milchleitung 219 und die Steuerleitung 215 repräsentieren soll, von einer Ummantelung 216 umgeben, so dass ein erhöhter Schutz und ein vereinfachtes Handtieren mit den entsprechenden Leitungen erreicht wird. Die Ummantelung 216 kann beispielsweise in integraler Weise mit den entsprechenden Leitungen 219, 218 und 215 hergestellt sein, so dass sich dadurch relativ geringe Herstellungskosten erreichen lassen. In anderen Ausführungsformen, können die entsprechenden Leitungen 218, 219 und 215 durch andere geeignete Mittel, beispielsweise Bänder, Hülsen, etc. zusammengefasst und gemeinsam geführt werden. Wie bereits erwähnt, kann in anderen Ausführungsformen die Vakuumschalteinrichtung 205 elektrisch betrieben sein, so dass die Steuerleitung 215 eine elektrische Versorgungsund Schaltleitung repräsentieren kann.

Fig. 2g zeigt eine weitere Variante, in der das Ventil 206 in der Haltevorrichtung 200 vorgesehen ist, beispielsweise in der Nähe des Anschlusses 211 oder am Anschluss 211, so dass das Ventil 206 ein stets fixierte Position innerhalb der Haltevorrichtung 200 aufweist.

In anderen Ausführungsformen kann das Ventilelement 206 in Form einer mechanisch betätigbaren Einrichtung vorgesehen sein, beispielsweise durch ein mechanisch betätigbares Ventil, durch eine Klemme, mit der ein vorgesehener Bereich des Milchschlauchabschnittes 202 gequetscht wird, oder dergleichen. Beispielsweise kann an dem Anschluss 211 ein Schieberventil vorgesehen sein, so dass der Bediener das Betriebsvakuum am Melkbecher 210 nach Bedarf ein- oder ausschalten kann.

Fig. 2h zeigt eine weitere vorteilhafte Ausführungsform, wobei eine Abschalteinrichtung 220 in Verbindung mit der Haltevorrichtung 200 vorgesehen ist. Die Abschalteinrichtung 220 ist so ausgebildet, dass bei einem plötzlich auftretenden Abfall des Betriebsvakuums im Melkbecher 210 die Milchleitung 217 (siehe Fig. 2a) zum Melkbecher 210 hin luftdicht abgeschlossen wird. In einer Ausführungsform kann dabei eine Kammer 223 in der Abschalteinrichtung 220 vorgesehen sein, in der eine vorgespannte Dichtefläche 222 bei bestehendem Melkvakuum in der Kammer 223 von einem Ausgang 224 der Milchleitung beabstandet ist, so dass ein Milchfluss durch die Kammer 223 hindurch möglich ist. Bei Eintreten von Atmosphärendruck von der Eingangsseite 225 her, was beispielsweise bei Abfall eines Melkbechers von der Zitze auftreten kann, wird dann die Dichtfläche 222 gegen die Ausgangsöffnung 224 gepresst. Ferner ist ein Betätigungselement 226 vorgesehen, das mit der Dichtfläche 222 gekoppelt ist und wodurch bei verschlossenem Zustand des Ausgangs 224 dieser geöffnet werden kann, so dass die Luft in der Kammer 223 und in der Milchleitung am Eingang 225 abgesaugt werden kann, wenn ein Melkvakuum in dem Melkbecher gewünscht wird. Die Abschalteinrichtung 220 kann zusätzlich oder alternativ zu der Vakuumschalteinrichtung 205 vorgesehen sein. Beispielsweise kann die Abschalteinrichtung 220 als Mittel zum Schalten des Betriebsvakuums verwendet werden, wobei dann in der ersten Betriebsphase die Melkbecher 210 mit Atmosphärendruck beaufschlagt sind und somit über die Dichtfläche 222 den Ausgang 224 verschlossen halten. Bei Entnahme der Melkbecher 210 und beim Anlegen an die Zitze kann dann der Bediener das Betätigungselement 226 entsprechend bedienen, so dass schließlich ein Melkvakuum und der Zitze entsteht. In anderen Ausführungsformen kann eine entsprechende Abschalteinrichtung 220 in einem Sammelstück (nicht gezeigt), das in der Haltevorrichtung 200 an einer geeigneten Position angebracht sein kann, um die einzelnen Milchflüsse der Melkbecher aufzunehmen, vorgesehen sein, so dass beim Abfall eines beliebigen Melkbechers zumindest eine gemeinsame Milchleitung gasdicht verschlossen wird.

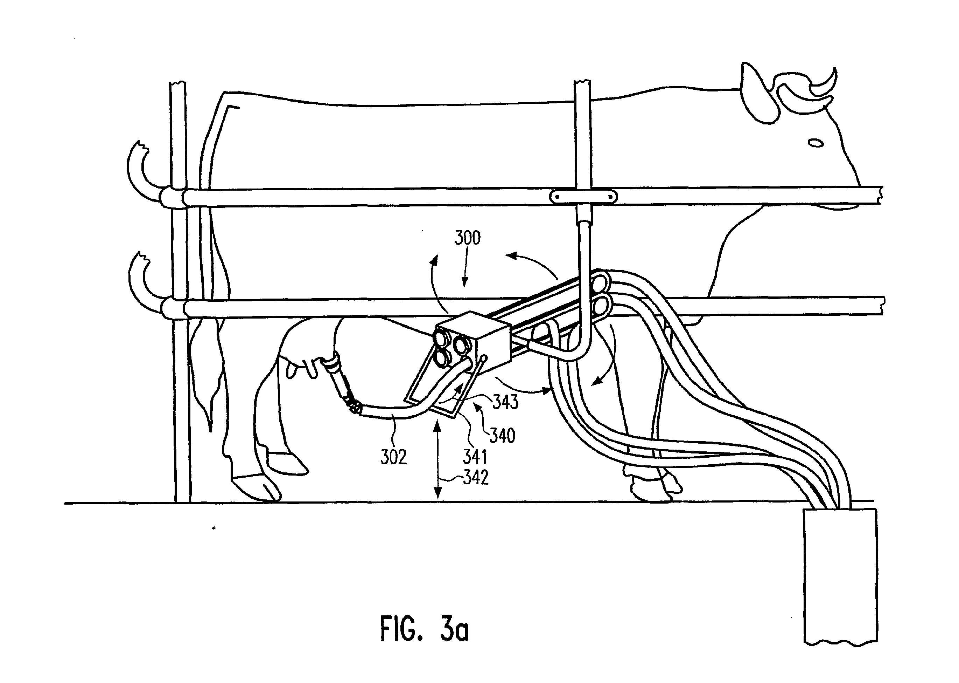

Fig. 3a zeigt schematisch eine perspektivische Ansicht einer weiteren Ausführungsform einer Haltevorrichtung 300 gemäß der vorliegenden Erfindung, die ähnlich zu der Vorrichtung 200 ist, wobei zusätzlich eine Stimulationseinrichtung 340 vorgesehen ist. Die Stimulationseinrichtung 340 kann so ausgebildet sein, dass ein Antriebselement (nicht gezeigt) mit einem Aktuatorelement 341 so gekoppelt ist, dass dieses mechanisch auf die Milchschlauchabschnitte 302 einwirken kann, um damit gewünschte Stimulationsreize auf eine Zitze auszuüben. In der gezeigten Ausführungsform liegt das Aktuatorelement 341 in Form eines Bügels vor, der zumindest mit einigen der Schlauchabschnitte 302 in Berührung ist, so dass durch eine geradlinige und/oder rotatorische Bewegung des Aktuatorelements 341 eine stimulierende Bewegung des Melkbechers 310 an der Zitze erreicht wird. Dabei kann das nicht gezeigte Antriebselement pneumatisch oder elektrische angetrieben sein, wobei vorzugsweise die Frequenz und die Intensität der mechanischen Einwirkung steuerbar ist. Beispielsweise kann eine Steuerung vorgesehen sein, die in Abhängigkeit der momentan vorherrschenden Bedingungen, d. h. Länge der Schlauchabschnitte 302, Art des Euters des Tieres, und dergleichen eine für eine effiziente Stimulation geeignete Frequenz und Amplitude ermittelt. Dazu kann beispielsweise die für eine gewünschte Amplitude erforderliche Antriebsleistung des Antriebselements in Abhängigkeit der Stimulationsfrequenz ermittelt werden, so dass die Stimulationsfrequenz durch die Steuereinrichtung auf einen Bereich festlegbar ist, der in einem für die momentan vorherrschenden Bedingungen günstigen Bereich liegt. Beispielsweise kann auf diese Weise eine der Eigenresonanzen des aus der Haltevorrichtung 300, der Stimulationsvorrichtung 340, den Schlauchabschnitten 302, den Melkbechern 310 und der Zitze des Tieres gebildeten Systems ermittelt werden und eine entsprechende Ansteuerfrequenz gewählt werden. Vorteilhaft ist es auch, einen Abstand 343 des mit dem Schlauchabschnitt 302 in Berührung kommenden Bereichs des Aktuatorelements 341 zu dem Gehäuse 303 so zu wählen, dass die verbleibende Länge des Schlauchabschnitts 302 inklusive des Melkbechers 310 kleiner ist als eine Höhe 342, so dass bei einem eventuellen Abfallen des Melkbechers 310 keine Bodenberührung stattfindet. Dazu kann das Aktuatorelement 341 so ausgebildet sein, dass dessen Orientierung und/oder Länge verstellbar ist.

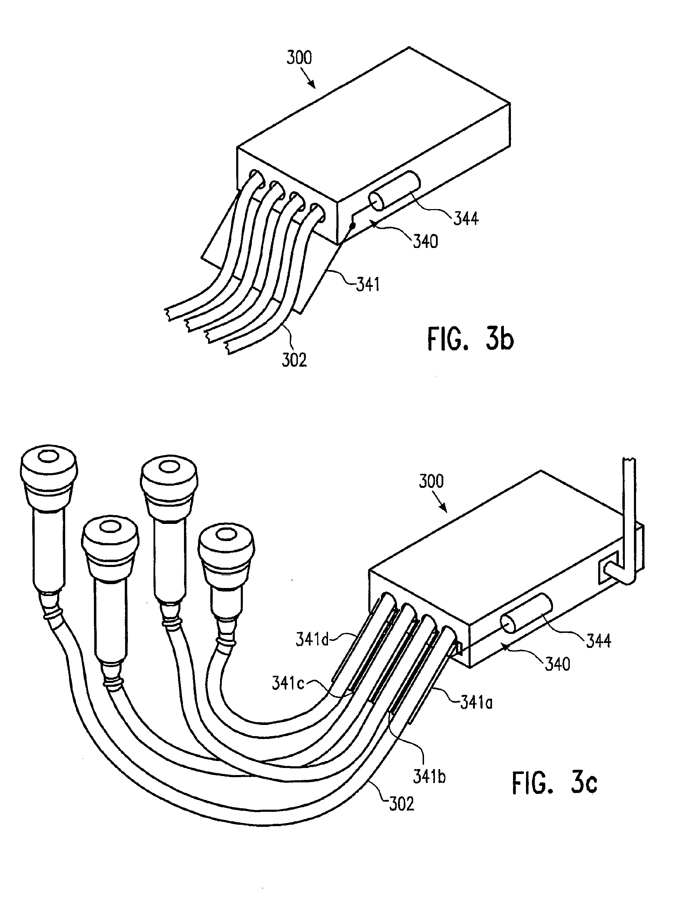

Fig. 3b zeigt schematisch die Haltevorrichtung 300 mit der Stimulationseinrichtung 340, wobei in diesem Ausführungsbeispiel die Schlauchabschnitte 302 in einer Reihe angeordnet sind, so dass das Aktuatorelement 341, das von einen Antriebselement 344 angesteuert wird, im Wesentlichen jeden der Schlauchabschnitt 302 in gleicher Weise mechanisch betätigt. Dadurch lässt sich eine ähnliche stimulierende Wirkung an jeder der Zitzen erreichen, wobei lediglich ein Antriebselement und ein gemeinsames Aktuatorelement erforderlich ist.

Fig. 3c zeigt schematisch eine weitere Ausführungsform, in der die Haltevorrichtung 300 eine Stimulationseinrichtung 340 aufweist, die so ausgebildet ist, dass jeder Schlauchabschnitt 302 individuell mechanisch betätigbar ist. Dazu weist die Stimulationseinrichtung 340 entsprechende Aktuatorelemente 341 a, ... 341 d, die mit entsprechenden Antriebselementen 344a, ... 344d gekoppelt sind. Durch diese Maßnahme ist eine zuverlässige Stimulation jeder einzelnen Zitze gewährleistet, unabhängig von der genauen Bahn, die der Schlauchabschnitt 302 von der Haltevorrichtung 300 zu der Zitze einnimmt. Prinzipiell ist es dadurch auch möglich, die Zitzen in individuell unterschiedlicher Weise zu stimulieren.

Anstelle oder zusätzlich zu den Stimulationseinrichtungen 340 können eine oder mehrere weitere mechanische Einrichtungen vorgesehen sein, die zur Führung der Schlauchabschnitte 302 verwendet werden, um beispielsweise eine verbesserte Rückführung der Schlauchabschnitte 302 zu ermöglichen und/oder um gegebenenfalls eine Bodenberührung der Melkbecher zu verhindern.

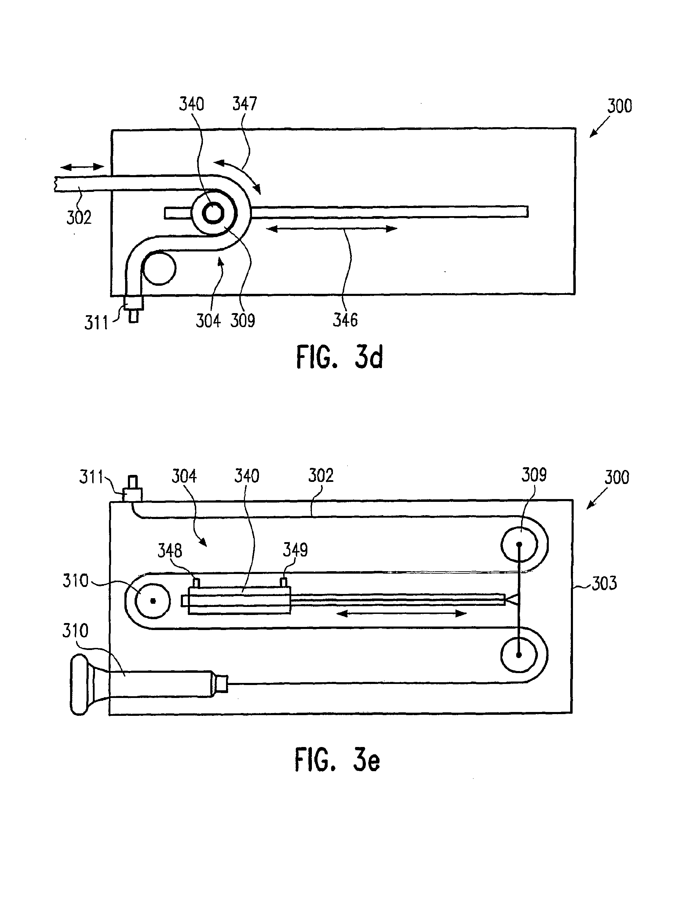

Fig. 3d zeigt schematisch eine weitere Ausführungsform der Haltevorrichtung 300, in der eine Führungsvorrichtung 304 so ausgebildet ist, dass diese auch eine Stimulationseinrichtung 340 enthält. In dem gezeigten Ausführungsbeispiel ist eine Rolle 309 vorgesehen, über die der Schlauchabschnitt 302 umgelenkt wird, wobei die Rolle 309 in der durch den Pfeil 346 gezeigten Richtung verschiebbar ist, um einen entsprechenden Melkbecher von der ersten Betriebsphase in die zweite Betriebsphase zu überführen. Die Rolle 309 ist ferner mit einem Antriebselement 340 gekoppelt, beispielsweise einem elektrisch oder pneumatisch betriebenen Antriebsmotor, der eine entsprechende Drehbewegung 347 der Rolle 309 bewirken kann. Durch diese vor- und zurückgehende Drehbewegung ergibt sich eine entsprechende mechanische Einwirkung auf den Schlauchabschnitt 302 und damit eine entsprechende Stimulationswirkung. Ein entsprechendes Antriebselement 340 ist für jeden der Schlauchabschnitt 302 vorgesehen, wobei, wie zuvor erwähnt, eine gemeinsame Ansteuerung oder eine individuelle Ansteuerung für jeden Schlauchabschnitt 302 vorgenommen werden kann.

Fig. 3e zeigt schematisch eine weitere Ausführungsform der Haltevorrichtung 300, wobei die Stimulationseinrichtung 340 einen Teil der Führungsvorrichtung 304 bildet. Dazu ist beispielsweise ein Zylinder als Antriebselement 340 ausgebildet, wobei beispielsweise entsprechende Steuereingänge 348 und 349 an dem Zylinder vorgesehen sein können, um ggf. eine Bewegung der Rollen 309 in horizontaler Richtung zu bewirken und bei Bedarf in der gewünschten Endstellung der Rollen 309 eine Hin- und Herbewegung zu erreichen, die dann als entsprechende mechanische Einwirkung zur Stimulation der Zitzen dient. Der Zylinder 340 kann beispielsweise mit Hilfe der Eingänge 348 und 349 pneumatisch so angesteuert werden, dass die gewünschte Hin- und Herbewegung oder auch das Vor- und Zurückbewegung beim Herausnehmen des Melkbechers 310 oder beim Zurückführen des Melkbechers 310 erreicht wird.

Durch das Vorsehen einer entsprechenden Stimulationseinrichtung an der Haltevorrichtung in den zuvor dargestellten Ausführungsformen kann eine wesentliche Entkopplung der Stimulation von der Betriebsweise beim Melkvorgang, d. h. von der Art der Ansteuerung der Melkbecher mit Saugphase und Entlastungsphase, stattfinden. In konventionellen Melkgeschirren wird eine entsprechende mechanische Stimulation u. a. durch das Schwingen des Melkgeschirrs auf Grund der gegenphasigen Ansteuerungen jeweils zweier Melkbecherpaare und durch das Eigengewischt des Milchsammelstücks erreicht. Erfindungsgemäß kann aber mittels der Stimulationseinrichtung eine gewünschte mechanische Bewegung am Euter unabhängig von der Ansteuerung der Melkbecher erreicht werden, so dass ein höheres Maß an Flexibilität bei der Durchführung des Melkvorganges erreicht wird. Insbesondere können alle Zitzen in Prinzip individuell mit Saugphase und Entlastungsphase beaufschlagt werden, ohne dass dadurch die mechanische Stimulation beeinträchtigt wird.

Selbstverständlich kann die Stimulationseinrichtung 340 so ausgebildet sein, um eine gewünschte Schrägstellung der Zitzen durch Ziehen an den Schlauchabschnitten 302 zu erreichen, was beim Nachmelkvorgang vorteilhaft sein kann. Dazu kann die Steuereinrichtung der Stimulationseinrichtung 340 auf Anforderung durch einen Bediener oder durch ein Sensorsignal die entsprechende Position anfahren, d.h. die Schlauchabschnitte 302 wieder etwas in die Halterung 300 zurückführen, so dass die gewünschte Zitzenstellung erreicht wird. Ferner kann in einer gewünschten mittleren Position eine rhythmische Bewegung durch periodisches Ziehen und Nachlassen ausgeführt werden. Für Ausführungsformen, wie sie mit Bezug zu Fig. 3a, 3b und 3c beschrieben sind, kann eine Klemmvorrichtung (nicht gezeigt) vorgesehen werden, um die Schlauchabschnitte 302 zusammen mit den Aktuatorelementen 341 festzuklemmen. Dies kann beispielsweise mit einem oder mehreren Bügeln erreicht werden, die an dem Aktuatorelement 341 oder an dem Behälter der Haltervorrichtung 300 bewegbar befestigt sind, so dass diese beim Nachmelken in eine entsprechende Position zum Klemmen der Schlauchabschnitte gebracht werden können.

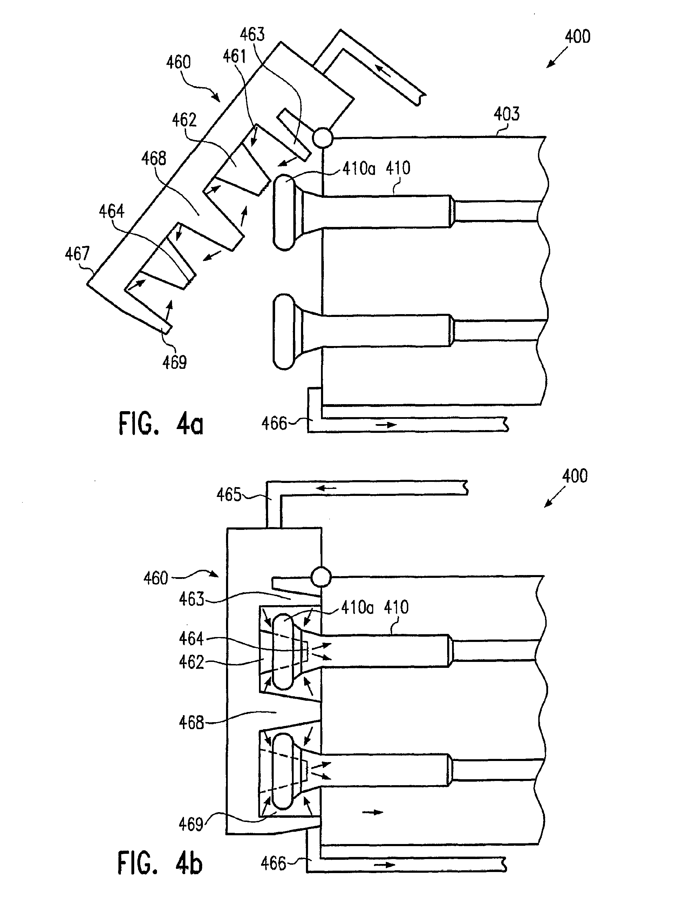

Mit Bezug zu den Fig. 4a und 4b wird eine weitere Ausführungsform einer Haltevorrichtung 400 beschrieben, in der eine Reinigungsvorrichtung 460 vorgesehen ist, um in effizienter Weise die hygienischen Bedingungen vor, während und nach einer Vielzahl von Melkvorgängen zu verbessern.

In Fig. 4a ist die Reinigungsvorrichtung 460 so ausgebildet, dass diese von einer Position, in der ein störungsfreies Entnehmen von Melkbechern 410 möglich ist, in eine Position überführbar ist, in der sich die Melkbecher 410 in der zweiten Betriebsphase befinden. Beispielsweise kann die Reinigungsvorrichtung 460 drehbar an einem Gehäuse 403 der Haltevorrichtung 400 befestigt sein. Die Reinigungsvorrichtung 460 umfasst ein Gehäuse 467 mit einer Aussparung, in der Dichtelemente 462 ausgebildet sind, wobei die Dichtelemente 462 in Aussparungen angeordnet sind, die durch entsprechende Elemente 468 oder Ränder des Gehäuses 467 gebildet sind. Ferner ist die Aussparung durch Dichtflächen 463 begrenzt, die das Gehäuse 403 der Haltevorrichtung 400 berühren, wenn die Reinigungsvorrichtung 460 sich in Betriebsstellung befindet. Ferner sind Düsenelemente 461 vorgesehen, um eine entsprechende Reinigungsflüssigkeit, die beispielsweise über einen Zulauf 465 zugeführt wird, auszusprühen. Ferner können an der Spitze der Dichtelemente 462 entsprechende Düsen 464 vorgesehen sein. Die Düsenelemente 461 und die Düsen 464 sind durch entsprechende Kanäle (nicht gezeigt), die in dem Gehäuse 467 ausgebildet sein können oder durch andere Verbindungen mit dem Zulauf 465 verbunden.

Fig. 4b zeigt die Haltevorrichtung 400, wenn sich die Reinigungsvorrichtung 460 in der Betriebsposition befindet. Hierbei werden durch die Elemente 468 und die entsprechenden Dichtungen 463 Hohlräume 469 gebildet, die einen Kopfbereich 410a der Melkbecher 410 aufnehmen. Bei Aktivierung der Reinigungsvorrichtung 460 kann eine Reinigungsflüssigkeit, beispielsweise Wasser, zugeführt werden, wobei interne Kanäle (nicht gezeigt) die unter Druck stehende Reinigungsflüssigkeit zu den Düsen 461führen, an denen die Reinigungsflüssigkeit dann in Richtung der Kopfbereiche 410a ausgeworfen wird. Durch diesen Spülvorgang lassen sich mögliche Verschmutzungen abspülen, die dann über die Ablaufleitung 466 abtransportiert werden. Während des Spülvorgangs werden die Dichtelemente 462 in den Kopfbereich 410a der entsprechenden Melkbecher eingeführt, so dass ein Eindringen der Spülflüssigkeit in das Innere des Melkbechers 410 verhindert wird. Somit kann in schneller und zuverlässiger Weise eine äußerliche Reinigung der Kopfbereiche 410a durchgeführt werden, ohne dass eine langfristige Unterbrechung des Melkvorganges erforderlich ist. Beispielsweise kann nach Beendigung des Melkvorganges für ein Tier die kurze Zeitspanne ausgenutzt werden, in der ein weiteres Tier den Melkstand betritt, um damit die Kopfbereiche 410a zu säubern. Durch diese Maßnahme kann auch eine Übertragung etwaiger Krankheiten von einem Tier zu einem anderen minimiert werden, indem beispielsweise der Reinigungsflüssigkeit entsprechende Mittel zugesetzt werden.

In einer weiteren Ausführungsform kann die Reinigungsvorrichtung 460 so ausgebildet sein, dass bei Bedarf auch Reinigungsflüssigkeit an die Düsen 464 an der Spitze der Dichtelemente 462 geleitet wird, so dass auch das Innere der Melkbecher 410 und der angrenzenden Schlauchabschnitte 402 möglich ist. Dies kann beispielsweise vorteilhaft sein, wenn eine effiziente Zwischendesinfektion der Melkbecher oder eine Endreinigung der Haltevorrichtung 400 gewünscht ist.

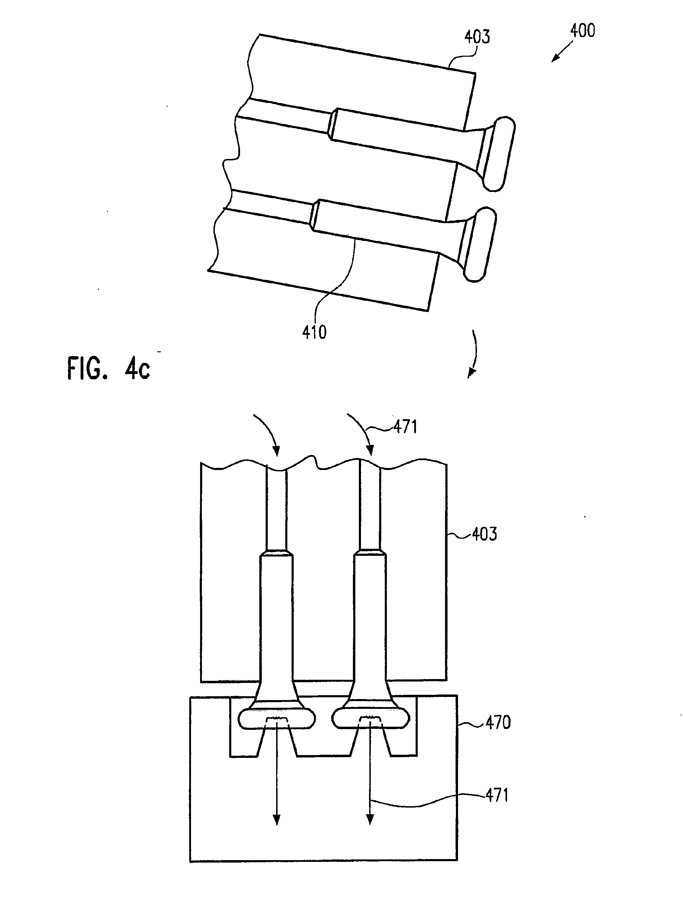

Fig. 4c oben zeigt schematisch den Behälter 403 der Haltevorrichtung 400 in der Melkposition während der ersten Betriebsphase, wobei die Melkbecher 410 im wesentlichen horizontal angeordnet sind. In Fig. 4c unten befindet sich die Haltevorrichtung 400 in der Reinigungsposition, wobei hier eine externe Reinigungsvorrichtung 470 mit den Melkbechern 410 verbunden ist. Somit kann eine Reinigungsflüssigkeit 471 nach Bedarf durch die Melkbecher 410 und gegebenenfalls entsprechende Schlauchabschnitte gespült werden.

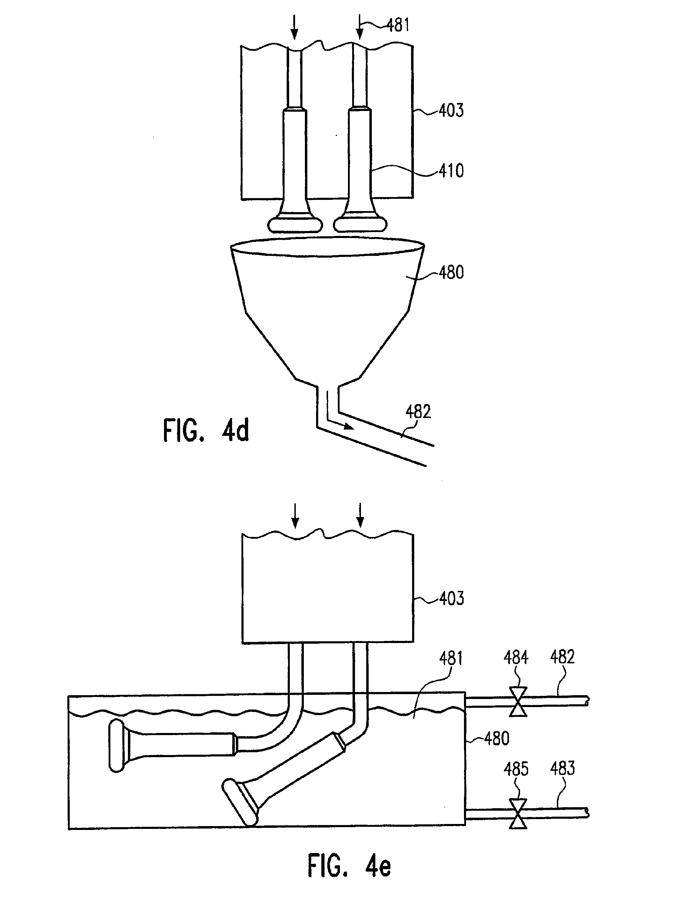

Fig. 4d zeigt schematisch die Haltevorrichtung 400 in einer Position für die Zwischendesinfektion der Melkbecher 410. Dazu kann in einer Ausführungsform ein Behälter 480 vorgesehen sein, der geeignet dimensioniert ist, um aus den Melkbechern abfließende Milchreste und Desinfektionsmittel 481 aufzunehmen, die dann über eine entsprechende Leitung 482 abgeführt werden können. Dadurch kann verhindert werden, dass Fluide, die das Desinfektionsmittel 481 enthalten, mit anderen biologischen Abfällen in Kontakt geraten. Beispielsweise lässt sich damit eine Kontaminierung der Gülle mit chemischen Fremdstoffen weitestgehend verhindern.

In einer vorteilhaften Ausführungsform ist eine Desinfektionseinrichtung 483, beispielsweise am Behälter 480 angebracht, vorgesehen, die ausgebildet ist, insbesondere den Außenbereich der Zitzengummis mit dem Desinfektionsmittel 481 zu beaufschlagen. Dazu können Sprühdüsen oder andere geeignete Mittel verwendet werden. Vorteilhafterweise ragen bei der Desinfektion der Außenbereiche die Melkbecher 410 so tief in den Behälter 480 ein, dass nahezu kein Desinfektionsmittel nach außen gelangt, so dass auch hier im Wesentlichen keine Kontaminierung des Melkstandes und dessen Umgebung mit Desinfektionsmittel stattfindet. Das "Eintauchen" der Melkbecher 410 kann vom Bediener bewerkstelligt werden, indem beispielsweise die Haltevorrichtung mittels der Befestigungseinrichtung abgesenkt, die Melkbecher 410 unabhängig von der Haltevor-richtung 400 oder der Behälter 480 mittels einer geeigneten Hebevorrichtung angehoben wird. Sobald die Melkbecher 410 dann geeignet zum Behälter 480 positioniert sind, kann dann zunächst eine Desinfektion der Außenbereiche mittels der Einrichtung 483 und dann eine Desinfektion der Innenräume der Zitzengummis stattfinden, wobei über die Schlauchabschnitte 402 über entsprechende Ventilelemente (nicht gezeigt) das Desinfektionsmittel 481 eingeleitet und danach im Behälter 480 aufgefangen und über die Leitung 482 kontrolliert abgeführt wird. Ferner können weitere Fluide, etwa Wasser und Luft zugeführt werden, um die desinfizierten Bereiche zu spülen und zu trocknen.

Fig. 4e zeigt eine weitere Ausführungsform, in der sich die Haltevorrichtung 400 in der Zwischendesinfektionsposition befindet, wobei die Melkbecher 410 teilweise "ausgefahren" sind, um in den Behälter 481 einzutauchen, der mit einem geeigneten Mittel, etwa dem Desinfektionsmittel 481 gefüllt sein kann. Ferner können Leitungen 482 und 483 mit zugeordneten Ventilen 484 und 485 vorgesehen sein, so dass steuerbar Fluide, etwa Wasser oder Desinfektionsmittel dem Behälter 480 zugeführt und von diesem abgeführt werden können. Somit kann der gesamte Zwischendesinfektionsvorgang kontrolliert in dem Behälter 480 stattfinden. Alternativ können 2 oder mehrere Behälter 480 mit unterschiedlichem Inhalt vorgesehen werden, wobei dann die Haltevorrichtung 400 entsprechend weiter geschwenkt werden kann, um den Desinfektionsvorgang durchzuführen. Auch hierbei findet im Wesentlichen keine Kontaminierung der Melkstandumgebung mit Chemikalien statt, wobei aufgrund der schwenkbaren oder verfahrbaren Haltevorrichtung 400 die Desinfektionsverfahren ohne großen Kraftaufwand auf Seite des Bedieners durchgeführt werden können. Z.B. kann die Haltevorrichtung in Position gebracht werden und die Melkbecher 410 können dann durch Betätigen der Milchschläuche, wenn diese direkt mit den Melkbechern verbunden sind, oder durch eine Betätigungseinrichtung (nicht gezeigt), die einen Zugriff auf die Führungsvorrichtungen wie sie mit Bezug zu den Figuren 2b bis 2e beschrieben sind, erlaubt, oder mittels Schwerkraft in den Behälter 480 abgesenkt werden und nach einer gewünschten Zeitdauer, die gegebenenfalls durch eine Zeitgebereinrichtung der Haltevorrichtung bestimmt wird, werden Melkbecher durch Einwirken des Bedieners auf die Führungsvorrichtung einzeln oder zusammen in die Haltevorrichtung zurückgeführt.

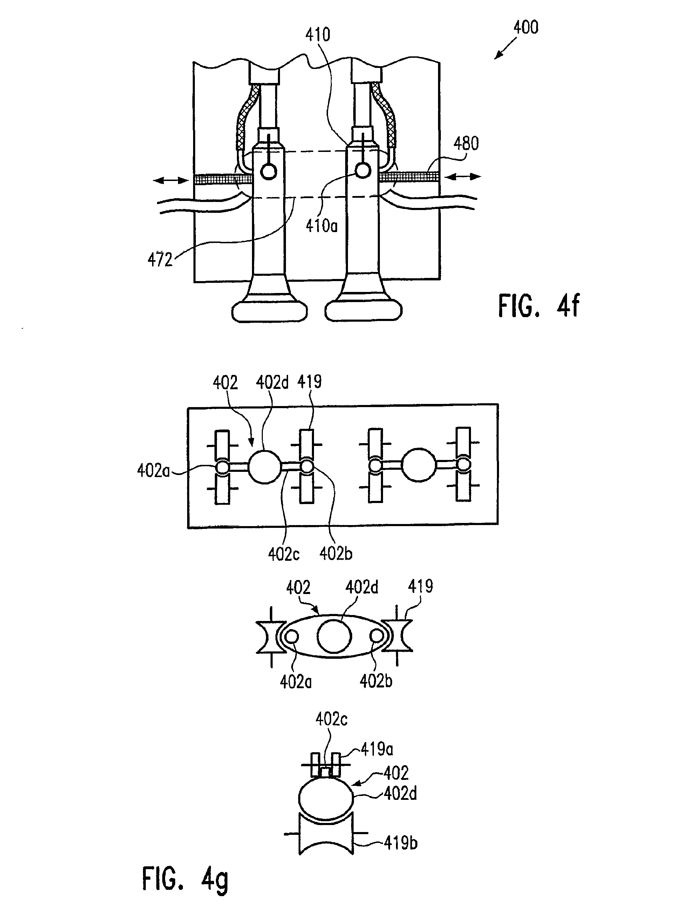

Fig. 4f zeigt schematisch die Haltevorrichtung 400, wobei sich der Behälter 403 in der Reinigungsposition befindet. Ferner sind in dieser Ausführungsform die Melkbecher 410 mit Ventilelementen 410a versehen, die einen Eintritt von Atmosphärenluft während des Einfaltens des Zitzengummis in der Entlastungsphase erlauben. Die Ventilelemente 410a sind äußerst vorteilhaft, da während des Melkvorgangs eine Rückbeschleunigung der Milchsäule zur Zitze hin wirksam reduziert wird. Um eine effiziente Spülung dieser Venti-le 410a zu gewährleisten, ist eine Fixierungseinrichtung 480 vorgesehen, die beim Zurückführen der Melkbecher 410 in den Behälter 403, der dafür entsprechende Bereiche (nicht gezeigt) aufweisen kann, eine gewünschte Orientierung eines jeden Melkbechers 410 in dem Behälter gewährleistet. Ferner ist eine entsprechende Öffnung, Aussparung oder ein ähnliches Mittel an der Behälterwand des Behälters 403 vorgesehen, so dass die Ventile 410a, die aufgrund der Fixiereinrichtung 480 korrekt orientiert sind, an eine entsprechende externe Reinigungseinrichtung 472 angeschlossen werden kann. Vorteilhafterweise können die Einrichtungen 470 (Fig. 4c) und die Einrichtung 473 kombiniert betrieben werden.

Fig. 4g zeigt schematisch Ausführungsformen für die Schlauchabschnitte 402, die zumindest einen Bereich mit einem im Querschnitt charakteristischen Profil aufweisen, so dass durch das Profil eine Führung der Schlauchabschnitte 402 ermöglicht wird, um bei Auftreten von Torsionskräften ein Verdrehen der Schlauchabschnitte im Wesentlichen zu vermeiden. In einem Ausführungsbeispiel wird ein derartiges Profil erhalten, indem mindestens ein Steuerschlauch 402a mit dem milchführenden Bereich 402d verbunden ist. Dazu kann ein Verbindungsbereich 402c vorgesehen sein, der eine zwar flexible Verbindung bietet, aber dennoch ausreichend Festigkeit für ein Verhindern einer Verdrehung ergibt. Beispielsweise können die Elemente 402d, 402a und 402c durch ein Spritzgussverfahren hergestellt werden. Ferner können weitere Leitungen 402b integriert werden, so kann die Leitung 402a einen Pulsatorschlauch und die Leitung 402b eine Stimulationsleitung oder eine Druckluftsteuerleitung oder eine elektrische Leitung repräsentieren.

Zur Führung des Schlauchabschnitts kann eine Vorrichtung, beispielsweise in Form von Rollen 419 vorgesehen sein, so dass ein leichtgängiges Führen bei gleichzeitig hoher Stabilität gegen Verdrehung sichergestellt ist.

In Fig. 4g Mitte ist ein weiteres Beispiel eines geeignet profilierten Schlauchabschnitts 402, der zum Beispiel zwei weitere Leitungen 402a, 402b zusätzlich zu dem milchführenden Teil 402d aufweisen kann, wobei beispielsweise seitliche Rollen 419 für die Führung sorgen.

Im unteren Teil des Bildes ist eine weitere Variante dargestellt, wobei die Profilform mittels eines Streifens 402c geeignet ist, um als Führung gegen Verdrehung verwendet zu werden.

Selbstverständlich können andere Profilformen Schlauchausgestaltungen, wobei mehrere Leitungen vorteilhafterweise in integraler Form zusammengefasst sind, benutzt werden, die ausreichende Flexibilität bei hoher Verwindungssteifigkeit bieten.

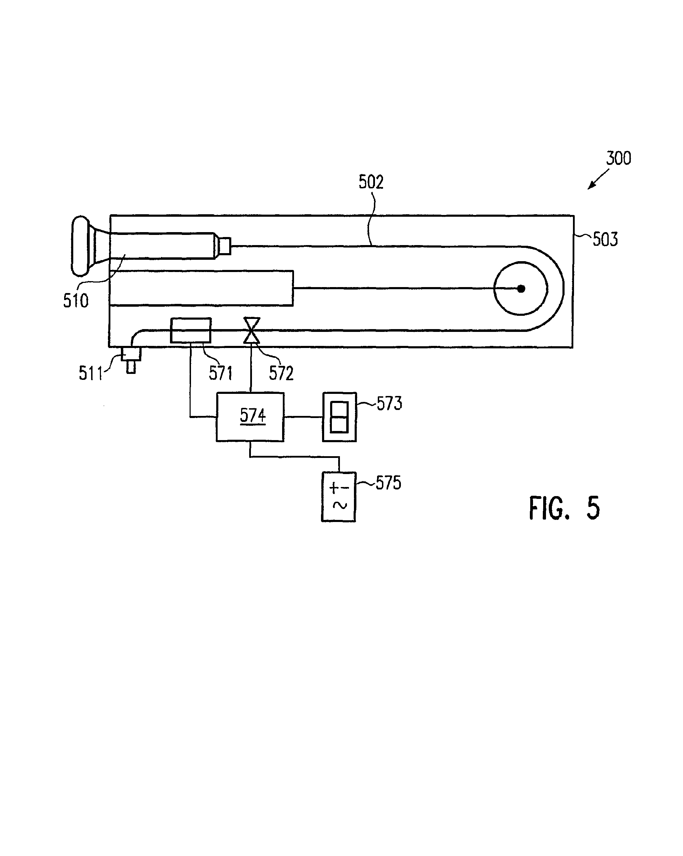

Fig. 5 zeigt schematisch eine weitere Ausführungsform einer Haltevorrichtung 500, in der Einrichtungen vorgesehen sind, um den Melkvorgang zu steuern und/oder zu regeln und/oder zu überwachen. Dazu ist eine Steuerung 570 vorgesehen, die in einer Ausführungsform ein oder mehrere Sensorelemente 571 aufweist, die an einer geeigneten Position innerhalb des Milchstromes angeordnet sind, oder die so angeordnet sind, um zumindest ein charakteristisches Kennzeichen der ermolkenen Milch zu erfassen. Beispielsweise kann das Sensorelement 571 einen Durchflusssensor repräsentieren, der an einer geeigneten Position in dem Schlauchabschnitt 502 angeordnet ist, beispielsweise in der Nähe eines Anschlusses 511, an den eine entsprechende Milchleitung zu einem Sammelbehälter anschließbar ist. Das Sensorelement 571 ist mit einer Steuereinheit 574 verbunden, die beispielsweise ausgebildet sein kann, Signale des Sensorelements 571 auszuwerten und in geeigneter Weise zu verarbeiten. Beispielsweise kann die Steuereinheit mit einer Anzeige 573 verbunden sein und/oder kann mit einem entsprechenden Stellglied 572 verbunden sein, um in Reaktion auf die Sensorsignale eine entsprechende Reaktion auszuüben. Z.B. kann das Stellglied 572 in Form eines steuerbaren Ventils vorgesehen sein. Die Steuerung 570 kann ferner eine Stromversorgung 575 aufweisen, die an eine externe Spannungsversorgung anschließbar ist, oder die bei Bedarf geeignete Spannungen mittels eines entsprechend ausgebildeten Generators erzeugen kann. Beispielsweise kann die Spannungsversorgung 575 einen pneumatisch betreibbaren Generator aufweisen. Die Spannungsversorgung 575 kann auch zur Versorgung weiterer elektrisch betriebener Elemente ausgebildet sein, so etwa von elektrischen Ventilelementen in einer Vakuumschalteinrichtung, wie sie beispielsweise zuvor mit Bezug zu den Fig. 2a beschrieben sind.

Während des Betriebs der Haltevorrichtung 500 werden die Melkbecher 510 einzeln an die Zitze angelegt, wie dies auch zuvor beschrieben ist, und der Melkvorgang wird begonnen, wobei eine für den Melkvorgang charakteristische Größe, beispielsweise der Milchdurchfluss, die Milchqualität, d. h. beispielsweise Anzahl und Größe von Eiterflocken, Salzanteil der Milch, etc., erfasst und an die Steuereinheit 574 weitergeleitet wird. Durch entsprechende Verarbeitung des Ausgangssignals des Sensorelements 571 können dann weitere Maßnahmen ergriffen werden. Beispielsweise kann ein entsprechender Messwert an der Anzeige 573 angezeigt oder akustisch dem Bediener mitgeteilt werden. Ferner ist es möglich, in den Melkvorgang gesteuert einzugreifen, indem beispielsweise das Stellglied 572 in Abhängigkeit des Sensorsignals des Sensorelements 571 betätigt wird. So kann z. B. bei Unterschreiten einer gewissen Mindestdurchflussmenge der Bediener mittels der Anzeige 573 darauf hingewiesen werden, den Melkvorgang an der jeweiligen Zitze zu beenden. Des weiteren kann die Steuereinheit 574 ausgebildet sein, den Melkvorgang auf der Grundlage der Sensorsignale des Sensorelementes 571 entsprechend einem in der Steuereinheit abgelegten Programmablauf automatisch zu steuern. Beispielsweise kann bei einem Absinken der Milchdurchflussmenge das Stellglied 572 auf entsprechende Steuerleitungen einwirken, so dass ggf. die Pulsatoransteuerung aufgehoben wird, um damit den Melkvorgang für die betreffende Zitze zu beenden. Selbstverständlich sind je nach Art der hintergelegten Programmabläufe und der Konfiguration der Steuereinheit 574 andere oder zusätzliche Steuerungsaufgaben möglich. Insbesondere können auch Eingabeelemente vorgesehen sein, um tierspezifische Daten einzugeben, die dann für Auswertezwecke genutzt werden können. Beispielsweise können entsprechende Schnittstellen oder Ausgabeeinheiten vorgesehen sein, um den Melkvorgang kennzeichnende Parameter in Zusammenhang mit den entsprechenden Identitätsangaben bereitzustellen. Dies kann vorteilhafterweise in drahtloser Weise erfolgen, so dass eine einfache Installation möglich ist.

Zusammenfassend kann gesagt werden, dass die vorliegende Erfindung das halbmaschinelle Melken in effizienter Weise verbessert, indem der Vorgang des Anlegens von Melkbechern an die Zitze deutlich vereinfacht wird, und wobei die Möglichkeit geschaffen wird, die hygienischen Bedingungen während des Melkens deutlich zu verbessern. Ferner kann die Haltevorrichtung der vorliegenden Erfindung in sehr kompakter Weise bereitgestellt werden, wobei je nach Ausstattungsgrad Reinigungs- und Steuerungsmöglichkeiten integriert sein können, so dass bei geringem personellen Aufwand ein hohes Maß an Automatisierung erreicht wird. Insbesondere ist anzumerken, dass die zuvor beschriebenen Ausführungsformen je nach Art der Anwendung und benötigten Automatisierungsgrad in entsprechender Weise kombiniert werden können.

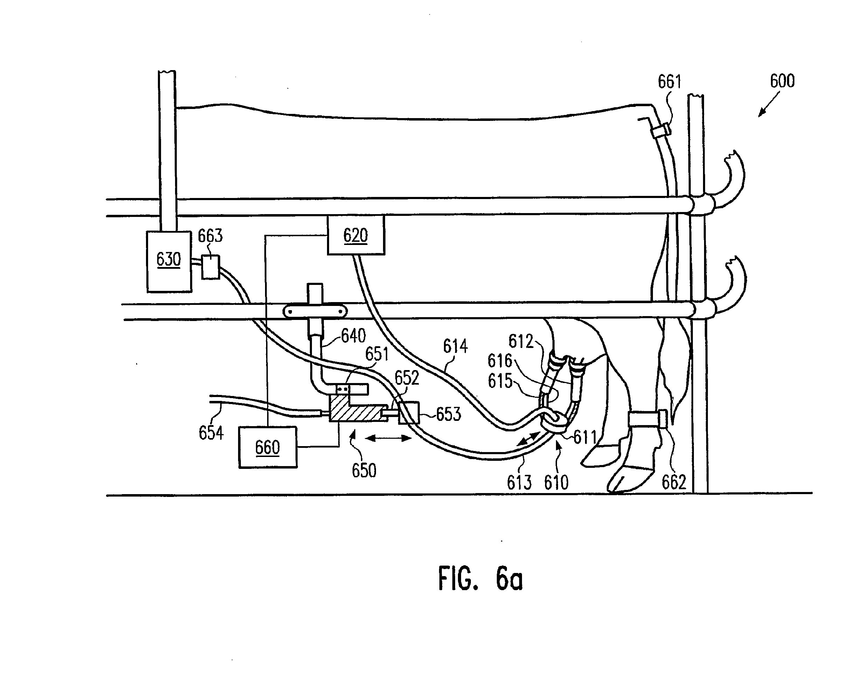

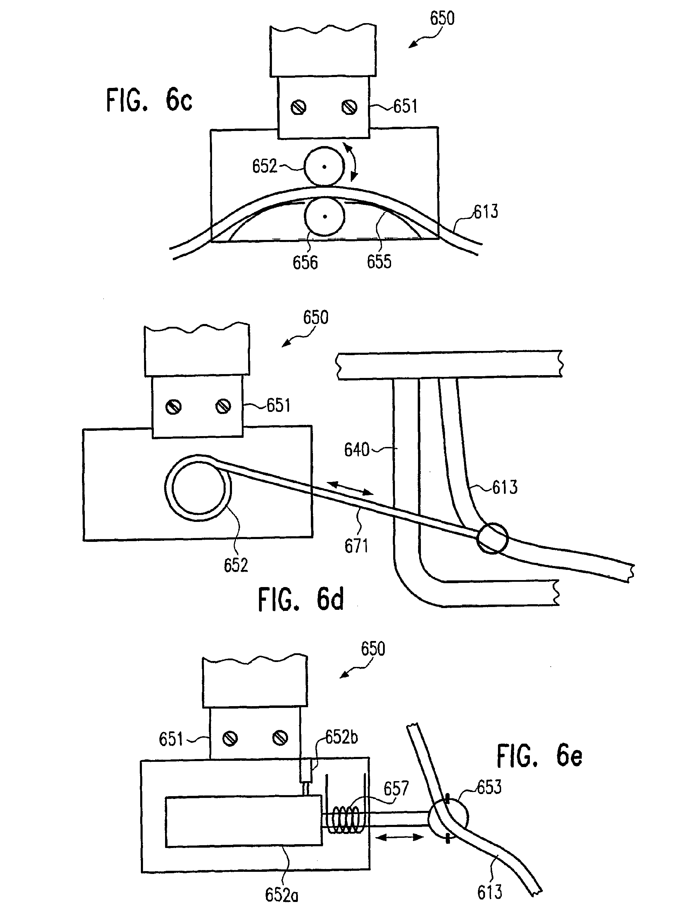

Fig. 6a zeigt schematische eine Melkanlage 600, die eine Vakuumeinrichtung 630 umfasst, die ausgebildet ist, ein für das Melken erforderliches Betriebsvakuum zu erzeugen. Die Vakuumeinrichtung 630 ist mit einem Melkgeschirr 610 strömungsmäßig über zumindest teilweise flexible Milchschläuche 613 verbunden, die ihrerseits mit dem Melkgeschirr 610 durch ein Milchsammelstück 611 verbunden sind. Das Milchsammelstück 611 ist mit Melkbechern 612, die geeignet ausgebildete Zitzengummis aufweisen, über entsprechende flexible Milchschläuche 615 verbunden. Ferner ist eine Pulsatoreinrichtung 620 vorgesehen, die mittels einer zumindest teilweisen flexiblen Leitung 614 über das Milchsammelstück 611 mittels entsprechender flexibler Leitungen 616 mit den Melkbechern so in Strömungsverbindung steht, dass bei Bedarf ein Einfalten der Zitzengummis in den Melkbechern 612 ermöglicht wird. Die Melkanlage 600 umfasst ferner eine Aktuatorvorrichtung 650 mit einer Halterung 651 und einem bewegbaren Aktuatorelement 652, wobei die Aktuatorvorrichtung 650 mittels der Halterung 651 an einer zum Melkgeschirr beabstandeten Position, beispielsweise an einer Halterung 640 eines Melkstandes angebracht ist. In der dargestellten Ausführungsform ist schematisch eine Befestigungsvorrichtung 653, die mit dem Aktuatorelement 652 verbunden ist, gezeigt, die mit einer mit dem Melkgeschirr 610 in Verbindung stehenden flexiblen Komponente verbindbar ist. In der dargestellten Ausführungsform ist die Befestigungsvorrichtung 653 mit den flexiblen Milchschläuchen 613 gekoppelt. Vorteilhafterweise ist die Befestigungsvorrichtung 653 so ausgebildet, dass eine ausreichend feste Verbindung mit den Milchschläuchen 613 oder anderen flexiblen Komponenten schnell und zuverlässig und ebenso eine Entkopplung der Befestigungsvorrichtung 653 von der flexiblen Komponente möglich ist. Die Befestigungsvorrichtung 653 kann dazu Schnellverschlüsse, feste oder flexible Komponenten und dergleichen aufweisen. Das Aktuatorelement 652 ist zumindest in einer Richtung bewegbar, um damit dem Milchschlauch 613 eine entsprechende Bewegung zu verleihen, die sich dann wiederum auf das Melkgeschirr 610 überträgt. Dazu ist das Aktuatorelement 652 mit entsprechenden Antriebseinrichtungen ausgerüstet, die beispielsweise pneumatische Antriebseinrichtungen z. B. in Form von Druckluftmotoren und/oder elektrische Antriebseinrichtungen z. B. in Form von Elektromotoren umfassen können. Ein entsprechender Anschluss 654 zur Zufuhr einer geeigneten Energieform ist vorgesehen und kann beispielsweise in Form eines Pneumatikschlauchs, einer elektrischen Leitung oder dergleichen ausgebildet sein. Einige beispielhafte Ausführungsformen der erfindungsgemäßen Aktuatorvorrichtung 650 sind im Folgenden mit Bezug zu den Fig. 6c bis 6e beschrieben.

In einigen Ausführungsformen umfasst die Melkanlage 600 eine Steuerung 660, die funktionell mit der Aktuatorvorrichtung 650 verbunden ist und auch mit anderen Komponenten der Melkanlage 600 verbunden sein kann, wie etwa der Pulsatoreinrichtung 620. Die Steuerung 660 kann mechanische und/oder elektronische Komponenten enthalten, die eine gesteuerte Bewegung des Aktuatorelements 652 veranlassen. Beispielsweise kann in der Steuerung 660 eine Zeitgeberanordnung verwirklicht sein, die eine vorgegebene Bewegungsart, beispielsweise Frequenz und/oder Amplitude der Bewegung des Aktuatorelements 652, für eine vorgegebene Zeitdauer anweist. In vorteilhaften Ausführungsformen umfasst die Steuerung 660 eine elektronische Schaltung, in der vorgegebene Programmabläufe implementiert sein können, und/oder in der spezielle Steuerungsabläufe eingestellt oder auf der Grundlage von Eingangssignalen geändert und/oder initialisiert werden können. Die Steuerung 660 kann dazu auch geeignete Steuerungsmittel, etwa strom- und spannungsausgebende Komponenten, elektropneumatisch betriebene Komponenten und dergleichen aufweisen. Die Steuerung 660 kann in einigen Ausführungsformen in der Aktuatorvorrichtung 650 oder in anderen Komponenten der Melkanlage 600 integriert sein, oder die Steuerung 660 kann als Einzelgerät ausgebildet sein. Die Ansteuerung der Aktuatorvorrichtung 650 und ggf. anderer Komponenten, etwa der Pulsatoreinrichtung 120 kann dabei über entsprechende Leitungen, beispielsweise elektrische Leitungen, pneumatische Leitungen, und dergleichen stattfinden. In anderen Ausführungsformen können die Steuerung 160 und die Aktuatorvorrichtung 650 über entsprechende Komponenten zur drahtlosen Kommunikation verfügen, so dass entsprechende Steuerleitungen entfallen können. Z. B. kann die Steuerung 660 zumindest eine Ausgangsstufe zum Senden von Daten zu der Aktuatorvorrichtung 650 aufweisen, die ihrerseits zumindest eine entsprechende Empfangseinrichtung aufweist, um die Daten von der Steuerung 660 zu empfangen und in Reaktion auf die empfangenen Daten eine entsprechende Bewegung des Aktuatorelements 652 in Gang zu setzen. In weiteren Ausführungsformen kann ein gegenseitiger Austausch von Daten zwischen der Steuerung 660 und der Aktuatorvorrichtung 650 stattfinden.

Während des Betriebs der Melkanlage 600 wird das Melkgeschirr 610 an das Euter des Tieres manuell angelegt, wobei zuvor eine entsprechende manuelle Reinigung der Zitzen stattgefunden hat. Wie eingangs erwähnt ist, kann bei größeren Tierbeständen unter Umständen eine ausreichende manuelle Vorstimulation nicht sachgerecht durchgeführt werden, so dass häufig eine automatisierte Vorstimulation mittels der Pulsatoreinrichtung 620 durchgeführt wird. Jedoch kann diese Art der Vorstimulation, die ein Einfalten des Zitzengummis mit hoher Frequenz beinhaltet, zu einer Schädigung der Schleimhäute führen, wodurch die Säurebarriere der Zitze beeinträchtigt werden kann. Mittels der Aktuatorvorrichtung 650 kann daher während einer Vorstimulationsphase durch die Bewegung des Aktuatorelements 652 eine entsprechende Bewegung auf die flexible Komponente, in dem gezeigten Beispiel den Milchschlauch 613, und schließlich über das Melkgeschirr 610 auf die Zitzen und das Euter des Tieres übertragen werden. Hierbei kann vorteilhafterweise die Pulsatoreinrichtung 620 so eingestellt werden, dass anfänglich kein Absaugen der Zisternenmilch stattfindet und das "hammerartige" Einfalten des Zitzengummis reduziert oder gänzlich vermieden wird. Vorteilhafterweise wird die Ansteuerung der Aktuatorvorrichtung 650 und der Pulsatoreinrichtung 620 von der Steuerung 660 so koordiniert, dass während der Vorstimulationsphase wenig oder gar keine Milch ermolken wird und eine Stimulation ausreichender Zeitdauer am Euter durchgeführt wird, ohne dass die Gefahr einer Schleimhautschädigung besteht. Dazu kann beispielsweise die Steuerung 660 die Pulsatoreinrichtung 620 veranlassen, die Zitzengummieinfaltung mit hoher Frequenz für eine gewisse Mindestzeitdauer, beispielsweise eine Minute, einzustellen und den Zitzengummi eingefaltet zu lassen, während die Aktuatorvorrichtung 650 die erforderlichen mechanischen Stimulationsreize erzeugt. Nach erfolgter Vorstimulation kann sodann die Pulsatoreinrichtung 620 den eigentlichen Melkvorgang in Gang setzen, indem die gewünschte Betriebsart für den Melkvorgang gewählt wird. Hierbei kann auf Grund der erfindungsgemäßen Aktuatorvorrichtung 650 auch eine Gleichtakt-Absaugung stattfinden, da eine gewünschte, die glatte Eutermuskulatur lockernde und stimulierende Bewegung des Melkgeschirrs 610 durch die Aktuatorvorrichtung 650 erzeugt werden kann und somit die stimulierende Bewegung der Schwingung des Melkgeschirrs 610, die typischerweise durch den im Wechseltakt betriebenen Pulsator 620 hervorgerufen wird, nicht notwendig ist. Dabei kann die Steuerung 660 so ausgebildet sein, dass zwei oder mehrere unterschiedliche Bewegungsarten abgerufen werden können, um damit ein hohes Maß an Flexibilität bei der weiteren Stimulation während des Melkvorgangs zu erreichen. In einer vorteilhaften Ausführungsform ist die Steuerung 660 als ein drahtloses, mobiles Gerät ausgebildet, mit dem ein oder mehrere Aktuatorvorrichtungen 650 angesteuert werden können, so dass entsprechende unterschiedliche Bewegungsformen von den Aktuatorelementen 652 ausgeführt werden. Es ist häufig üblich, dass mehrere Melkgeschirre 610 im Einsatz sind, die von einer einzelnen Person der Reihe nach angelegt werden, so dass sich auf Grund der unterschiedlichen Zeiten sowie tierspezifischer Unterschiede unterschiedliche Abläufe beim Melkvorgang der einzelnen Tiere ergeben. Hierbei kann der Bediener dann entsprechende Aktuatorvorrichtungen 650 in geeigneter Weise ferngesteuert ansprechen, so dass die Stimulation für die diversen Tiere auf Grund der Erfahrung des Melkers, beispielsweise durch Beobachtung des Euterzustands, in bequemer Weise individuell eingestellt werden kann. Dazu kann die Steuerung 660 geeigneter Weise so ausgestaltet sein, dass mit dem Übertragen entsprechender Steuerdaten zu den mehreren Aktuatorvorrichtungen 650 zugehörige Kodierungsdaten gesendet werden, die von dem Bediener, beispielsweise durch Knopfdruck, festgelegt werden, so dass gezielt eine bestimmte Aktuatorvorrichtung 650 angesprochen wird. Es können auch unterschiedliche Funkfrequenzen für unterschiedliche Aktuatorvorrichtungen 650 benutzt werden. Auf Grund der erfindungsgemäßen Aktuatorvorrichtung 650 kann somit zusätzlich oder alternativ eine stimulierende Bewegung des Melkgeschirrs 610 am Euter erreicht werden, unabhängig von der Betriebsart der Pulsatoreinrichtung 620, so dass sich insgesamt ein höher Ausmelkungsgrad erreichen lässt.

In einigen Ausführungsformen ist eine Sensoreinrichtung vorgesehen, beispielsweise in Form von Sensoren 661, 662 und 663, die beispielsweise am Schwanz bzw. an einem Bein des Tieres bzw. im Milchstrom an einer geeigneten Stelle angebracht sind. Der Milchflusssensor 663 ist ausgebildet, den zeitlichen Verlauf des Müchfiusses zu erfassen. In einer vorteilhaften Ausführungsform ist der Sensor 663 ausgebildet, den Milchfluss nahezu kontinuierlich zu erfassen, so dass auch Entspannungsrhythmen der Tiere erfasst werden können. Dabei können in der Steuerung Referenzdaten für die Milchflusskurve eines oder mehrerer Tiere abgelegt sein, so dass aus einer Abweichung zwischen der aktuellen Milchflusskurve und den Referenzdaten eine entsprechende Ansteuerung der Aktuatorvorrichtung 650 erfolgt.

Der Sensor 661 kann so ausgestaltet sein, dass er die Schwanzstellung des Tieres registriert, was wiederum als ein Zeichen der Melkbereitschaft des Tieres während der Vorstimulationsphase gewertet werden kann. So ist es bekannt, dass viele Tiere bei Erreichen eines gewissen Wohlgefühls, das für die Melkbereitschaft erforderlich ist, den Schwanz anheben, so dass eine entsprechende Lageänderung des Schwanzes und damit des Sensorelements 661 als ein Indiz für den Stimulationszustand des Tieres benutzt werden kann. Der Sensor 661 kann zu diesem Zwecke ein von seiner Orientierung abhängiges Signal, beispielsweise in Form eines Neigungsschalters, eines Geschwindigkeits- bzw. Beschleunigungs- bzw. Drucksensors bereitstellen, das von der Steuerung 660 für die Ansteuerung des Aktuatorelements 652 und/oder die Pulsatoreinrichtung 620 verwendet werden kann. Z. B. kann die Vorstimulationsphase solange ausgedehnt werden, bis der Sensor 661 eine entsprechende Melkbereitschaft des Tieres signalisiert. Der Sensor 662 kann beispielsweise Trittbewegungen des Tieres erkennen, so dass ggf. dieses Signal als Indikator für den Stimulationszustand des Tieres von der Steuerung 660 benutzt werden kann. Beispielsweise ist es bekannt, dass häufige Trittbewegungen während des Melkens auf eine nachlassende Melkbereitschaft bzw. auf eine das Tier störende Eigenschaft hindeuten. Beim Auftreten einer vermehrten Tritthäufigkeit, die durch den Sensor 662 der Steuerung 660 signalisiert wird, kann somit eine entsprechende Ansteuerung des Aktuatorelements 652 erfolgen, so dass z. B. eine andere stimulierende Bewegung erreicht und damit eine erhöhte Melkbereitschaft zurückgewonnen wird. Die Sensoren 661 und 662 können so ausgebildet sein, dass sie über längere Zeiträume an dem Tier belassen werden, so dass kein zusätzlicher Arbeitsaufwand beim Melken entsteht. Insbesondere können die Sensoren 661 und 662 so ausgebildet sein, dass sie drahtlos mit der Steuerung 660 kommunizieren, wobei jeder Sensor eine einzigartige Kennung aufweisen kann, so dass die Steuerung 660 jeden der Sensoren 661 und 662, wenn diese für eine Vielzahl von Tieren vorgesehen sind, erkennen kann. In vorteilhaften Ausführungsformen sind in den Sensoren 661 und 662 entsprechende elektromagnetische Wandlereinrichtungen vorgesehen, so dass die Bewegungsenergien der Sensoren 661 und 662 in entsprechende elektrische Energie umgewandelt werden kann, so dass ein hohes Maß an Autarkie in Bezug auf die Energieversorgung der Sensoren 661 und 662 erreicht wird. Selbstverständlich können die Sensoren zusätzlich oder alternativ entsprechende Batterien oder Akkumulatoren aufweisen.

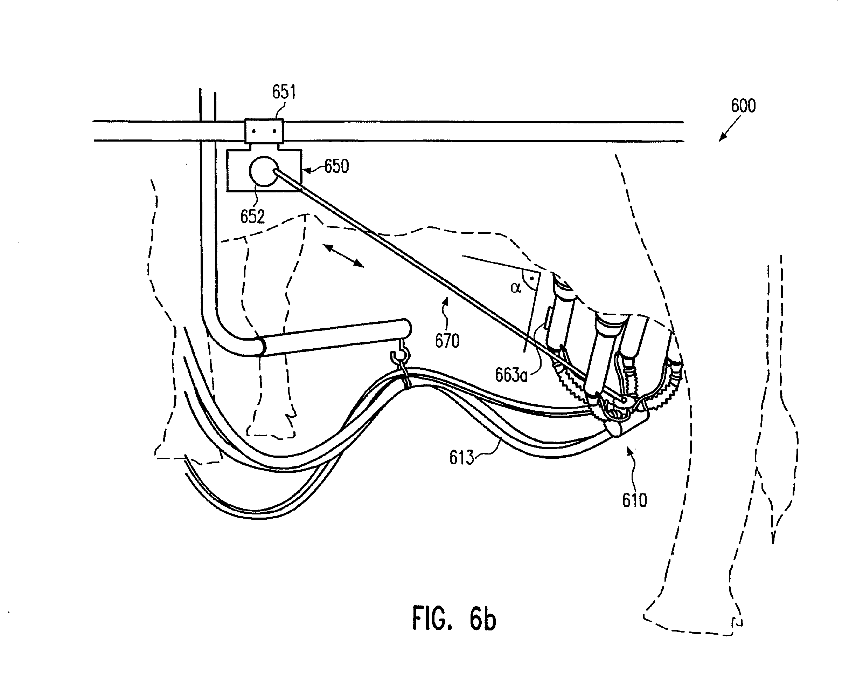

Fig. 6b zeigt schematisch einen Teil der Melkanlage 690 gemäß weiterer Ausführungsformen, wobei die Aktuatorvorrichtung 650 mit ihrem Aktuatorelement 652 mit einer Zugvorrichtung 670 gekoppelt ist, die es ermöglicht, einen Neigungswinkel α, der in der Zeichnung als 90° dargestellt ist, durch Ziehen an den flexiblen Milchschläuchen 613 zu ermöglichen. Um einen möglichst großen Verstellbereich für den Neigungswinkel α zu erreihen, kann das Aktuatorelement 652 eine angetriebene Rolle aufweisen, so dass ein Band der Zugvorrichtung 670 entsprechend aufgewickelt oder abgewickelt werden kann, um die gewünschte Orientierung des Melkgeschirrs 610 zu erreichen. Neben einem weiten Verstellbereich für den Neigungswinkel α kann ferner auch eine entsprechende stimulierende Bewegung um diese dem gewünschten Neigungswinkel entsprechende Grundeinstellung herum erreicht werden. Dazu kann das Aktuatorelement 652 nach Erreichen der gewünschten Grundeinstellung des Neigungswinkels um diese Position herum hin- und herbewegt werden, um eine entsprechende stimulierende Wirkung, in dem gezeigten Beispiel bei einer Grundstellung von 90° in Bezug auf den Euterboden, zu erreichen. Selbstverständlich kann die in Fig. 6b gezeigte Ausführungsform auch alle Komponenten der in Fig. 6a gezeigten Ausführungsform aufweisen, so dass insbesondere der Neigungswinkel α beispielsweise durch die Steuerung 660 automatisch oder durch einen Bediener initiiert eingestellt werden kann. In einer Ausführungsform ist ein Sensorelement 663a als eine Sensoreinrichtung an dem Melkgeschirr 610 vorgesehen, wobei das Sensorelement 663a bewegungs- und/oder lageempfindlich sein kann. D. h., das Sensorelement 663a kann ein von dem Neigungswinkel α abhängiges Signal erzeugen und/oder kann ein von der tatsächlichen Bewegung des Melkgeschirrs 610 abhängiges Signal erzeugen, das dann der Steuerung 660 übermittelt wird, die daraufhin die Aktuatorvorrichtung 650 entsprechend ansteuert. Beispielsweise kann auf Grund des Signals 663a der Neigungswinkel α während jeder Phase des Melkvorgangs ermittelt werden, so dass die Steuerung 660 dann die Aktuatorvorrichtung 650 entsprechend nachführt oder einen für die betreffende Melkphase gewünschte Neigung einstellt. In ähnlicher Weise kann mittels der Sensoreinrichtung 663a ggf. die tatsächlich durch die Bewegung des Aktuatorelements 652 erzeugte Bewegung am Melkgeschirr 610 ermittelt werden, so dass eine für die Stimulierung günstige Bewegung durch entsprechendes Ändern der Ansteuerung des Aktuatorelements 652 erreicht werden kann. So ist beispielsweise die Art der für eine vorgegebene Bewegung des Aktuatorelements 652 hervorgerufenen Bewegung des Melkgeschirrs 610 von vielerlei Faktoren abhängig, die sich von Tier zu Tier und während des Melkvorgangs ändern können. Hierbei können unter Umständen die durch die Pulsatoreinrichtung 620 bewirkten Pendelbewegungen bei Bedarf in einfacher Weise herausgerechnet werden, indem beispielsweise die Bewegung des Melkgeschirrs 610 bei nicht angesteuertem Aktuatorelement 652 durch das Sensorelement 663a gemessen und von der Steuerung 660 dann bei Erhalten des Sensorsignals mit angesteuertem Aktuatorelements 652 berücksichtigt wird.

In anderen Ausführungsformen kann die Steuerung 660 so ausgebildet sein, um die Bewegung des Melkgeschirrs 610 aus der tatsächlichen Bewegung des Aktuatorelements 652 abzuschätzen. Dazu kann das Aktuatorelement 652 mit einer entsprechenden elektromagnetischen Wandlereinheit (wird in Verbindung mit den Fig. 6c bis 6e näher erläutert) oder optischen oder induktiven Lagegebem verbunden sein, die aus der Bewegung des Aktuatorelements 652 elektrische Energie erzeugt, die dann ein Maß für die tatsächliche Bewegung ist und als Grundlage der Abschätzung für die Steuerung 660 dient. Beispielsweise kann aus einer konstanten Versorgungsenergie für das Aktuatorelement 652 und der tatsächlichen resultierenden Bewegung der Zustand des mechanischen Systems aus Milchleitung 613, Melkgeschirr 610 und dergleichen bewertet werden, so dass eine für die Stimulation günstige Bewegungsform des Aktuatorelements 652 ausgewählt werden kann. Wenn beispielsweise bei konstanter Eingangsenergie eine relativ geringe tatsächliche Bewegung des Aktuatorelements 652 resultiert, so kann angenommen werden, dass die momentan gewählte Bewegungsform des Aktuatorelements 652 nur zu einer sehr geringen stimulierenden Bewegung am Euter führt. Durch Ändern der Ansteuerung des Aktuatorelements 652 kann sodann eine geeignetere Bewegungsform des Aktuatorelements 652 ermittelt werden. Dies kann auch in einfacher Weise so geschehen, dass ein Bediener durch Beobachten des Melkgeschirrs 610 erkennt, ob die momentane Ansteuerung des Aktuatorelements 652 zu einer adäquaten stimulierenden Bewegung führt. Der Bediener kann sodann, vorteilhafterweise in ferngesteuerter Weise, wie dies zuvor beschrieben ist, eine andere Bewegungsart, beispielsweise durch Verstellen der Frequenz, Intensität, Richtung, etc. auswählen, so dass eine bessere stimulierende Wirkung erreicht wird.

In einer Ausführungsform kann das Sensorelement 663a so an einem oder mehreren der Melkbecher 612 angebracht werden, dass der Stimulationszustand der Zitze erkannt wird. Beispielsweise kann das Sensorelement 663a einen druckempfindlichen Bereich aufweisen, der in der Nähe des Zitzengummirandes angeordnet ist, so dass eine entsprechende Druckänderung in diesem Bereich beim Aufstellen der Zitzen erkannt und an die Steuerung 660 übermittelt wird.

Fig. 6c zeigt schematisch eine beispielhafte Ausführungsform der Aktuatorvorrichtung 650, wobei die Aktuatorvorrichtung das Aktuatorelement 652 in Form eines Antriebs mit einer Rolle aufweist, wobei der Antrieb pneumatisch und/oder elektromagnetisch sein kann, wobei zumindest eine Drehbewegung des Aktuatorelements 652 in Vorwärts- und Rückwärtsrichtung möglich ist. Ferner umfasst die Aktuatorvorrichtung 650 eine Führungsrolle 656, so dass die flexible Komponente, beispielsweise der Milchschlauch 613, zwischen der Führungsrolle 656 und der Antriebsrolle des Aktuatorelements 652 laufen kann. Hierbei ist die Führungsrolle 656 vorteilhafterweise so ausgebildet, dass diese einfach abgesenkt oder aus der Betriebsstellung weg bewegt werden kann, so dass sich der Milchschlauch 613 in einfacher Weise einfädeln lässt. Während des Betriebs der Aktuatorvorrichtung 650 wird das Aktuatorelement 652 so angesteuert, dass eine Drehbewegung stattfindet, die dann den Milchschlauch 613 vor und zurückbewegt, je nach Bewegungsrichtung des Aktuatorelements 652. Insbesondere kann hierbei auch der Neigungswinkel α (siehe Fig. 6b) in einfacher Weise eingestellt werden, indem zunächst eine gewünschte Grundposition angefahren wird und dann die gewünschte stimulierende Bewegung durch entsprechendes wechselseitiges Ansteuern des Aktuatorelements 652 bewirkt wird. Ferner kann das Aktuatorelement 652 eine weitere Einrichtung (nicht gezeigt) aufweisen, die dem Milchschlauch 613 eine Bewegung in einer weiteren zu der ersten Bewegungsrichtung linear unabhängigen Richtung verleiht. Beispielsweise können die Antriebsrolle des Aktuatorelements 652 oder dieses selbst sowie die Führungsrolle 656 in einer Richtung senkrecht zur Zeichenebene bewegbar sein, so dass dadurch eine zusätzliche Bewegungskomponente für den Milchschlauch 613 erreicht wird.

Fig. 6d zeigt schematisch eine weitere Ausführungsform der Aktuatorvorrichtung 650, wobei das Aktuatorelement 652 eine Antriebsrolle aufweist, auf der eine flexible Komponente 671, beispielsweise ein Band, ein Seil, etc. aufgewickelt oder abgewickelt werden kann. Die flexible Komponente 671 ist mit beispielsweise dem Melkschlauch 613 verbunden, so dass durch Aufwickeln bzw. Abwickeln der flexiblen Komponente 671 eine entsprechende Bewegung am Milchschlauch 613 hervorgerufen wird, wodurch wiederum der Neigungswinkel α und/oder eine gewünschte stimulierende Bewegung des Melkgeschirrs 610 am Euter eingestellt wird. Des weiteren kann das Aktuatorelement 652 wiederum so ausgebildet sein, dass auch eine Bewegung in mindestens einer zweiten unabhängigen Richtung möglich ist, indem beispielsweise eine weitere Aktuatorkomponente vorgesehen wird oder indem das Aktuatorelement 652 noch in mindestens einer weiteren Richtung bewegbar ist. Ferner können in den in Fig. 6c und 6d gezeigten Ausführungsformen der Aktuatorvorrichtung entsprechende Sensoreinrichtungen zum Erfassen der tatsächlichen Bewegung des Aktuatorelements 652 vorgesehen sein. Beispielsweise können entsprechende optische oder induktive Geberelemente in Verbindung mit den Aktuatorelementen 652 und/oder der Führungsrolle 656 vorgesehen werden, die bei Bewegung ein entsprechendes Signal ausgeben. Auf der Grundlage dieses Signals kann zumindest die Auslenkung und/oder die Frequenz der momentanen Bewegung des Aktuatorelements 652 bestimmt werden. In anderen Ausführungsformen kann eine elektromagnetische Wandlereinrichtung vorgesehen sein, in der die mechanische Bewegung des Aktuatorelements 652 in eine entsprechende elektrische Energie umgewandelt wird, die dann als Maß für die momentane Bewegung des Aktuatorelements dienen kann. Die elektrische Energie kann auch in einigen Ausführungsformen, insbesondere wenn das Aktuatorelement 652 eine pneumatisch betriebene Antriebsvorrichtung umfasst, verwendet werden, um eine oder mehrere elektronische Komponenten, beispielsweise eine Einrichtung zur drahtlosen Kommunikation und/oder eine Steuereinrichtung mit Energie zu versorgen.

Fig. 6e zeigt ein weiteres Ausführungsbeispiel der Aktuatorvorrichtung 650, die ein erstes Aktuatorelement 652a und ein zweites Aktuatorelement 652b aufweist, die einer mittels der Befestigungsvorrichtung 653 angekoppelten flexiblen Komponente 613 eine Bewegung in zumindest zwei unterschiedlichen Richtungen verleihen können. Vorteilhafterweise können die Aktuatorelemente 652b und 652a unabhängig voneinander angesteuert werden, um ein hohes Maß an Flexibilität bei der Erzeugung einer gewünschten stimulierenden Bewegung zu erreichen. Selbstverständlich können auch noch weitere Aktuatorelemente vorgesehen sein, um komplexere Bewegungsmuster bilden zu können. Ferner ist eine Sensoreinrichtung 657 zum Erfassen der tatsächlichen Bewegung des Aktuatorelements 652a vorgesehen, die in dem vorliegenden Ausführungsbeispiel als eine elektromagnetische Wandlereinrichtung dargestellt ist. In anderen Ausführungsformen kann eine entsprechende Einrichtung auch für das Aktuatorelement 652b vorgesehen werden, so dass eine individuelle Erfassung der einzelnen Bewegungskomponenten möglich ist. Wie zuvor erwähnt ist, kann die elektromagnetische Wandlereinheit 657 auch zum Erzeugen elektrischer Energie verwendet werden, die dann zur Speisung einer oder mehrerer Komponenten der Aktuatorvorrichtung dienen kann.

Selbstverständlich sind die zuvor dargestellten Ausführungsformen der Aktuatorvorrichtung 650 lediglich anschaulicher Natur und es können beliebige Komponenten bekannter Stellglieder, Antriebsmotoren, pneumatischer Komponenten, Ventilelementen, etc. kombiniert werden, um eine gewünschte steuerbare Bewegung des Aktuatorelements 652 zu erreichen. Ferner ist zu beachten, dass die beschriebenen Ausführungsformen in beliebiger Weise kombinierbar sind.

## Patentansprüche

1. Haltevorrichtung (200) für die individuelle Entnahme von Melkbechern mit
einer Befestigungsvorrichtung (201) zum Fixieren der Haltevorrichtung an einer vorgesehenen Melkposition,
wobei die Haltevorrichtung (200) ferner ausgebildet ist, während einer ersten Betriebsphase jeden von mehreren Melkbechern (210) in jeweils einer relativ zueinander fixierten Stellung zu halten und manuellen Zugriff zu jedem gehaltenen Melkbecher (210) so zu gewähren, dass während einer zweiten Betriebsphase jeder Melkbecher (210) relativ zu der Haltevorrichtung (200) und mindestens einem weiteren Melkbecher (210) in mehreren Richtungen manuell bewegbar ist,
**dadurch gekennzeichnet, dass** die Haltevorrichtung ferner eine Stimulationseinrichtung (340) aufweist, die ausgebildet ist, eine rhythmische Bewegung zu erzeugen, die mechanisch auf mindestens einen Milchschlauch (217) und/oder Steuerschlauch (221) einwirkt, der einen Melkbecher (210) mit der Haltevorrichtung während der zweiten Betriebsphase verbindet.

2. Haltevorrichtung nach Anspruch 1, wobei die Haltevorrichtung einen Behälter (203) aufweist, in dem die Melkbecher während der ersten Betriebsphase zumindest teilweise eingeführt sind.

3. Haltevorrichtung nach Anspruch 1 oder 2, die ferner eine Führungsvorrichtung (204) zum Führen von Milchschläuchen (202) beim Bewegen der Melkbecher (210) relativ zu der Haltevorrichtung umfasst.

4. Haltevorrichtung nach einem der Ansprüche 1 bis 3, die ferner eine steuerbare Vakuumschalteinrichtung (205) umfasst, die ausgebildet ist, ein Betriebsvakuum steuerbar an jeden der Melkbecher anzulegen.

5. Haltevorrichtung nach Anspruch 4, wobei die Vakuumschalteinrichtung (205) einen Betätigungsschalter (207) für jeden der Melkbecher aufweist.

6. Haltevorrichtung nach Anspruch 4, wobei die Vakuumschalteinrichtung (205) eine Betätigungseinrichtung aufweist, die das Betriebsvakuum in Abhängigkeit des Abstandes des Melkbechers von der Haltevorrichtung schaltet.

7. Haltevorrichtung nach einem der Ansprüche 4 bis 6, wobei die Vakuumschalteinrichtung eine Abschalteinrichtung (220) umfasst, die ausgebildet ist, bei einem Verlust des Melkvakuums in einem Melkbecher, diesen individuell und automatisch vom Betriebsvakuum abzukoppeln.

8. Haltevorrichtung nach einem der Ansprüche 1 bis 7, die ferner mehrere Anschlüsse aufweist, die eine Verbindung mit einem oder mehreren Milchschläuchen, die die Haltevorrichtung mit einer Melkanlage verbinden, und mit einer Vakuumleitung der Melkanlage ermöglichen.

9. Haltevorrichtung nach Anspruch 8, die ferner Schlauchabschnitte aufweist, deren ein Ende mit jeweils einem Anschluss verbunden ist und deren anderes Ende mit jeweils einem Melkbecher verbunden werden kann.

10. Haltevorrichtung nach Anspruch 9, wobei jeder Schlauchabschnitt mindestens einen Steuerungsschlauchabschnitt aufweist, der an einem Ende mit einem Melkbecher verbindbar ist und mit dem anderen Ende mit einem entsprechenden Steuerungsanschluss verbunden ist.

11. Haltevorrichtung nach einem der Ansprüche 1 bis 10, wobei die Befestigungsvorrichtung eine Halterung zur Befestigung an einem Melkstandträger aufweist.

12. Haltevorrichtung nach einem der Ansprüche 1 bis 11, wobei die Befestigungsvorrichtung so einstellbar ist, dass die Längsachsen der Melkbecher nahezu horizontal ausgerichtet sind.

13. Haltevorrichtung nach einem der Ansprüche 1 bis 12, wobei die Befestigungsvorrichtung so ausgebildet ist, dass die Haltevorrichtung von einer ersten Position, die der ersten Betriebsphase entspricht, mindestens in eine zweite Position zur Reinigung zumindest eines Bereichs der Melkbecher überführbar ist.

14. Haltevorrichtung nach einem der Ansprüche 1 bis 13, wobei zumindest ein die Melkbecher aufnehmender Bereich der Haltevorrichtung aus Kunststoff hergestellt ist.

15. Haltevorrichtung nach einem der Ansprüche 1 bis 14, die ferner einen oder mehrere Reinigungsanschlüsse aufweist.

16. Haltevorrichtung nach Anspruch 8, wobei mindestens ein Anschluss mit einem steuerbaren Ventil versehen ist.

17. Haltevorrichtung nach Anspruch 16, wobei das steuerbare Ventil das Vakuum zu einem der Melkbecher schalten kann.

18. Haltevorrichtung nach Anspruch 16 oder 17, wobei das steuerbare Ventil elektrisch betätigbar ist.

19. Haltevorrichtung nach einem der Ansprüche 1 bis 18, die ferner eine Reinigungsvorrichtung aufweist, die von einer ersten Reinigungsposition in der ersten Betriebsphase, in der der Kopfteil des Zitzengummis der Einwirkung eines Reinigungsfluids aussetzbar ist, in eine zweite Position zur Freigabe der Melkbecher für die zweite Betriebsphase bewegbar ist.

20. Haltevorrichtung nach Anspruch 19, wobei die Reinigungsvorrichtung mit einem Dichtungselement zum Abdichten des Zitzengummiinneren in der Reinigungsposition versehen ist.

21. Haltevorrichtung nach Anspruch 20, wobei das Dichtungselement mindestens ein Düsenelement zur Einfuhr von einem Reinigungsfluid in das Zitzengummiinnere aufweist.

22. Haltevorrichtung nach einem der Ansprüche 1 bis 21, die ferner eine Stromversorgungseinheit aufweist.

23. Haltevorrichtung nach Anspruch 22, wobei die Stromversorgungseinheit pneumatisch angetrieben ist.

24. Haltevorrichtung nach einem der Ansprüche 1 bis 23, die ferner ein Sensorelement aufweist, das ausgebildet ist, den Milchdurchfluss zumindest aus einem Melkbecher zu erfassen.

25. Haltevorrichtung nach einem der Ansprüche 1 bis 24, die ferner ein Qualitätssensorelement umfasst, das ausgebildet ist, mindestens eine die Milchqualität kennzeichnende Eigenschaft zu erfassen.

26. Haltevorrichtung nach Anspruch 1, wobei die Stimulationseinrichtung ein Antriebselement und ein damit gekoppeltes Aktuatorelement aufweist, wobei das Aktuatorelement mit dem mindestens einen Milchschlauch und/oder Steuerschlauch während des Melkens in Kontakt ist.

27. Haltevorrichtung nach Anspruch 26 oder 1, wobei die Stimulationseinrichtung eine Steuerungseinrichtung umfasst, die ausgebildet ist, eine Frequenz der mechanischen Einwirkung und/oder eine Stärke der mechanischen Einwirkung zu steuern.

28. Haltevorrichtung nach einem der Ansprüche 1 bis 27, die ferner jeweils einen Haltebereich zur Aufnahme eines Melkbechers aufweist, wobei jeder Haltebereich eine Fixierungseinrichtung umfasst, die ausgebildet ist, die Orientierung des in den Haltebereich manuell eingeführten Melkbechers auf eine vordefinierte Orientierung festzulegen.

29. Haltevorrichtung nach einem der Ansprüche 1 bis 28, wobei Schlauchabschnitte zur Verbindung mit den Melkbechern vorgesehen sind, die zumindest einen profilierten Bereich und einen entsprechenden Führungsabschnitt zur Führung des profilierten Bereichs aufweisen.

30. Haltevorrichtung nach Anspruch 29, wobei der Schlauchabschnitt einen Milchschlauch und mindestens einen Steuerschlauch aufweist, die so verbunden sind, um das Profil des profilierten Bereichs zu definieren.

31. Haltevorrichtung nach einem der Ansprüche 1 bis 30, die ferner eine Einrichtung zum Ziehen von mit den Melkbechern gekoppelten Schlauchabschnitten in eine Position zum Nachmelken während der zweiten Betriebsphase aufweist.

32. Melkgeschirr mit:
mehreren Melkbechern,
mehreren Verbindungsschläuchen, die mit den Melkbechern verbunden sind und
einer Haltevorrichtung nach einem der Ansprüche 1 bis 31.

33. Melkgeschirr nach Anspruch 32, wobei die Verbindungsschläuche eine milchführende Leitungen, eine Steuerleitung und/oder eine Stimulationsleitung aufweisen.

34. Melkstand mit
einem Träger zum Halten und Führen einer Milchleitung und einer Steuerleitung,
mehreren Melkbechern, die mit der Milchleitung und der Steuerleitung in Fluidverbindung stehen und
einer Haltevorrichtung nach einem der Ansprüche 1 bis 31.

35. Melkstand nach Anspruch 34, wobei die Haltevorrichtung an dem Träger mittels der Befestigungsvorrichtung angebracht ist.

36. Melkstand nach Anspruch 35, wobei die Haltevorrichtung schwenkbar an dem Träger angebracht ist, so dass die Haltevorrichtung zumindest in die Melkposition und eine Reinigungsposition schwenkbar ist.

37. Melkstand nach Anspruch 36, wobei die Haltevorrichtung in eine Desinfektionsposition zur Zwischendesinfektion der Melkbecher schwenkbar ist.

38. Melkstand nach Anspruch 37, der ferner einen Behälter zur Ausführung einer Zwischendesinfektion an der Desinfektionsposition aufweist.

39. Melkstand nach Anspruch 38, wobei der Behälter eine Einrichtung zur Desinfektion eines äußeren Bereichs des Melkbechers aufweist.

40. Melkstand nach Anspruch 35 bis 39" der ferner eine an dem Träger angebrachte Schlauchführung umfasst, wobei die Schlauchführung ausgebildet ist, die Fluidverbindung zwischen den Melkbechern und der Milchleitung in der ersten und der zweiten Betriebsphase herzustellen.

41. Aktuatorvorrichtung zur Erzeugung einer Bewegung eines Melkgeschirrs, mit
einer Halteeinrichtung (651) zur Befestigung der Aktuatorvorrichtung an einer zu dem Melkgeschirr (610) beabstandeten Position, und
einem Aktuatorelement (652), das mit einer flexiblen Komponente (613, 614), die mit dem Melkgeschirr (610) beim Melkvorgang verbunden ist, koppelbar ist, um der flexiblen Komponente (613, 614) eine Bewegung in zumindest einer Richtung so zu verleihen, dass eine Bewegung des Melkgeschirrs (610) während des Melkvorgangs für ein stimulierendes Melken entsteht,
**gekennzeichnet durch** eine Steuereinrichtung (660), die mit dem Aktuatorelement (652) funktionell verbunden und ausgebildet ist, das Aktuatorelement (652) zu einer gesteuerten Bewegung in zumindest einer Richtung so zu veranlassen, dass eine Bewegung des Melkgeschirrs während einer Vorstimulationsphase zur Stimulation am Euter und während des Melkvorgangs für ein stimulierendes Melken entsteht.

42. Aktuatorvorrichtung nach Anspruch 41, wobei die Steuereinrichtung (660) ausgebildet ist, die Intensität und/oder den zeitlichen Ablauf der gesteuerten Bewegung zu bestimmen.

43. Aktuatorvorrichtung nach Anspruch 42, wobei die Steuereinrichtung (660) ferner ausgebildet ist, mit einer Sensoreinrichtung (661, 662, 663, 663a) zu kommunizieren und das Aktuatorelement (652) auf der Grundlage eines Signals der Sensoreinrichtung (661, 662, 663, 663a) zu steuern.

44. Aktuatorvorrichtung nach Anspruch 43, wobei die Sensoreinrichtung (661, 662, 663, 663a) ein für den Status des Melkvorgangs und/oder für den Stimulationszustand eines Tieres repräsentatives Signal erzeugt.

45. Aktuatorvorrichtung nach einem der Ansprüche 41 bis 44, die ferner ausgebildet ist, eine mit dem Melkgeschirr verbundene Pulsatoreinrichtung (620) zu steuern.

46. Aktuatorvorrichtung nach Anspruch 45, wobei die Aktuatorvorrichtung ausgebildet ist, eine Einfaltungsfrequenz und/oder eine Druckbeaufschlagung eines von der Pulsatoreinrichtung pneumatisch angesteuerten Zitzengummis zumindest während einer Stimulationsperiode der Pulsatoreinrichtung zu steuern.

47. Aktuatorvorrichtung nach einem der Ansprüche 41 bis 46, wobei die Aktuatorvorrichtung ferner ausgebildet ist, eine Neigung von Längsachsen von Melkbechern des Melkgeschirrs in Bezug zu dem Tiereuter während des Melkvorgangs zu ändern.

48. Aktuatorvorrichtung nach einem der Ansprüche 41 bis 47, wobei das Aktuatorelement ausgebildet ist, der flexiblen Komponente eine Bewegung in zumindest einer zweiten, zur ersten Richtung linear unabhängigen Richtung zu verleihen.

49. Aktuatorvorrichtung nach Anspruch 42, wobei die Steuereinrichtung (660) ferner ausgebildet ist, die durch das Aktuatorelement am Melkgeschirr bewirkte Auslenkung für zumindest zwei unterschiedliche Bewegungen des Aktuatorelements abzuschätzen und die Ansteuerung des Aktuatorelements auf der Grundlage der Abschätzung auszuführen.

50. Aktuatorvorrichtung nach einem der Ansprüche 41 bis 49, wobei das Aktuatorelement mit einem flexiblen Milchschlauch und/oder mit einem flexiblen Pulsatorschlauch, der mit dem Melkgeschirr in Fluidverbindung steht, zur Bewegungserzeugung koppelbar ist.

51. Aktuatorvorrichtung nach einem der Ansprüche 41 bis 49, wobei das Aktuatorelement mit einer Einrichtung (670) koppelbar ist, die zur Einstellung der Orientierung der Melkbecher relativ zum Euter vorgesehen ist.

52. Aktuatorvorrichtung nach einem der Ansprüche 41 bis 51, wobei das Aktuatorelement eine pneumatische Antriebseinrichtung umfasst.

53. Aktuatorvorrichtung nach einem der Ansprüche 41 bis 51, wobei das Aktuatorelement eine elektrische Antriebseinrichtung umfasst.

54. Aktuatorvorrichtung nach Anspruch 53, die ferner eine pneumatisch angetriebene Wandlereinrichtung aufweist, um elektrische Energie zur Versorgung einer oder mehrerer Komponenten bereitzustellen.

55. Melkanlage zum maschinellen Melken von Tieren, die umfasst:
eine Vakuumanlage (630), die ausgebildet ist, ein zum Absaugen von Milch erforderliches Vakuum bereitzustellen,
ein Melkgeschirr (610) mit mehreren Melkbechern, die mit der Vakuumanlage (630) über zumindest abschnittsweise flexible erste Leitungen (613) in Fluidverbindung stehen,
eine Pulsatoreinrichtung (620), die mit den Melkbechern über eine zweite, abschnittsweise flexible Leitung in Fluidverbindung (614) steht und so ausgebildet ist, um ein Einfalten eines Zitzengummis in jedem der Melkbecher in gesteuerter Weise zu bewirken und
eine Aktuatorvorrichtung (650) nach einem der Ansprüche 41 bis 54.

56. Melkanlage nach Anspruch 55, wobei die flexible Komponente einen Teil der ersten und/oder der zweiten Leitung umfasst.

57. Melkanlage nach Anspruch 55 oder 56, die ferner eine Zugvorrichtung zur Einstellung eines Neigungswinkels der Melkbecher am Euter umfasst.

58. Melkanlage nach Anspruch 57, wobei die flexible Komponente ein Teil der Zugvorrichtung ist.

59. Melkanlage nach einem der Ansprüche 55 bis 58, die ferner eine Steuerung aufweist, die zumindest funktionell mit der Aktuatorvorrichtung verbunden und ausgebildet, diese zu einer gesteuerten Bewegung des Aktuatorelements zu veranlassen.

60. Melkanlage nach Anspruch 59, wobei die Steuerung funktionell mit der Pulsatoreinrichtung verbunden und ausgebildet ist, den Betrieb der Pulsatoreinrichtung zu steuern.

61. Melkanlage nach einem der Ansprüche 55 bis 60, die ferner eine Sensoreinrichtung zur Erfassung einer für den Melkvorgang relevanten Eigenschaft umfasst.

62. Melkanlage nach Anspruch 59 und 60, wobei die Steuerung ausgebildet ist, ein Sensorsignal der Sensoreinrichtung zu empfangen und die Aktuatorvorrichtung auf der Grundlage des Sensorsignals zu steuern.

63. Melkanlage nach Anspruch 62, wobei die Sensoreinrichtung und die Steuerung ausgebildet sind, drahtlos zu kommunizieren.

64. Melkanlage nach einem der Ansprüche 61 bis 63, wobei die Sensoreinrichtung ausgebildet ist, ein für den Status des Melkvorgangs und/oder den Stimulationszustand des Tieres repräsentatives Sensorsignal zu erzeugen.

65. Melkanlage nach Anspruch 61, wobei die Sensoreinrichtung ausgebildet ist, eine Bewegung des Melkgeschirrs oder eines Teils des Melkgeschirrs zu erfassen.

66. Melkanlage nach Anspruch 65, wobei die Steuerung ausgebildet ist, das Aktuatorelement auf der Grundlage der erfassten Bewegung zu steuern.

67. Melkanlage nach einem der Ansprüche 59 bis 66, wobei die Steuerung ferner ausgebildet ist, die durch das Aktuatorelement am Melkgeschirr bewirkte Auslenkung für zumindest zwei unterschiedliche Bewegungen des Aktuatorelements abzuschätzen und die Ansteuerung des Aktuatorelements auf der Grundlage der Abschätzung auszuführen.

## Claims

1. Retaining device (200) for the manual removal of teat cups with
a fastening device (201) for fixing the retaining device at a predetermined milking position,
wherein the retaining device (200) further is formed to hold each of a plurality of teat cups (210) in a fixed position relative to the others during a first operational phase, and to allow manual access to each of the retained teat cups (210) in such a way that, during a second operational phase, each teat cup (210) is manually movable relative to the retaining device (200) and at least one additional teat cup (210) in more than one direction,
**characterized in that** the retaining device further has a stimulation mechanism (340) that is formed to incite a rhythmic movement which acts mechanically on at least one milk hose (217) and / or control hose (221) that connects a teat cup (210) to the retaining device during the second operational phase.

2. Retaining device according to Claim 1, wherein the retaining device has a container (203) in which the teat cups are introduced at least partially during the first operational phase.

3. Retaining device according to Claim 1 or 2, which further comprises a guide device (204) for guiding milk hoses (202) during the movement of the teat cups (210) relative to the retaining device.

4. Retaining device according to one of the Claims 1 to 3, which further comprises a controllable vacuum switching mechanism (205) that is formed to apply an operating vacuum to each of the teat cups in a controllable manner.

5. Retaining device according to Claim 4, wherein the vacuum switching mechanism (205) has a control switch (207) for each of the teat cups.

6. Retaining device according to Claim 4, wherein the vacuum switching mechanism (205) has an operating mechanism that switches the operating vacuum depending on the distance of the teat cup from the retaining device.

7. Retaining device according to one of the Claims 4 to 6, wherein the vacuum switching mechanism comprises a turn-off device (220) that is formed to decouple a teat cup from the operating vacuum individually and automatically in the case of a loss of the milking vacuum in that teat cup.

8. Retaining device according to one of the Claims 1 to 7, which further has several connectors that make possible a connection to one or more milk hoses that connect the retaining device to a milking installation and to a vacuum line of the milking installation.

9. Retaining device according to Claim 8, which further has hose sections, wherein one end of each is connected to a connector and wherein the other end of each can be connected to a teat cup.

10. Retaining device according to Claim 9, wherein each hose section has at least one control hose section, which can be connected on one end to a teat cup and on the other end to a corresponding control connector.

11. Retaining device according to one of the Claims 1 to 10, wherein the fastening device has a holder for attachment to a milking parlour support.

12. Retaining device according to one of the Claims 1 to 11, wherein the fastening device can be adjusted in such a way that the longitudinal axes of the milking cups are arranged virtually horizontally.

13. Retaining device according to one of the Claims 1 to 12, wherein the fastening device is formed in such a way that the retaining device can be moved from a first position, which corresponds to the first operational phase, into at least a second position for cleaning at least an area of the teat cups.

14. Retaining device according to one of the Claims 1 to 13, wherein at least an area of the retaining device is manufactured of plastic, said area holding the teat cups.

15. Retaining device according to one of the Claims 1 to 14, which further has one or more cleaning connectors.

16. Retaining device according to Claim 8, wherein at least one connector is provided with a controllable valve.

17. Retaining device according to Claim 16, wherein the controllable valve can switch the vacuum to one of the teat cups.

18. Retaining device according to Claim 16 or 17, wherein the controllable valve can be operated electrically.

19. Retaining device according to one of the Claims 1 to 18, which further has a cleaning device that can be moved from a first cleaning position in the first operational phase, in which the head piece of the teat cup liner can be exposed to the action of a cleaning fluid, into a second position for releasing the teat cups for the second operational phase.

20. Retaining device according to Claim 19, wherein the cleaning device is provided with a sealing element for sealing the teat cup liner interior in the cleaning position.

21. Retaining device according to Claim 20, wherein the sealing element has at least one nozzle element for the influx of a cleaning fluid into the teat cup liner interior.

22. Retaining device according to one of the Claims 1 to 21, which further has a power supply unit.

23. Retaining device according to Claim 22, wherein the power supply unit is pneumatically driven.

24. Retaining device according to one of the Claims 1 to 23, which further has a sensor element that is formed to register the milk flow at least from one teat cup.

25. Retaining device according to one of the Claims 1 to 24, which further comprises a quality sensor element that is formed to register at least one characteristic identifying the milk quality.

26. Retaining device according to Claim 1, wherein the stimulation mechanism has a drive element and an actuator element coupled thereto, wherein the actuator element is in contact with the at least one milk hose and / or control hose during the milking.

27. Retaining device according to Claim 26 or 1, wherein the stimulation mechanism comprises a control mechanism that is formed to control the frequency of the mechanical action and / or the strength of the mechanical action.

28. Retaining device according to one of the Claims 1 to 27, which further respectively comprises a holding area for holding a teat cup, wherein each holding area comprises a fixative device that is formed to establish the orientation of the teat cup that is manually introduced into the holding area to a pre-defined orientation.

29. Retaining device according to one of the Claims 1 to 28, wherein hose sections are provided for connection to the teat cups, said hose sections having at least one profiled area and a corresponding guide section for guiding the profiled area.

30. Retaining device according to Claim 29, wherein the hose section has a milk hose and at least one control hose that are connected in such a way as to define the profile of the profiled area.

31. Retaining device according to one of the Claims 1 to 30, which further has a device for pulling hose sections coupled to the teat cups into a position for postmilking during the second operational phase.

32. Teat cup cluster with
a plurality of teat cups,
a plurality of connection hoses that are connected to the teat cups and
a retaining device according to one of the Claims 1 to 31.

33. Teat cup cluster according to Claim 32, wherein the connection hoses have a milk-conducting line, a control line and / or a stimulation line.

34. Milking parlour with
a support for holding and guiding a milk line and a control line,
a plurality of teat cups that are connected to the milk line and the control line in a fluid connection and
a retaining device according to one of the Claims 1 to 31.

35. Milking parlour according to Claim 34, wherein the retaining device is mounted on the support by means of the fastening device.

36. Milking parlour according to Claim 35, wherein the retaining device is mounted on the support in such a way that it can pivot, so that the retaining device can be pivoted at least into the milking position and a cleaning position.

37. Milking parlour according to Claim 36, wherein the retaining device can be pivoted into a disinfection position for intermediate disinfection of the teat cups.

38. Milking parlour according to Claim 37, which further has a container for performing an intermediate disinfection in the disinfection position.

39. Milking parlour according to Claim 38, wherein the container has a device for disinfection of an outer area of the teat cup.

40. Milking parlour according to Claim 35 to 39, which further comprises a hose guide mounted on the support, wherein the hose guide is formed to produce the fluid connection between the teat cups and the milk line in the first and second operational phases.

41. Actuator for inciting a movement of a teat cup cluster, with
a retaining device (651) for fastening the actuator to a position at a distance from the teat cup cluster (610), and
an actuator element (652) that can be coupled to a flexible component (613, 614) that is connected to the teat cup cluster (610) during the milking process, in order to give the flexible component (613, 614) a movement in at least one direction in such a way that a movement of the teat cup cluster (610) results during the milking process for a stimulating milking,
**characterized by** a controller (660) that is functionally connected to the actuator element (652) and that is formed to induce a controlled movement in the actuator element (652) in at least one direction to effect a movement of the teat cup cluster during a pre-stimulation phase for stimulation on the udder and during the milking process for stimulating milking.

42. Actuator according to Claim 41, wherein the controller (660) is formed to determine the intensity and / or the chronological sequence of the controlled movement.

43. Actuator according to Claim 42, wherein the controller (660) is further formed to communicate with a sensor device (661, 662, 663, 663a) and to control the actuator element (652) on the basis of a signal of the sensor device (661, 662, 663, 663a).

44. Actuator according to Claim 43, wherein the sensor device (661, 662, 663, 663a) generates a signal representative for the status of the milking process and / or for the stimulation status of an animal.

45. Actuator according to one of the Claims 41 to 44, which further is formed to control a pulsator (620) connected to the teat cup cluster.

46. Actuator according to Claim 45, wherein the actuator is formed to control a folding frequency and / or pressurization of a teat cup liner pneumatically activated by the pulsator, at least during a stimulation period of the pulsator.

47. Actuator according to one of the Claims 41 to 46, wherein the actuator is further formed to change a tilt of the longitudinal axes of teat cups of the teat cup cluster with respect to the animal udder during the milking process.

48. Actuator according to one of the Claims 41 to 47, wherein the actuator element is formed to give the flexible component a movement in at least a second direction, which is linearly independent of the first direction.

49. Actuator according to Claim 42, wherein the controller (660) further is formed to estimate the deflection effected on the teat cup cluster by the actuator element for at least two different movements of the actuator element and to perform the activation of the actuator element on the basis of the estimate.

50. Actuator according to one of the Claims 41 to 49, wherein the actuator element can be coupled to a flexible milk hose and / or to a flexible pulsator hose, which is in a fluid connection with the teat cup cluster, in order to incite a movement.

51. Actuator according to one of the Claims 41 to 49, wherein the actuator element can be coupled to a device (670) that is provided for adjusting the orientation of the teat cups relative to the udder.

52. Actuator according to one of the Claims 41 to 51, wherein the actuator element comprises a pneumatic driving device.

53. Actuator according to one of the Claims 41 to 51, wherein the actuator element comprises an electric driving device.

54. Actuator according to Claim 53, which further has a pneumatically driven converter in order to provide electrical energy for supplying one or more components.

55. Milking installation for milking animals by machine, said milking installation comprising
a vacuum system (630) that is formed to provide a vacuum needed for suctioning the milk,
a teat cup cluster (610) with a plurality of teat cups in fluid connection with the vacuum system (630) via first lines (613) that are flexible at least in sections,
a pulsator (620) that is in fluid connection (614) with the teat cups via a second line that is flexible in sections and that is formed in such a way as to effect a folding of a teat cup liner in each of the teat cups in a controlled manner and
an actuator (650) according to one of the Claims 41 to 54.

56. Milking installation according to Claim 55, wherein the flexible component comprises a part of the first and / or second line.

57. Milking installation according to Claim 55 or 56, which further comprises a pulling device for adjusting an angle of tilt of the teat cups on the udder.

58. Milking installation according to Claim 57, wherein the flexible component is a part of the pulling device.

59. Milking installation according to one of the Claims 55 to 58, which further has a control device that is at least functionally connected to the actuator and that is formed to bring about in this actuator a controlled movement of the actuator element.

60. Milking installation according to Claim 59, wherein the control device is functionally connected to the pulsator and is formed to control the operation of the pulsator.

61. Milking installation according to one of the Claims 55 to 60, which further comprises a sensor device for registering a characteristic that is relevant for the milking process.

62. Milking installation according to Claims 59 and 60, wherein the control device is formed to receive a sensor signal of the sensor device and to control the actuator on the basis of the sensor signal.

63. Milking installation according to Claim 62, wherein the sensor device and the control device are formed to communicate wirelessly.

64. Milking installation according to one of the Claims 61 to 63, wherein the sensor device is formed to generate a sensor signal that is representative for the status of the milking process and / or the stimulation status of the animal.

65. Milking installation according to Claim 61, wherein the sensor device is formed to register a movement of the teat cup cluster or a part of the teat cup cluster.

66. Milking installation according to Claim 65, wherein the control device is formed to control the actuator element on the basis of the registered movement.

67. Milking installation according to one of the Claims 59 to 66, wherein the control device is further formed to estimate the deflection effected on the teat cup cluster by the actuator element for at least two different movements of the actuator element and to perform the activation of the actuator element on the basis of the estimate.

## Revendications

1. Dispositif de support de maintien (200) pour le retrait individuel de gobelets-trayeurs, qui comprend un dispositif de fixation (201) pour fixer le dispositif de support de maintien au niveau d'une position de traite prévue,
le dispositif de support de maintien (200) étant par ailleurs conçu pour, pendant une première phase de fonctionnement, maintenir chacun de plusieurs gobelets-trayeurs (210) dans une position relative fixée par rapport aux autres, et garantir un accès manuel à chaque gobelet-trayeur (210) maintenu de manière telle, que pendant une deuxième phase de fonctionnement, chaque gobelet-trayeur (210) puisse être déplacé manuellement dans plusieurs directions, par rapport au dispositif de support de maintien (200) et à au moins un autre gobelet-trayeur (210),
**caractérisé en ce que** le dispositif de support de maintien comporte, par ailleurs, un système de stimulation (340) conçu pour engendrer un mouvement rythmique agissant mécaniquement sur au moins un tuyau de lait (217) et/ou un tuyau de commande (221), qui relie un gobelet-trayeur (210) au dispositif de support de maintien pendant la deuxième phase de fonctionnement.

2. Dispositif de support de maintien selon la revendication 1, dans lequel le dispositif de support de maintien comprend un récipient (203) à l'intérieur duquel sont logés au moins partiellement les gobelets-trayeurs pendant la première phase de fonctionnement.

3. Dispositif de support de maintien selon la revendication 1 ou la revendication 2, comprenant, par ailleurs, un dispositif de guidage (204) pour guider des tuyaux de lait (202) lors du déplacement des gobelets-trayeurs (210) par rapport au dispositif de support de maintien.

4. Dispositif de support de maintien selon l'une des revendications 1 à 3, comprenant, par ailleurs, un dispositif de commutation de vide (205) conçu pour appliquer, de manière contrôlée, un vide de fonctionnement à chacun des gobelets-trayeurs.

5. Dispositif de support de maintien selon la revendication 4, dans lequel le dispositif de commutation de vide (205) présente un commutateur d'actionnement (207) pour chacun des gobelets-trayeurs.

6. Dispositif de support de maintien selon la revendication 4, dans lequel le dispositif de commutation de vide (205) commute le vide de fonctionnement en fonction de la distance du gobelet-trayeur au dispositif de support de maintien.

7. Dispositif de support de maintien selon l'une des revendications 4 à 6, dans lequel le dispositif de commutation de vide comprend un dispositif d'arrêt (220) conçu pour, en cas de perte du vide de traite dans un gobelet-trayeur, découpler celui-ci, individuellement et automatiquement, du vide de fonctionnement.

8. Dispositif de support de maintien selon l'une des revendications 1 à 7, comprenant, par ailleurs, plusieurs raccords de branchement permettant une liaison avec un ou plusieurs tuyaux de lait, qui relient le dispositif de support de maintien à une installation de traite, et avec une conduite de vide de l'installation de traite.

9. Dispositif de support de maintien selon la revendication 8, comprenant, par ailleurs, des tronçons de tuyaux, dont une extrémité est reliée respectivement à un raccord, et dont l'autre extrémité peut être reliée respectivement à un gobelet-trayeur.

10. Dispositif de support de maintien selon la revendication 9, dans lequel chaque tronçon de tuyau présente au moins un tronçon de tuyau de commande, qui, à une extrémité, peut être relié à un gobelet-trayeur, et qui, avec son autre extrémité, est relié à un raccord de commande correspondant.

11. Dispositif de support de maintien selon l'une des revendications 1 à 10, dans lequel le dispositif de fixation présente un élément de maintien destiné à être fixé à un support d'appareillage de traite.

12. Dispositif de support de maintien selon l'une des revendications 1 à 11, dans lequel le dispositif de fixation peut être réglé de manière telle, que les axes longitudinaux des gobelets-trayeurs soient orientés sensiblement à l'horizontale.

13. Dispositif de support de maintien selon l'une des revendications 1 à 12, dans lequel le dispositif de fixation est conçu de manière à ce que le dispositif de support de maintien puisse être transféré d'une première position, qui correspond à la première phase de fonctionnement, au moins à une deuxième position pour le nettoyage d'au moins une zone des gobelets-trayeurs.

14. Dispositif de support de maintien selon l'une des revendications 1 à 13, dans lequel au moins une zone du dispositif de support de maintien, qui accueille les gobelets-trayeurs, est fabriquée en matière plastique.

15. Dispositif de support de maintien selon l'une des revendications 1 à 14, comprenant, par ailleurs, un ou plusieurs raccords de nettoyage.

16. Dispositif de support de maintien selon la revendication 8, dans lequel au moins un raccord est pourvu d'une vanne pouvant être commandée.

17. Dispositif de support de maintien selon la revendication 16, dans lequel la vanne pouvant être commandée peut commuter le vide vers un des gobelets-trayeurs.

18. Dispositif de support de maintien selon la revendication 16 ou la revendication 17, dans lequel la vanne pouvant être commandée peut être actionnée par voie électrique.

19. Dispositif de support de maintien selon l'une des revendications 1 à 18, comprenant, par ailleurs, un dispositif de nettoyage, qui peut être déplacé d'une première position de nettoyage dans la première phase de fonctionnement, dans laquelle la partie de tête du caoutchouc de trayon peut être soumise à l'action d'un fluide de nettoyage, à une deuxième position pour libérer le gobelet-trayeur pour la deuxième phase de fonctionnement.

20. Dispositif de support de maintien selon la revendication 19, dans lequel le dispositif de nettoyage est pourvu d'un élément d'étanchéité destiné à assurer
une étanchéité de l'intérieur du caoutchouc de trayon dans la position de nettoyage.

21. Dispositif de support de maintien selon la revendication 20, dans lequel l'élément d'étanchéité présente au moins un élément de buse pour introduire un fluide de nettoyage à l'intérieur du caoutchouc de trayon.

22. Dispositif de support de maintien selon l'une des revendications 1 à 21, comprenant, par ailleurs, une unité d'alimentation en courant.

23. Dispositif de support de maintien selon la revendication 22, dans lequel l'unité d'alimentation en courant est entraînée par voie pneumatique.

24. Dispositif de support de maintien selon l'une des revendications 1 à 23, comprenant, par ailleurs, un élément de capteur conçu pour relever le débit de lait dans au moins un gobelet-trayeur.

25. Dispositif de support de maintien selon l'une des revendications 1 à 24, comprenant, par ailleurs, un capteur de qualité, qui est conçu pour relever au moins une propriété caractérisant la qualité du lait.

26. Dispositif de support de maintien selon la revendication 1, dans lequel le dispositif de stimulation comprend un élément d'entraînement et un élément d'actionneur couplé avec celui-ci, l'élément d'actionneur étant en contact avec ledit au moins un tuyau de lait et/ou tuyau de commande, pendant la traite.

27. Dispositif de support de maintien selon la revendication 26 ou la revendication 1, dans lequel le dispositif de stimulation comprend un dispositif de commande, qui est conçu pour commander une fréquence de l'action mécanique et/ou une intensité de l'action mécanique.

28. Dispositif de support de maintien selon l'une des revendications 1 à 27, présentant, par ailleurs, une zone de maintien destinée à accueillir un gobelet-trayeur, chaque zone de maintien comprenant un dispositif de fixation, qui est conçu pour fixer l'orientation du gobelet-trayeur introduit manuellement dans la zone de maintien, sur une orientation prédéfinie.

29. Dispositif de support de maintien selon l'une des revendications 1 à 28, dans lequel sont prévus des tronçons de tuyau, qui sont destinés à la liaison avec les gobelets-trayeurs, et présentent au moins une zone profilée et un tronçon de guidage correspondant pour guider la zone profilée.

30. Dispositif de support de maintien selon la revendication 29, dans lequel le tronçon de tuyau comprend un tuyau de lait et au moins un tuyau de commande, qui sont reliés de manière à définir le profil de la zone profilée.

31. Dispositif de support de maintien selon l'une des revendications 1 à 30, comprenant, par ailleurs, un dispositif pour tirer des tronçons de tuyau couplés aux gobelets-trayeurs, dans une position pour la post-traite pendant la deuxième phase de fonctionnement.

32. Appareillage de traite comprenant :
plusieurs gobelets-trayeurs,
plusieurs tuyaux de liaison, qui sont reliés aux gobelets-trayeurs, et
un dispositif de support de maintien selon l'une des revendications 1 à 31.

33. Appareillage de traite selon la revendication 32, dans lequel les tuyaux de liaison comprennent une conduite véhiculant le lait, une conduite de commande et/ou une conduite de stimulation.

34. Poste de traite comprenant
un support pour maintenir et guider une conduite de lait et une conduite de commande,
plusieurs gobelets-trayeurs, qui sont en liaison d'écoulement de fluide avec la conduite de lait et/ou la conduite de commande, et
un dispositif de support de maintien selon l'une des revendications 1 à 31.

35. Poste de traite selon la revendication 34, dans lequel le dispositif de support de maintien est placé sur le support au moyen du dispositif de fixation.

36. Poste de traite selon la revendication 35, dans lequel le dispositif de support de maintien est placé de manière pivotante sur le support, de façon à ce que le dispositif de support de maintien puisse pivoter au moins dans la position de traite et une position de nettoyage.

37. Poste de traite selon la revendication 36, dans lequel il est possible de faire pivoter le dispositif de support de maintien dans une position de désinfection pour la désinfection intermédiaire des gobelets-trayeurs.

38. Poste de traite selon la revendication 37, comprenant, par ailleurs, un récipient pour effectuer une désinfection intermédiaire, dans la position de désinfection.

39. Poste de traite selon la revendication 38, dans lequel le récipient présente un dispositif pour la désinfection d'une zone extérieure du gobelet-trayeur.

40. Poste de traite selon les revendications 35 à 39, comprenant, par ailleurs, un guide de tuyau placé sur le support, le guide de tuyau étant conçu pour établir la liaison fluidique entre les gobelets-trayeurs et la conduite de lait dans la première et la deuxième phase de fonctionnement.

41. Dispositif actionneur pour produire un mouvement d'un appareillage de traite, comprenant un dispositif de maintien (651) pour fixer le dispositif actionneur au niveau d'une position située à distance de l'appareillage de traite (610), et
un élément d'actionneur (652), qui peut être couplé à un composant flexible (613, 614) relié à l'appareillage de traite (610) lors de l'opération de traite, pour conférer au composant flexible (613, 614) un mouvement dans au moins une direction, de manière à ce qu'il se produise un mouvement de l'appareillage de traite (610) pendant l'opération de traite, en vue d'une traite stimulante,
**caractérisé par** un dispositif de commande (660), qui est relié fonctionnellement à l'élément d'actionneur (652) et est conçu pour conférer à l'élément d'actionneur (652) un mouvement commandé dans au moins une direction, de manière à ce qu'il se produise un mouvement de l'appareillage de traite pendant une phase de préstimulation pour la stimulation de la mamelle, et pendant l'opération de traite pour assurer une traite stimulante.

42. Dispositif actionneur selon la revendication 41, dans lequel le dispositif de commande (660) est conçu pour définir l'intensité et/ou la loi de variation du mouvement commandé.

43. Dispositif actionneur selon la revendication 42, dans lequel le dispositif de commande (660) est par ailleurs conçu pour communiquer avec un dispositif de capteur (661, 662, 663, 663a), et pour commander l'élément d'actionneur (652) sur la base d'un signal du dispositif de capteur (661, 662, 663, 663a).

44. Dispositif actionneur selon la revendication 43, dans lequel le dispositif de capteur (661, 662, 663, 663a) produit un signal représentatif d'un statut de l'opération de traite et/ou d'un état de stimulation d'un animal.

45. Dispositif actionneur selon l'une des revendications 41 à 44, qui par ailleurs est conçu pour commander un dispositif de pulsateur (620) relié à l'appareillage de traite.

46. Dispositif actionneur selon la revendication 45, dans lequel le dispositif actionneur est conçu pour commander une fréquence de plissement et/ou une sollicitation de pression d'un caoutchouc de trayon commandé par voie pneumatique par le dispositif pulsateur pendant une période de stimulation du dispositif pulsateur.

47. Dispositif actionneur selon l'une des revendications 41 à 46, dans lequel le dispositif actionneur est par ailleurs conçu pour faire varier une inclinaison d'axes longitudinaux de gobelets-trayeurs de l'appareillage de traite, par rapport à la mamelle de l'animal, pendant l'opération de traite.

48. Dispositif actionneur selon l'une des revendications 41 à 47, dans lequel l'élément d'actionneur est conçu pour conférer au composant flexible, un mouvement dans au moins une deuxième direction linéairement indépendante de la première direction.

49. Dispositif actionneur selon la revendication 42, dans lequel le dispositif de commande (660) est par ailleurs conçu pour estimer la déviation produite sur l'appareillage de traite par l'élément d'actionneur, pour au moins deux mouvements différents de l'élément d'actionneur, et exécuter la commande de l'élément d'actionneur sur la base de l'estimation.

50. Dispositif actionneur selon l'une des revendications 41 à 49, dans lequel l'élément d'actionneur peut être couplé à un tuyau de lait flexible et/ou un tuyau de pulsateur flexible, qui est en liaison fluidique avec l'appareillage de traite, pour produire le mouvement.

51. Dispositif actionneur selon l'une des revendications 41 à 49, dans lequel l'élément d'actionneur peut être couplé au dispositif (670), qui est prévu pour régler l'orientation des gobelets-trayeurs par rapport à la mamelle.

52. Dispositif actionneur selon l'une des revendications 41 à 51, dans lequel l'élément d'actionneur comprend un dispositif d'entraînement pneumatique.

53. Dispositif actionneur selon l'une des revendications 41 à 51, dans lequel l'élément d'actionneur comprend un dispositif d'entraînement électrique.

54. Dispositif actionneur selon la revendication 53, comportant, par ailleurs, un dispositif convertisseur entraîné par voie pneumatique, pour fournir de l'énergie électrique destinée à alimenter un ou plusieurs composants.

55. Installation de traite pour la traite d'animaux, à la machine, comprenant
une installation à vide (630), qui est conçue pour fournir un vide nécessaire à l'aspiration de lait,
un appareillage de traite (610) avec plusieurs gobelets-trayeurs, qui sont en liaison fluidique avec l'installation à vide (630) par l'intermédiaire de première conduites (613) au moins en partie flexibles, un dispositif pulsateur (620), qui est en liaison fluidique (614) avec les gobelets-trayeurs par l'intermédiaire d'une deuxième conduite en partie flexible, et qui est conçu pour produire de manière commandée, un plissement d'un caoutchouc de trayon dans chacun des gobelets-trayeurs, et
un dispositif actionneur (650) selon l'une des revendications 41 à 54.

56. Installation de traite selon la revendication 55, dans laquelle le composant flexible comprend une partie de la première et/ou deuxième conduite.

57. Installation de traite selon la revendication 55 ou la revendication 56, comprenant, par ailleurs, un dispositif de traction pour régler un angle d'inclinaison des gobelets-trayeurs sur la mamelle.

58. Installation de traite selon la revendication 57, dans laquelle le composant flexible est une partie du dispositif de traction.

59. Installation de traite selon l'une des revendications 55 à 58, présentant, par ailleurs, une commande, qui est reliée, au moins sur le plan fonctionnel, au dispositif actionneur, et est conçue pour que celui-ci produise un mouvement commandé de l'élément d'actionneur.

60. Installation de traite selon la revendication 59, dans laquelle la commande est reliée sur le plan fonctionnel au dispositif pulsateur, et est conçue pour commander le dispositif pulsateur.

61. Installation de traite selon l'une des revendications 55 à 60, comportant, par ailleurs, un dispositif de capteur pour relever une propriété importante pour l'opération de traite.

62. Installation de traite selon la revendication 59 et la revendication 60, dans laquelle la commande est conçue pour recevoir un signal de capteur du dispositif de capteur, et commander le dispositif actionneur sur la base du signal de capteur.

63. Installation de traite selon la revendication 62, dans laquelle le dispositif de capteur et la commande sont conçus pour communiquer sans fil.

64. Installation de traite selon l'une des revendications 61 à 63, dans laquelle le dispositif de capteur est conçu pour produire un signal de capteur représentatif du statut de l'opération de traite et/ou de l'état de stimulation de l'animal.

65. Installation de traite selon la revendication 61, dans laquelle le dispositif de capteur est conçu pour relever le mouvement de l'appareillage de traite ou d'une partie de l'appareillage de traite.

66. Installation de traite selon la revendication 65, dans laquelle la commande est conçue pour commander l'élément d'actionneur sur la base du mouvement relevé.

67. Installation de traite selon l'une des revendications 59 à 66, dans laquelle la commande est par ailleurs conçue pour estimer la déviation produite sur l'appareillage de traite par l'élément d'actionneur pour au moins deux mouvements différents de l'élément d'actionneur, et exécuter la commande de l'élément d'actionneur sur la base de l'estimation.
